# EUROPÄISCHE PATENTSCHRIFT

(11) **EP 3 102 040 B1**
(45) Veröffentlichungstag und Bekanntmachung des Hinweises auf die Patenterteilung: **20.06.2018**
(21) Anmeldenummer: 14703584.4
(22) Anmeldetag: 07.02.2014
(51) Int. Cl.: A22C 21/00, A22C 17/00

(54) **POSITIONIERVORRICHTUNG ZUM POSITIONIEREN VON IN FÖRDERRICHTUNG LÄNGS EINER FÖRDERSTRECKE IN REIHE GEFÖRDERTEN GEFLÜGELBEINEN SOWIE DAS POSITIONIEREN UMFASSENDES VERFAHREN ZUM ENTFERNEN DES OBERSCHENKELFLEISCHES VON GEFLÜGELBEINEN**
POSITIONING DEVICE FOR POSITIONING POULTRY LEGS CONVEYED IN A ROW ALONG A CONVEYING TRACK AS WELL AS METHOD COMPRISING POSITIONING FOR REMOVING THIGH MEAT FROM POULTRY LEGS
DISPOSITIF DE POSITIONNEMENT POUR POSITIONER DES JARRETS DE VOLAILLES TRANSPORTÉS EN RANGÉES LE LONG D'UNE LIGNE DE TRANSPORT AINSI QUE PROCÉDÉ POUR ENLEVER LA VIANDE DES CUISSES DE VOLAILLES

(43) Veröffentlichungstag der Anmeldung: 14.12.2016
(73) Patentinhaber: Linco Food Systems A/S, 8380 Trige (DK)
(72) Erfinder: EBBERS, Hermanus Godefridus Wilhelmus, 6986 BH Angerlo (NL); GIEZEN, Wilhelmus Henricus Berendina, 7031 WR Wehl (NL)
(74) Vertreter: Stork Bamberger Patentanwälte PartmbB
(86) Internationale Anmeldenummer: PCT/EP2014/052465
(87) Internationale Veröffentlichungsnummer: WO 2015/117668

(56) Entgegenhaltungen:
- EP-A1- 2 329 721
- DE-T2- 60 013 263
- DE-T2- 69 100 902
- US-A- 5 947 811
- US-A1- 2005 059 334

## Beschreibung

Die Erfindung betrifft eine Positioniervorrichtung zum Positionieren von in Förderrichtung längs einer Förderstrecke in Reihe geförderten Geflügelbeinen in eine Bearbeitungsposition, die eine Referenzposition zum Bearbeiten der Geflügelbeine darstellt, wobei Unterschenkel und Oberschenkel der Geflügelbeine über das Kniegelenk aneinander angelenkt sind und wobei die eine axiale Beinseite, an der sich die Kniescheibe befindet, die Beinvorderseite sowie die andere axiale Beinseite, an der sich die Kniekehle befindet, die Beinrückseite bestimmen, umfassend
- eine Fördereinrichtung mit entlang der Förderstrecke in Förderrichtung bewegbaren Trägern, die die Geflügelbeine mit jeweils in einen zugehörigen genannten Träger einfassendem Fußgelenkkopf längs der gesamten Fördertrecke der Positioniervorrichtung fördern und halten, wobei die Träger die Geflügelbeine beim Einfördern in der Positioniereinrichtung hängend halten,
- eine Beugeeinrichtung mit einem sich in einem Beuge-Förderabschnitt der Förderstrecke erstreckenden stationären Positionierelement und einer Reihe von mitlaufenden Positionierelementen, die jeweils in Zuordnung zu einem zugehörigen genannten Träger in Förderrichtung mitlaufen, wobei jeweils ein mitlaufendes Positionierelement mit dem stationären Positionierelement ein Paar von Positionierelementen bildet, von denen ein erstes Positionierelement zum Eingriff in die Kniekehle des Geflügelbeins sowie ein zweites Positionierelement zur Anlage an den Oberschenkel an der Beinvorderseite eingerichtet ist, und wobei in dem Beuge-Förderabschnitt der Förderstrecke das erste Positionierelement und das zweite Positionierelement im Paar zwischen sich einen dem Kniekehlenwinkel entsprechenden Beugewinkel erzeugen und bestimmen, der sich unter Hebung des Geflügelbeins aus hängender Ausgangsposition bis zum Erreichen der genannten Referenzposition verringert und entsprechende Beugepositionen des Geflügelbeins zur Folge hat, wobei die Träger der Fördereinrichtung derart eingerichtet sind, dass der Fußgelenkkopf in dem Träger entsprechend dem Heben des Geflügelbeins ausweichen kann und
- einen sich in der Förderstrecke erstreckenden Referenz-Halterand, an dem das Geflügelbein im Bereich des Kniegelenks in definierter Hebeposition, nämlich in der Referenzposition, gehalten wird.

Die Erfindung bezieht sich auch auf ein Verfahren zum während Förderung durchgeführten Entfernen des Oberschenkelfleisches von in Reihe in Förderrichtung geförderten Geflügelbeinen, wobei das Geflügelbein mittels einer Positioniervorrichtung durch definiertes Heben und Halten des Kniegelenks positioniert wird, im Bereich des Knies des Geflügelbeins Schnitte in das Geflügelbeinfleisch bis zum Knochen angebracht werden und das Oberschenkelfleisch vom definiert positionierten Kniegelenk zum Hüftgelenkknochen geschoben wird. Unterschenkel und Oberschenkel der Geflügelbeine sind jeweils über das Kniegelenk aneinander angelenkt, und die Geflügelbeine befinden sich mit in eine Trageinrichtung einfassenden Fußgelenkköpfen in hängender Anordnung.

Die Geflügelbeine, die positioniert werden, sind Beine, die von einem Geflügelkörper getrennt sind und aus Oberschenkel und Unterschenkel bestehen.

Aus EP 0 858 740 A1 ist eine Einrichtung zum Bearbeiten der Beine von Geflügel bekannt. Die Einrichtung ist mit einer gattungsgemäßen Positioniervorrichtung ausgestattet. Dort weist die Beugeeinrichtung eine umlaufende Stützscheibe mit Rezessen auf, in denen jeweils ein Geflügelbein im Bereich des Kniegelenks zu liegen kommt, und zwar zwischen einer gestellfesten (stationären) Führungsschiene und einer mit den Rezessen mitlaufenden Stützkante, die in jedem Rezess ein Positionierelement bildet. Die bekannte Einrichtung erfordert eine Rund- oder Karussellführung, wobei die Stützscheibe an ihrer Unterseite mit Ausrichtmitteln zum im Wesentlichen radialen Ausrichten der Oberschenkel in Bezug auf die Umlaufachse der Stützscheibe versehen ist. Mit der Führungsschiene wird der Beugewinkel des Geflügelbeins verringert, und dieses wird zum Positionieren der Stützkante in der Kniekehle angehoben. Zwar wird eine Schnittstelle am Kniegelenk des Geflügelbeins unabhängig von gewissen Längenmaß-Abweichungen der Unterschenkel erreicht. Das Schneiden kann jedoch nur mit einem einzigen Schneidmittel durchgeführt werden, wobei das Geflügelbein in die besondere Beugeposition mit der radialen Ausrichtung des Oberschenkels zu bringen ist.

Aus DE 691 00 902 T2 ist eine Vorrichtung mit geradliniger Förderstrecke zum Abschneiden der Oberschenkel von Geflügelbeinen bekannt. Die Geflügelbeine werden an ihren Fußwurzelgelenken aufgehängt und mittels einer Beinpositioniereinrichtung positioniert. Diese weist in gerader Förderrichtung mitlaufende Positionierblöcke auf, die in dem Bereich, in dem das Geflügelbein geschnitten wird, mit einer Führungsleiste zusammenwirken, die ihrerseits mit einer Trenneinrichtung zum Ausführen des Trennschnitts zusammenwirkt.

DE 600 13 263 T2 (Fig. 21 bis 28) offenbart eine Einrichtung, in der Geflügelbeine jeweils in einem Raum zwischen einem Trageblock und einem Schneideblock positioniert werden, wobei eine Tragekante unterhalb der Kniescheibe angeordnet ist und sich aufwärts bewegt, um das Kniegelenk in Bezug auf eine an jedem Schneideblock angeordnete Schneideklinge zu positionieren. Anstelle des Knie-Trageblocks kann zum Positionieren der Kniescheibe ein Arm vorgesehen werden.

Aus DE 691 00 902 (Fig. 4 bis 12) ist ein gattungsgemäßes Verfahren bekannt. Ein zylindrisches Steuerelement einer Karusselleinrichtung weist mehrere Schabeeinheiten auf. In jeder Schabeeinheit, die mit zwei Schabeelementen ausgestattet ist, wird Oberschenkelfleisch von dem Oberschenkelknochen eines Geflügelbeins abgeschabt, das mit seinem Fußwurzelgelenk an einer drehenden Aufhängescheibe aufgehängt ist. In der Schabeeinheit wird das Geflügelbein mit etwa rechtem Winkel gebeugt und durch eines der Schabeelemente in eine reproduzierbare Position gebracht, in der an der Rückseite des Knies ein Einschnitt angebracht wird. In einer durch die beiden Schabeelemente gestreckten Position des Kniegelenks erfolgt ein Einschnitt unterhalb der Kniescheibe. Mit Hilfe eines Positionieranschlags wird der Einschnitt immer an der gleichen Stelle des Kniegelenks durchgeführt, und es wird verhindert, dass die Kniescheibe durchschnitten wird. Die beiden Schabeelemente der Schabeeinheit werden zum Hüftgelenk hin bewegt, um das Oberschenkelfleisch abzuschaben. In der Schabeeinheit kann dann das Oberschenkelfleisch von dem Oberschenkelknochen weggeschnitten werden. Die genannten Schnitte werden in jeder Schabeeinheit durchgeführt, während das Geflügelbein in seiner Hängeposition mittels der Aufhängescheibe gefördert wird. Die Beine, von denen das Oberschenkelfleisch entfernt worden ist, werden in eine gerade Förderstrecke überführt, an der der Oberschenkelknochen abgeschnitten wird.

Den bekannten Vorrichtungen ist es eigen, dass das Geflügelbein während des Schneidens im Bereich des Kniegelenks in einer zugeordneten bestimmten Beugeposition zu positionieren und zu halten ist, wobei die beim Schneiden durch definiertes Beugen des Geflügelbeins bewirkte Positionierung beim Beenden eines Schnitts am Kniegelenk entfällt. Eine solche Positionierung wird als besonders geeignet für eine Rundführung oder einen Karusselltransport angesehen. Rundführungen oder Karusselleinrichtungen beeinträchtigen die Fördergeschwindigkeit, und eine Anpassung von Förderwegen an gewünschte Raumbereiche ist erschwert. Durchführung und Aufrechterhaltung der Positionierung des Geflügelbein-Kniegelenks mit jeweils der Stelle des Schneidmittels zugeordneter bestimmter Beugeposition schränken Bearbeitungsmöglichkeiten infolge des Schnitts, der längs der Förderstrecke an der Stelle der zugehörigen Beugung mit besonders angepasstem Schnittwerkzeug anzubringen ist, erheblich ein. Schnittanbringung und/oder Schnittvielfalt sind beeinträchtigt.

Der Erfindung liegen die Ziele zugrunde, die Bearbeitung und Positionierung der in Reihe geförderten Geflügelbeine entlang raumsparender Förderstrecke zu verbessern. Insbesondere zum Entfernen des Oberschenkelfleisches von Geflügelbeinen soll mit den erfindungsgemäßen Positionierungsmaßnahmen die optimale Anbringung von Schnitten erreicht werden. Es soll Unterschieden in den Längenmaßen der Geflügelbeine begegnet werden. In jedem Fall sollen Schnitte und weitere Bearbeitung an voneinander getrennten gewünschten Bearbeitungsstellen besonders sicher und präzise ausführbar sein. Insbesondere sollen die Schnitte an von dynamischer Positionierung getrennter Stelle durchgeführt werden. Vorteile einer Führung in gerader Förderlinie sollen hinsichtlich hoher Geschwindigkeit und raumsparender Eingliederung in eine Bearbeitungsanlage in besonderem Maß nutzbar sein.

Die erfindungsgemäßen Ziele werden in Verbindung mit den Merkmalen der eingangs genannten Positioniervorrichtung dadurch erreicht,
- dass die Positioniervorrichtung eine dem Beuge-Förderabschnitt in Förderrichtung nachgeordnete stationäre Halte- und Führungseinrichtung aufweist, die jedes Geflügelbein während des Förderns längs eines Bearbeitungs-Förderabschnitts der Förderstrecke in Referenzposition zum Bearbeiten bereithält, wobei die Halte- und Führungseinrichtung über die Länge des Bearbeitungs-Förderabschnitts mit einem sich in der Förderstrecke erstreckenden stationären Halte- und Führungsspalt mit stationären Spalträndern ausgestattet ist, die das Geflügelbein im Bereich des Kniegelenks zum Halten und Führen in Referenzposition aufnehmen und wobei der genannte Referenz-Halterand wenigstens teilweise einen genannten stationären Spaltrand bildet,
- dass der Beuge-Förderabschnitt und der Bearbeitungsförderabschnitt geradlinig sind,
- dass die genannte Beugeeinrichtung eine Einfädeleinrichtung zum Einfädeln des Geflügelbeins im Bereich des Kniegelenks in den Halte- und Führungsspalt bildet, wobei die mitlaufenden Positionierelemente durch angetriebene Andrückelemente gebildet sind und eine Antriebs- und Steuereinrichtung eingerichtet ist, die jedes angetriebene Andrückelement in Förderrichtung sowie zum Beugen zweidimensional in Heberichtung und quer dazu in eine Richtung bewegt, in der das angetriebene Andrückelement das Geflügelbein an einer der genannten axialen Beinseiten untergreift.

Die Ziele werden in Verbindung mit den Merkmalen des eingangs genannten Verfahrens dadurch erreicht,
- dass die Geflügelbeine während sämtlicher zur Positionierung und Bearbeitung automatisch durchgeführter Manipulationen in gerader Förderrichtung gefördert werden, wobei die Geflügelbeine mit entlang gerader Förderstrecke bewegbaren Trägern gefördert werden, in die die Geflügelbeine jeweils zugehörig zu einem Träger mit ihrem Fußgelenkkopf während der gesamten Förderung einfassen,
- dass die Geflügelbeine mit jeweils gerader Förderstrecke in zwei Förderabschnitten gefördert werden, nämlich in einem ersten Förderabschnitt (Lateral-Förderabschnitt), in dem die Geflügelbeine mit vorauslaufender lateraler Beinseite quer gefördert werden, sowie nach Drehung jedes Trägers um eine Vertikalachse in einem zweiten Förderabschnitt (Axial-Förderabschnitt), in dem die Geflügelbeine mit vorauslaufender axialer Beinseite, an der sich die Kniescheibe befindet, axial, nämlich in einer den Achsen des Oberschenkelknochens und des Unterschenkelknochens gemeinsamen Axialebene, mit Kniescheibe voraus gefördert werden,
- dass in dem ersten Förderabschnitt die dort quergeförderten Geflügelbeine zum Positionieren in einen ersten, sich in Förderrichtung geradlinig erstreckenden stationären Halte- und Führungsspalt (lateraler Halte- und Führungsspalt), der erste stationäre Spaltränder (Lateral-Spaltränder) aufweist, eingeführt werden, wobei das quergeförderte Geflügelbein an definierter Stelle axialer Kniegelenk-Knochenerhebung mittels dieser in den ersten stationären Halte- und Führungsspalt gehängt und dadurch zum Durchführen von Bearbeitungen längs der ersten (lateralen) Spalt-Fördertrecke des ersten Halte- und Führungsspalts in definierte Referenzposition gehoben und unter gleitender Anlage in Höhe des Kniegelenks an den Spalträndern in Förderrichtung bewegt wird, wobei der Fußgelenkkopf zum Heben des Geflügelbeins in dem ihn haltenden Träger ausweichlich gehalten wird,
- dass an der ersten Spalt-Förderstrecke des ersten stationären Halte- und Führungsspalts an der Beinvorderseite in Höhe des Kniegelenks ein erster Beinvorderseiten-Schnitt mit Schnitttiefe bis zum Knorpel (erster Beinvorderseiten-Schnitt) und an der Beinrückseite in Höhe des Kniegelenks ein Beinrückseiten-Schnitt mit Schnitttiefe bis zum Kniegelenkknochen angebracht werden,
- dass in dem zweiten Förderabschnitt die dort axial geförderten Geflügelbeine zum Positionieren in einen zweiten, sich in Förderrichtung geradlinig erstreckenden stationären Halte- und Führungsspalt (axialer Halte- und Führungsspalt), der zweite stationäre Spaltränder (Axial-Spaltränder) aufweist, eingeführt werden, wobei das axial geförderter Geflügelbein an definierter Stelle lateraler Kniegelenk-Knochenerhebung mittels dieser in den zweiten stationären Halte- und Führungsspalt gehängt und dadurch zum Durchführen von Bearbeitungen längs der zweiten Spalt-Förderstrecke des zweiten Halte- und Führungsspalts in eine definierte Referenzposition gehoben und unter gleitender Anlage in Höhe des Kniegelenks an den Spalträndern in Förderrichtung bewegt wird, wobei der Fußgelenkkopf zum Heben des Geflügelbeins in dem ihn haltenden Träger ausweichlich gehalten wird, und
- dass an der zweiten Spalt-Förderstrecke des zweiten stationären Halte- und Führungsspalts ein Paar erster Lateralschnitte an den lateralen Beinseiten des Geflügelbeins in Höhe des Kniegelenks mit Schnitttiefe bis zum Knochenknorpel und anschließend ein Paar zweiter Lateralschnitte an den lateralen Beinseiten des Geflügelbeins unterhalb des Kniegelenks mit Schnitttiefe bis zum Oberschenkelknochen angebracht werden, und dass das Oberschenkelfleisch auf den Hüftgelenkknochen am proximalen Ende des Oberschenkelknochens geschoben wird.

Mit den erfindungsgemäßen Maßnahmen erreicht man eine Reihe von Vorteilen.

In dem Beuge-Förderabschnitt wird das Geflügelbein gefördert und am Knie gebeugt. In jedem Fall ist die erfindungsgemäß dem Beuge-Förderabschnitt nachgeordnete stationäre Halte- und Führungseinrichtung längs geradliniger Förderstrecke durch den stationären Halte- und Führungsspalt gebildet. Es ist gewährleistet, dass das Geflügelbein längs der Förderstrecke vor, an und nach einer bzw. jeder Bearbeitungsstelle die Referenzposition einnimmt. Entlang der Gleitstrecke des Halte- und Führungsspalts erfolgt eine statische (aufrechterhaltene), mit wenigstens einer Bezugsposition eingerichtete Positionierung des Kniegelenks im Unterschied zu der dynamischen (sich verändernden, flüchtigen) Positionierung des Kniegelenks längs des Beuge-Förderabschnitts. Die Referenzpositionierung ist unabhängig von einer Bearbeitungsstelle, z. B. dem Anbringungsort eines Schnittwerkzeugs, und von der Ausrichtung des Geflügelbeins. Das heißt, dass sich das Geflügelbein zum Beispiel in einer weitgehend gestreckten oder weniger gestreckten oder gebeugten Haltung befinden kann, während es mit dem Kniegelenk definiert in dem Halte- und Führungsspalt hängt. Der Halte- und Führungsspalt erstreckt sich zumindest im Wesentlichen geradlinig und kann durch einen Spalt oder Schlitz vorteilhaft zwischen zwei Führungsplatten, Führungsleisten oder dergleichen gebildet sein.

Die Spaltbreite ist längs der Förderstecke zumindest im Wesentlichen gleich. Darunter wird verstanden, dass sie wenigstens in einem Abschnitt gleich ist oder auch wenigstens in einem Abschnitt, insbesondere einem Eingangsabschnitt, in Förderrichtung in bestimmtem geringem Maß konvergiert. In jedem Fall ist die Spaltbreite über die gesamte Spaltlänge derart eingerichtet, dass das Kniegelenk in der Referenzpositionierung in den Halte- und Führungsspalt eingehängt und dabei an wenigstens einem Spaltrand definiert aufgehängt ist.

Die Aufhängung des nicht-entfleischten Geflügelbeins mittels des Halte- und Führungsspalts ist zudem derart, dass das Geflügelbein an dem Halte- und Führungsspalt bzw. an seinen Rändern entlang gleitet. Insbesondere kann der Halte- und Führungsspalt horizontal, nämlich in Bezug auf die Reihe der fördernden Träger bzw. in Bezug auf die axiale Dimension der Geflügelbeine in ein und derselben Höhe angeordnet sein. Der Halte- und Führungsspalt kann in Bezug auf die axiale Höhe der Geflügelbeine auch, bezogen auf die Geflügelbeinlänge, in geringem Maß, schräg und/oder gekrümmt verlaufen. Unter der genannten geradlinigen Erstreckung wird verstanden, dass die Geflügelgelenke in jedem Fall in einer vertikalen Ebene gefördert bleiben, die Spaltführung also, wenn überhaupt, geringfügig nach unten oder oben, jedoch nicht seitlich bzw. horizontal quer zu diesen Richtungen verläuft.

In jedem Fall wird das Geflügelbein während seines Transports bis zum Ende des Halte- und Führungsspalts in definierter Referenzhöhe gehalten. Die oder jede definierte Höhe des Kniegelenks längs des Halte- und Führungsspalts, die insbesondere in ein und derselben Höhe beibehalten wird, stellt eine bzw. jede definierte Referenzposition des Geflügelbeins an wenigstens einer und insbesondere einer Reihe von Bearbeitungsstellen längs des Halte- und Führungsspalts sicher. Der Halte- und Führungsspalt bzw. seine Ränder bilden als solche keinen Bestandteil eines Bearbeitungswerkzeugs bzw. sind frei von Bearbeitungselementen. Der geradlinige Gleit-Transport des Geflügelbeins in der Referenzposition, die während des Gleitens in dem Halte- und Führungsspalt eingerichtet und beibehalten wird, gewährleistet relativ große Fördergeschwindigkeit, wobei das Geflügelbein während des Transports vorteilhaft an mehreren längs des Halte- und Führungsspalts in Reihe angeordneten Bearbeitungsstellen präzise bearbeitet werden kann. Dabei bleibt die Referenzpositionierung unabhängig davon erhalten, ob das Geflügelbein oberhalb und/ oder unterhalb des Halte- und Führungsspalts zusätzlich durch es fördernde, ausrichtende oder beugende Ausricht-, Anlage- oder Stützelemente, nämlich zum Beispiel durch in Förderrichtung mitlaufende Schiebeelemente und/oder Gegenanlageelemente, die stromabwärts bzw. stromaufwärts an dem Geflügelbein angreifen, beaufschlagt wird. In jedem Fall erfolgt die Förderung während des gradlinigen Referenz-Transports mittels der entsprechend geradlinig bewegten Träger der Fördereinrichtung.

Die Aufhängung des Geflügelbeins an dem zugeordneten Träger ist derart, dass der Fußgelenkkopf (Fußwurzelgelenk) entlang des Halte- und Führungsspalts zum Transport zwar mit dem Träger in Eingriff bleibt, jedoch in Höhen- oder Axialrichtung des Geflügelbeins zum Ausweichen im Wesentlichen frei bewegbar gehalten ist. Insbesondere können die Träger durch nach oben offene Bügel gebildet sein, in denen der Fußgelenkkopf gefangen ist und beim Heben des Geflügelbeins gehoben wird.

Mittels des Halte- und Führungsspalts wird erreicht, dass die Geflügelbeine während sämtlicher zur Bearbeitung automatisch durchgeführter Manipulationen in gerader Förderrichtung gefördert werden. Jede Manipulation kann zum gleichartigen Bearbeiten sämtlicher Geflügelbeine jeweils mit ein und derselben, einer Manipulation zugeordneten Manipulationseinrichtung durchgeführt werden.

Die dem Halte- und Führungsspalt vorgeordnete, in Bezug auf diesen an der Förderstrecke stromaufwärts angeordnete Beugeeinrichtung fädelt das Kniegelenk des Geflügelbeins im Bereich des Kniegelenks in den Halte- und Führungsspalt ein. Der Vorgang des Einfädelns ist mit besonderen erfindungsgemäßen Maßnahmen des Beugens des Geflügelbeins verbunden. Wesentlich sind einerseits die besonderen mitlaufenden diskret ausgebildeten Positionierelemente. Es handelt sich um angetriebene Andrückelemente, nämlich um solche, die mit wenigstens einem aktiven, selbstständigen Antrieb jeweils in mehrere Richtungen bewegbar sind. Die genannte zweidimensionale Bewegung in Heberichtung sowie quer zur Heberichtung findet in der Axialebene statt, in der sich die Achsen des Oberschenkelknochens und des Unterschenkelknochens eines Geflügelbeins jedenfalls im Wesentlichen erstrecken. Im Übrigen wird das angetriebene Andrückelement in Förderrichtung mitlaufend bewegt. Durch die Hebe-/Querbewegungen in der Axialebene wird das Geflügelbein beim Positionier-Beugen, das während des Transports in Förderrichtung stattfindet, insbesondere zunehmend versetzt bzw. verlagert.

Die das mitlaufende Positionierelement bewegende und führende Antriebs- und Steuereinrichtung kann durch eine Einrichtung gebildet sein, die das mitlaufende Positionierelement z. B. mittels eines Strangantriebs, z. B. mit Riemen, Band oder Kette oder mittels dergleichen Einrichtung in Verbindung mit einer Steuerkurve bewegt, die z. B. mit einer mechanischen Führungs- und Nockeneinrichtung erzeugt wird. Wesentlich ist, dass das mitlaufende Positionierlement mit Bewegungskomponenten, die vorzugsweise zunehmend, also progressiv sind, in der genannten Axialebene der Geflügelbeinknochen bewegt wird.

Das mitlaufende Positionierelement arbeitet, ein Funktionspaar bildend, im Zusammenspiel mit dem stationären Positionierelement. Letzteres erstreckt sich in dem Beuge-Förderabschnitt längs der Förderstrecke. Das stationäre Positionierelement ist im Unterschied zu jedem mitlaufenden Positionierelement an einen festen Ort oder Ortsbereich gebunden. Es ist zum Beispiel gestellfest mit einem Rahmen oder Gestell der Positioniervorrichtung. Unter stationärer Anordnung wird aber auch verstanden, dass das stationäre Positionierelement in einem Ortsbereich, insoweit ortsbezogen darauf eingeschränkt, mit Richtungen in der genannten Axialebene der Geflügelbeinknochen bewegbar sein kann, z. B. federelastisch oder insoweit auch mit einem Antrieb, und zwar stets derart, dass das Beugen des Geflügelbeins zwischen einerseits dem stationären Positionierelement und andererseits jedem mitlaufenden Positionierelement bewirkt wird. Zum Beispiel ist es denkbar, dass sich das stationäre Positionierelement in einem Abschnitt des Beuge-Förderabschnitts quer zur Förderrichtung hebt. Auch eine Bewegung des stationären Elements gegen die Bewegung, die das mitlaufende Positionierelement zum Beugen ausübt, kommt in Betracht. Das stationäre Positionierelement kann gegebenenfalls gegen insbesondere federelastische Kraft ausweichen, solange die Beugewirkung im Zusammenspiel mit dem in der Axialebene der Geflügelbeinknochen zweidimensional bewegten und mitlaufenden Positionierelement erzielt wird.

Erfindungsgemäß ist die Beugeeinrichtung derart eingerichtet, dass jedes in Reihe geförderte Geflügelbein mit seinem Kniegelenk positionsgenau am Anfang des Halte- und Führungsspalts in diesen eingehängt und infolgedessen dort eingefädelt wird. Die Breite des Halte- und Führungsspalts kann auf die Kniegelenk-Knochenerhebung einerseits eines axial geförderten und andererseits eines lateral geförderten Geflügelbeins angepasst werden. Die Axialförderung und die Lateralförderung werden nachstehend noch näher erläutert. Das erfindungsgemäße Einfädeln in definierter Höhenposition gelingt dadurch, dass das Geflügelbein - ausgehend von einer mehr oder weniger gestreckten Ausrichtung, die durch Aufhängung mittels des Fußgelenks bewirkt ist - in eine zunehmend gebeugte Position gebracht wird. Die Beugung geht einher mit einem Anheben des Geflügelbeins, wobei sich das Kniegelenk während des Anhebens in geringerer Höhe als der Halte- und Führungsspalt befindet. Die Lateralförderung der Geflügelbeine erfolgt insbesondere entlang des genannten konvergierenden Halte- und Führungsspalts. Hingegen ist der Halte- und Führungsspalt mit gleicher Breite zur Axialförderung besonders geeignet.

Die Geflügelbeine sind zum Bearbeiten frei von besonderen Ausrichtungserfordernissen zugänglich und sie können mit gewünschten unterschiedlichen Ausrichtungen positioniert werden. Vorteilhaft kann die Bearbeitung an einer Mehrzahl von Bearbeitungsstellen erfolgen, die sich nach dem Bearbeitungserfordernis einrichten und einstellen lassen.

Gemäß der verfahrenstechnischen Gestaltung der Erfindung werden die Geflügelbeine entlang zweier geradliniger, vorzugsweise gemeinsam in gerader Förderlinie ausgerichteter Förderstrecken in den beiden zugehörigen Förderabschnitten gefördert, um im Ergebnis Oberschenkelfleisch abzutrennen. Der Oberschenkel eines Geflügelbeins wird entbeint, um Filetfleisch zu gewinnen. Erfindungsgemäß ist wesentlich, dass die zum Schieben bzw. Abschaben des Oberschenkelfleisches vorbereitenden Schnitte auf die beiden Förderabschnitte aufgeteilt werden. Dies gelingt dadurch, dass die Geflügelbeine in jedem der beiden Förderabschnitte in einen zugehörigen stationären Halte- und Führungsspalt eingeführt und gehängt werden, wobei sie auf diese Weise jeweils in Referenzposition gehalten und entlang des zugehörigen Halte- und Führungsspalts gleitend bewegt werden.

Entlang des ersten Förderabschnitts (Lateral-Förderabschnitt) wird das Geflügelbein quer gefördert. Die Querförderung (auch Lateralförderung genannt) ist allgemein dadurch bestimmt, dass das Geflügelbein während der Förderung mit einer seiner lateralen Seiten vorausläuft bzw. vorausgerichtet ist. Durch diese Ausrichtung und mittels der durch die zugehörige Lateral-Spaltführung eingerichteten Referenzposition für das Kniegelenk lassen sich an der Beinvorderseite in Höhe des Kniegelenks ein erster Beinvorderseiten-Schnitt mit Schnitttiefe bis zum Knorpel und, vorzugsweise in Förderrichtung zum Spaltende hin versetzt, ein Beinrückseiten-Schnitt an der Beinrückseite in Höhe des Kniegelenks mit Schnitttiefe bis zum Kniegelenkknochen definiert anbringen.

Entlang des anschließenden zweiten Förderabschnitts (Axial-Förderabschnitt) wird das Geflügelbein mit Kniescheibe voraus axial gefördert. Unter der Axialförderung ist zu verstehen, dass das Geflügelbein mit vorauslaufender bzw. vorausgerichteter axialer Beinseite, an der sich die Kniescheibe befindet, gefördert wird. Dabei liegen die Beinachsen, nämlich die Achse des Beinoberschenkels und die Achse des Beinunterschenkels zumindest im Wesentlichen in der gemeinsamen Axialebene, die sich in diesem Fall in Förderrichtung erstreckt, und zwar bei jedem Beugewinkel zwischen dem Oberschenkel und dem Unterschenkel. Wesentlich ist, dass durch diese Ausrichtung und die Spaltführung in der zweiten Spalt-Förderstrecke (axiale Spalt-Förderstrecke) eine mit der bereits beschriebenen ersten Referenzposition gleichartige zweite Referenzposition eingerichtet ist. In dieser zweiten Referenzposition werden, in positionsgenauer Ergänzung und Abstimmung zu den Schnitten an der ersten Spalt-Förderstrecke, an den beiden lateralen Beinseiten des Geflügelbeins in Höhe des Kniegelenks ein Paar erster Lateralschnitte mit Schnitttiefe bis zum Knochenknorpel und anschließend ein Paar zweiter Lateralschnitte unterhalb des Kniegelenks mit Schnitttiefe bis zum Oberschenkelknochen angebracht. Mit der Referenzpositionierung des geförderten Geflügelbeins in der ersten Position (Lateralförder-Position) und anschließend in der zweiten Position (Axialförder-Position) und mit der Folge der genannten zugeordneten Schnitte lassen sich die Schnitte mit Position, Schnitttiefe und damit in Anpassung aufeinander im Bereich des Kniegelenks zum Abziehen des Oberschenkelfleisches präzise anbringen. Dieses Verfahren, das vorzugsweise in durchgehend gerader Bearbeitungslinie ausgeführt wird, erlaubt einen Förderbetrieb mit relativ hoher Geschwindigkeit. Eine Anlage, in der die genannten Förderabschnitte verwendet werden, lässt sich ohne Verwendung von Kurvenbahnen, Kreisbahnen oder Karussell-Stationen auslegen.

Eine Gestaltung besteht darin, dass die Antriebs- und Steuereinrichtung der mitlaufenden Positionierelemente derart eingerichtet ist, dass nach dem Einfädeln des Geflügelbeins in den Halte- und Führungsspalt des Bearbeitungs-Förderabschnitts das mitlaufende Positionierelement zum Beseitigen der Einfädelungs-Beugeposition oder auch zum Bewirken einer verringerten Beugeposition in Richtung gegen die Förderrichtung zurückbleibt oder von der Förderstrecke weg beweg wird. Insbesondere gelangt es vollständig außer Eingriff mit dem Geflügelbein. Das Geflügelbein kann allein durch das in den Halte- und Führungsspalt eingehängte Kniegelenk gehalten sein, ohne dass am Unterschenkel oder Oberschenkel Elemente zum Ausrichten oder Stützen des Geflügelbeins angreifen, wobei jedoch der Fußgelenkkopf stets in dem zugehörigen Träger zum Fördern des Geflügelbeins eingreift. Gemäß einer Gestaltung ist die Einrichtung derart, dass das mitlaufende Positionierelement am Anfang des Halte- und Führungsspalts aus der Position, die die Beugeposition zum Einfädeln bewirkt, herausbewegt wird.

Zum Bewegen jedes Positionierelements kann die Antriebs- und Steuereinrichtung der mitlaufenden Positionierelemente so eingerichtet sein, dass wenigstens eine Schwenkbewegung und wenigstens eine lineare Bewegung erzeugt werden, wobei sich die Bewegungen zum Bewegen des mitlaufenden Positionierelements überlagern. Insbesondere wird in Förderrichtung eine gerade lineare Bewegung zum Mitlaufen in Förderrichtung erzeugt. Eine Schwenkbewegung und/oder Kurvenbewegung, die gegebenenfalls linear sein kann, wird zweckmäßig zum zweidimensionalen, vorzugsweise progressiven Heben und Verlagern des Positionierelements in der genannten Axialebene erzeugt.

Vorteilhaft weist der Bearbeitung-Förderabschnitt der Halte- und Führungseinrichtung wenigstens zwei Bearbeitungsstellen auf. Diese werden bevorzugt an der Förderstrecke einander gegenüberliegend angeordnet. Hinsichtlich zuverlässig präziser, dennoch raumsparender Bearbeitung werden Bearbeitungsvorgänge zum Vermeiden gegenseitiger Beeinflussung insbesondere dadurch voneinander entkoppelt, dass die einander gegenüberliegend angeordneten Bearbeitungsstellen längs der Förderstrecke versetzt angeordnet werden. Vorteilhaft werden im Paar zwei längs der Förderstrecke versetzte Schneidwerkzeuge angeordnet, die an dem Kniegelenk wenigstens an zwei gegenüberliegenden Beinseiten Schnitte ausführen. Solche Schnitte können örtlich und mit Schnitttiefe präzise eingestellt werden, so dass eine Durchtrennung des Geflügelbeins an gewünschter Stelle genau erfolgt oder Knorpel und Knochen unversehrt bleiben.

Innerhalb der Strecke des Halte- und Führungsspalts lässt sich das in Referenzposition gehaltene und gleitend geführte Geflügelbein in Anpassung an Bearbeitungsstellen und/oder Bearbeitungsvorgänge einfach ausrichten. Eine Gestaltung besteht darin, dass die Positioniervorrichtung wenigstens in einem Teil des Bearbeitungs-Förderabschnitts der Halte- und Führungseinrichtung erste mitlaufende Schiebe- oder Stützelemente aufweist, die mit den Trägern mitlaufen und die oberhalb des Halte- und Führungsspalts an den Geflügelbeinen stromaufwärts und/oder stromabwärts zur Anlage kommen. Stattdessen oder zusätzlich besteht eine Gestaltung darin, dass die Positioniervorrichtung in wenigstens einem Teil des Bearbeitungs-Förderabschnitts der Halte- und Führungseinrichtung zweite Schiebe- oder Stützelemente aufweist, die mit den Trägern mitlaufen und unterhalb des Halte und Führungsspalts an den Geflügelbeinen stromaufwärts und/oder stromabwärts zur Anlage kommen.

Eine besondere Gestaltung einer erfindungsgemäßen Positioniervorrichtung (Axial-Positioniervorrichtung) besteht darin,
- dass die Fördereinrichtung derart angeordnet und eingerichtet ist, dass die Träger die Geflügelbeine mit der axialen Beinseite, an der sich die Kniescheibe befindet, mit der Kniescheibe voraus axial, nämlich in einer den Achsen von Oberschenkelknochen und Unterschenkelknochen gemeinsamen Axialebene, fördern,
- dass in jedem Paar der Positionierelemente das genannte erste Positionierelement, das zum Eingriff in die Kniekehle des Geflügelbeins eingerichtet ist, als das mitlaufende Positionierelement der Reihe von mitlaufenden Positionierelementen ausgebildet ist und das genannte zweite Positionierelement, das zur Anlage an den Oberschenkel an der Beinvorderseite eingerichtet ist, durch das stationäre Positionierelement gebildet ist, und
- dass der stationäre Halte- und Führungsspalt der Halte- und Führungseinrichtung durch einen zur Axialförderung eingerichteten Knieknochen-Führungsspalt (Axial-Führungsspalt) mit einer Spaltbreite gebildet ist, die auf Knochenerhebungen des mit der Kniescheibe voraus geförderten Kniegelenks derart angepasst ist, dass das Geflügelbein an definierter Stelle der Kniegelenk-Knochenerhebungen über diese in den Knieknochen-Spalt eingehängt und an dessen Spalträndern in Förderrichtung gleitend geführt wird,
- wobei die im Paar beim Beugen und Heben zusammenwirkenden Positionierelemente zum Einfädeln und zum Einhängen des Geflügelbeins mit Kniescheibe voraus in den Knieknochen-Führungsspalt eingerichtet sind.

Man hat eine Vorrichtung zur Verfügung, in der die axial geförderten Geflügelbeine zur präzisen Bearbeitung insbesondere an ihren Lateralseiten stabilisiert werden.

Eine Ausführung der Axial-Positioniervorrichtung besteht darin, dass das stationäre Positionierungselement so angeordnet und eingerichtet ist, dass am Anfang des Knieknochen-Führungsspalts die Anlage des stationären Positionierungselements an den Oberschenkel des Geflügelbeins entfällt.

Zweckmäßig kann das stationäre Positionierelement durch eine stationäre Rampe der Einfädeleinrichtung der Axial-Positioniervorrichtung mit in Förderrichtung wenigstens teilweise nach oben gerichteter Rampenführung gebildet sein, so dass der Oberschenkel an der Beinvorderseite des Geflügelbeins auf einen tiefen Führungsabschnitt der Rampe aufläuft und diese über einen höher gelegenen Führungsabschnitt verlässt. Eine solche Rampe erlaubt eine besonders einfache Gestaltung, wobei dennoch ein besonders wirksames Zusammenwirken mit jedem mitlaufenden Positionierelement zum Beugen und Einfädeln des Geflügelbeins erreicht ist. Eine bevorzugte Gestaltung besteht darin, dass die Rampenführung in Förderrichtung in wenigstens zwei Führungsabschnitte unterteilt ist, wobei ein oberer oder höchster Führungsabschnitt, der der Halte- und Führungseinrichtung am nächsten liegend ist, im Unterschied zu wenigstens einem vorausgehenden Führungsabschnitt flach verläuft.

Zur Axialförderung des Geflügelbeins in der Axial-Beugeeinrichtung lässt sich jedes mitlaufende Positionierelement in besonderer Weise einrichten. So besteht eine Einrichtung darin, dass jedes mitlaufende Positionierelement durch wenigstens ein in die Kniekehle einfassendes Kniekehlen-Schiebeelement gebildet ist, wobei die Antriebs- und Steuereinrichtung derart eingerichtet ist, dass das Kniekehlen-Schiebeelement nach dem Eintritt des Geflügelbeins in die Positioniervorrichtung in die Kniekehle des Geflügelbeins gedrängt und anschließend in Anpassung auf die durch das stationäre Positionierelement bewirkte Bewegung des Geflügelbeins mit vorzugsweise fortgesetztem Eingriff in die Kniekehle so bewegt und geführt wird, dass das Schiebeelement dem Träger, an dem das Geflügelbein hängt, beim Schieben und zunehmenden Beugen des Geflügelbeins, insbesondere zunehmend, vorauseilt.

Ein besonders ausgeprägter Positioniervorgang lässt sich dadurch erreichen, dass die Antriebs- und Steuereinrichtung derart eingerichtet ist, dass das genannte Kniekehlen-Schiebeelement beim Eintritt des axial geförderten Geflügelbeins in die Axial-Positioniervorrichtung aus einer unterhalb der Kniekehle des Geflügelbeins gelegenen Position in die Kniekehle gelangt. Um die Ausrichtung bzw. Positionierung des Geflügelbeins zum Bearbeiten frei von dem Kniekehlen-Schiebeelement zu erreichen, besteht eine Ausführung der Antrieb- und Steuereinrichtung darin, dass das Kniekehlen-Schiebeelement im Bereich der Halte- und Führungseinrichtung unterhalb des Kniekochen-Führungsspalts zu liegen kommt und dort wenigstens in einem Teilabschnitt gegenüber dem geförderten Geflügelbein zurückbleibt oder von der Förderstrecke weg bewegt wird. Man erreicht einen Versatz derart, dass sich das Kniekehlen-Schiebeelement zum Beseitigen der Beugeposition des axial geförderten Geflügelbeins insbesondere außer Eingriff mit dem Geflügelbein befindet. Der Versatz kann so eingerichtet werden, dass das Geflügelbein in einer gewünschten verringerten Beugeposition mit Stützanlage des Kniekehlen-Schiebeelements an dem Geflügelbein transportiert wird.

Gemäß einer weiteren Gestaltung weist die Beugeeinrichtung der Axial-Positioniervorrichtung wenigstens ein Gegenhalte-Positionierelement auf, das im Bereich eines Abschnitts des zweiten, nämlich des stationären Positionierelements zusammen mit diesem an der Beinvorderseite des axial geförderten Geflügelbeins angreift. Dieses Angreifen erfolgt vorübergehend derart, dass das Geflügelbein im Bereich des Kniegelenks gegen das mitlaufende, in die Kniekehle hinein bewegte erste Positionierelement mit Kraft in Richtung gegen die Förderrichtung angedrückt wird. Vorteilhaft ist das Gegenhalte-Positionierelement im Anfangsbereich des Beuge-Förderabschnitts angeordnet und/oder an einem Abschnitt der Rampe, der steiler als wenigstens ein höherer Abschnitt ist. Eine Ausführung des Gegenhalte-Positionierelements besteht darin, dass es wenigstens ein zurückweichendes Andrückelement aufweist, das beim Andrücken in Förderrichtung gegen insbesondere federelastische Rückstellkraft zurückweicht, z. B. aufschwingt, und dadurch den Durchgang für das Geflügelbein freigibt. Ein solches Andrückelement kann zum Beispiel durch eine Art Schwingtür gebildet sein.

Die Axial-Positioniervorrichtung, die zur genannten Axialförderung der Geflügelbeine entlang geradliniger Förderstrecke eingerichtet ist, lässt sich allgemein besonders vorteilhaft zum Anbringen von Lateralschnitten gestalten. Vorteilhaft kann an dem Bearbeitungs-Förderabschnitt der Halte- und Führungseinrichtung eine erste stationäre Lateral-Schneidestation angeordnet sein, die durch ein erstes Paar von - vorteilhaft längs der Förderstrecke versetzt angeordneten - ersten Lateral-Schneidmitteln gebildet ist, die unterhalb des Halte- und Führungsspalts erste Lateralschnitte an den lateralen Beinseiten des Geflügelbeins in Höhe des Kniegelenks mit Schnitttiefe bis zum Knochenknorpel anbringen.

Die Axial-Positioniervorrichtung, die mit der genannten ersten stationären Lateral-Schneidestation ausgebildet ist, lässt sich vorteilhaft mit weiteren Werkzeugen ausstatten. Vorteilhaft ist ein Werkzeug eingerichtet, mit dem von dem Geflügelbein Oberschenkelfleisch abgezogen bzw. abgeschabt wird. Die Gestaltung ist insbesondere derart, dass an dem Bearbeitungs-Förderabschnitt der Halte- und Führungseinrichtung, der ersten Lateral-Schneidestation nachfolgend, eine Abziehstation zum Abziehen des Oberschenkelfleisches von dem Oberschenkelknochen angeordnet ist, die in Förderrichtung mitlaufende Abziehmittel aufweist. Vorteilhaft umfasst die Abziehstation eine zweite stationäre Lateral-Schneidestation mit einem zweiten Paar von insbesondere längs der Förderstrecke versetzt angeordneten zweiten Lateral-Schneidmitteln. Die zweiten Lateral-Schneidmittel bringen unter dem Halte- und Führungsspalt unterhalb des Kniegelenks zweite Lateralschnitte an den lateralen Beinseiten des Geflügelbeins mit Schnitttiefe bis zum Oberschenkelknochen an, und jedes Abziehmittel schiebt das Oberschenkelfleisch bis zum proximalen Ende des Oberschenkelknochens.

Eine besondere Ausführung der Abziehstation besteht darin, dass das mitlaufende Abziehmittel ein Stütz- und Haltemittel bildet, das stromaufwärts wenigstens einer Bearbeitungsstation, die der Abziehstation (Abziehstelle) vorgeordnet ist, an den Oberschenkel in der Nähe des Kniegelenks gelangt. Vorteilhaft gelangt es vor dem Anbringen der zweiten Lateralschnitte an den Oberschenkel.

Vorteilhaft wird die Positioniervorrichtung so gestaltet, dass der Abziehstation dritte stationäre Schneidmittel nachgeordnet sind, die das Oberschenkelfleisch am proximalen Ende des Oberschenkelknochens von dem Oberschenkelknochen abtrennen.

Die Axial-Positioniervorrichtung mit Abziehstation kann zweckmäßig mit einem der Abziehstation zugeordneten stationären Schneidmittel ausgestattet sein, das vorzugsweise am Ende des Knieknochen-Führungsspalts angeordnet ist und den entfleischten Oberschenkelknochen von dem Unterschenkelfleisch aufweisenden Geflügelbein-Unterschenkel, vorzugsweise mit einem frontal an der Beinvorderseite angesetzten Schnitt, insbesondere durch das Kniegelenk trennt.

Die Axial-Positioniervorrichtung in Ausgestaltungen mit einer oder mehreren Bearbeitungsstationen, insbesondere mit der ersten stationären Lateral-Schneidestation und gegebenenfalls zudem mit der zweiten Lateral-Schneidestation und der Abziehstation, bildet jeweils eine selbstständige Vorrichtung, die als Moduleinheit in eine Bearbeitungslinie eingefügt werden kann.

Eine andere besondere Gestaltung der erfindungsgemäßen Positioniervorrichtung, die anstelle der Axialförderung mit der Lateral-(Quer-)Förderung eingerichtet ist (Lateral-Positioniervorrichtung), besteht darin,
- dass die Fördereinrichtung derart angeordnet und eingerichtet ist, dass die Träger die Geflügelbeine quer fördern, wobei eine der beiden lateralen Beinseiten vorausläuft,
- dass das genannte erste Positionierelement, das zum Eingriff in die Kniekehle eingerichtet ist, das stationäre Positionierelement ist, das durch einen Positionierrand gebildet ist, der vorzugsweise Teil eines sich längs der Förderstrecke der Positioniervorrichtung erstreckenden, vorzugsweise in der Positioniervorrichtung durchgehenden Randes ist,
- dass das genannte zweite Positionierelement, das zur Anlage an den Oberschenkel an der Beinvorderseite eingerichtet ist, als das im Paar mit dem stationären Positionierelement zusammenwirkende mitlaufende Positionierelement der Reihe von mitlaufenden Positionierelementen eingerichtet ist,
- dass der stationäre Halte- und Führungsspalt (lateraler Halte- und Führungsspalt) der Halte- und Führungseinrichtung (laterale Halte- und Führungseinrichtung) durch einen Knieknochen-Führungsspalt (Lateral-Spalt) mit einer Spaltbreite ausgebildet ist, die auf die Knieknochenerhebung des Kniegelenks des quergeförderten Geflügelbeins derart angepasst ist, dass das quergeförderte Geflügelbein an definierter Stelle der Kniegelenk-Knochenerhebung über diese in den Knieknochen-Führungsspalt eingehängt und an dessen Spalträndern in Förderrichtung gleitend geführt wird,
- wobei die im Paar beim Beugen und Heben zusammenwirkenden Positionierelemente zum Einfädeln, nämlich zum Einhängen des quer geförderten Geflügelbeins in den Knieknochen-Führungsspalt eingerichtet sind, wobei
- der genannte Referenz-Halterand entlang der Förderstrecke der Positioniervorrichtung in zwei Referenz-Halterandteile unterteilt ist, nämlich in einen ersten Referenz-Halterandteil, der Bestandteil des genannten Beuge-Förderabschnitts (lateraler Beuge-Förderabschnitt) ist und dort den stationären Positionierrand bildet, sowie einen anschließenden zweiten Referenz-Halterandteil, der den einen Spaltrand des Knieknochen-Führungsspalts der Halte- und Führungseinrichtung bildet.

Mit der erfindungsgemäßen Lateral-Positioniervorrichtung in der Gestaltung mit der Querförderung der Geflügelbeine erreicht man, dass das Geflügelbein insbesondere an seinen Axialseiten, nämlich an der Knievorderseite und der Knierückseite in präzise Bearbeitungspositionen für insbesondere mehrere Bearbeitungsmanipulationen gebracht wird. Wesentlich ist wieder, dass in dem Beuge-Förderabschnitt eine dynamische Positionierung des Geflügelbeins durch einen besonders ausgeprägten und gezielt gesteuerten Beugevorgang erreicht wird und entlang des nachgeordneten stationären Halte- und Führungsspalts eine Referenz-Positionierung eingerichtet ist. Die Referenz-Positionierung kann in wenigstens einem Gleitabschnitt des Halte- und Führungsspalts unabhängig von der Beuge-/Einfädelpositionierung aufrechterhalten werden. Durch Beseitigen der Einfädelungs-Beugeposition oder mit verringerter Beugeposition lassen sich unterschiedliche und gewünschte Transport- bzw. Bearbeitungspositionen einrichten.

Eine bevorzugte Gestaltung der Positioniervorrichtung mit Querförderung besteht darin, dass die Antriebs- und Steuereinrichtung des mitlaufenden Positionierelements so eingerichtet ist, dass es in wenigstens einem Abschnitt, insbesondere dem Endabschnitt, des Bearbeitungs-Förderabschnitts der Halte- und Führungseinrichtung zum Beseitigen der Beugeposition des Geflügelbeins außer Eingriff mit dem Geflügelbein gelangt.

Eine besondere Ausführung der Beugeeinrichtung der Lateral-Positioniervorrichtung erreicht man mit einer in Förderrichtung mitlaufenden Andrück- und Stützhalterung. Die Gestaltung ist derart, dass die Lateral-Positioniervorrichtung mit mitlaufenden lateralen Schiebeelementen, die den mitlaufenden Positionierelementen zugeordnet sind, ausgestattet und so eingerichtet ist, dass jeweils im Paar das mitlaufende Positionierelement und das mitlaufende laterale Schiebeelement die mitlaufende Andrück- und Stützhalterung bilden, wobei das mitlaufende Schiebeelement im Bereich des Geflügelbein-Oberschenkels an der in Förderrichtung stromaufwärts gelegenen, also der Halte- und Führungseinrichtung abgewandten lateralen Beinseite in Schiebeanlage angreift und das mitlaufende Positionierelement quer zur Förderrichtung die Bewegungen zum Heben und zunehmenden Beugen des Geflügelbeins ausführt. Die Andrück- und Stützhalterung kann so eingerichtet sein, dass das mitlaufende laterale Schiebeelement die Schiebe- bzw. Stützanlage an der genannten lateralen Beinseite des Geflügelbeins wenigstens entlang einer Teilstrecke des Halte- und Führungsspalts beibehält und insbesondere erst am Ende des Halte- und Führungsspalts verlässt.

Eine weitere Gestaltung besteht darin, dass das mitlaufende Positionierelement insbesondere einer Gruppe der mitlaufenden Positionierelemente der Lateral-Positioniervorrichtung als armartiges Element mit zwei Armteilen ausgebildet ist, nämlich mit einem ersten Armteil, der im Wesentlichen an der Beinvorderseite unter Bewegung quer zur Förderrichtung angreift, sowie einem zweiten Armteil, der im Wesentlichen an in Förderrichtung stromabwärts gelegener, also der Halte- und Führungseinrichtung zugewandter lateraler Beinseite an dem Oberschenkel zu dessen Stützung anliegt. Diese Gestaltung des mitlaufenden Positionierelements der Lateral-Positioniervorrichtung wird vorteilhaft zur Anlage an den Oberschenkel an der Vorderseite von linken Geflügelbeinen vorgesehen, die mit lateraler Bein-Außenseite voraus gefördert werden. Für beide Geflügelbeine und insbesondere nur für das mit der Bein-Innenseite voraus geförderte rechte Geflügelbein kann das mitlaufende Positionierelement ein Anlageelement sein, das nur eine Anlagefläche aufweist, die zumindest im Wesentlichen nur an der Beinvorderseite angreift.

Eine Ausführung der Lateral-Positioniervorrichtung besteht darin, dass die Positioniervorrichtung eine sich in einem Eingangsabschnitt der Förderstrecke erstreckende stationäre Eingangs-Positionierführung aufweist, die dem mitlaufenden Positionierelement zugeordnet ist, gegen die die Beinvorderseite des Geflügelbeins im Bereich des Oberschenkels gelangt und die das Geflügelbein quer zur Förderrichtung gegen das stationäre Positionierelement führt, bevor das mitlaufende Positionierelement zur Anlage an das Geflügelbein gelangt.

Eine weitere Gestaltung des genannten Eingangsabschnitts der zur Querförderung eingerichteten Lateral-Förderstrecke besteht darin, dass das stationäre Positionierelement längs eines eingangsseitigen Teils des Beuge-Förderabschnitts der Lateral-Positioniervorrichtung mit einem im Querschnitt keilförmigen Rand ausgebildet ist, dessen Querschnitt auf eine Kehlung zwischen Unterschenkel und Oberschenkel angepasst ist, die beim Eintritt des Geflügelbeins in die Positioniervorrichtung vorhanden ist.

Insbesondere wird jeweils ein Paar Geflügelbeine, nämlich ein rechtes und ein linkes Geflügelbein, in der oder den erfindungsgemäßen Positioniervorrichtungen zeitgleich gefördert. Das Paar Geflügelbeine wird dann, wie an sich bekannt, an einem Doppelträger aufgehängt. In der Querförderung laufen der Reihe nach wechselweise linke und rechte Geflügelbeine in die Positioniervorrichtung ein. In der Axialförderung werden linke und rechte Geflügelbeine in zwei parallelen Reihen in der Positioniervorrichtung gefördert. Zwischen der Querförderung und der Axialförderung werden die Doppelträger in einer Drehstation um 90° gedreht. Elemente, Organe bzw. Aggregate jeder erfindungsgemäßen Positioniervorrichtung werden dann entsprechend an die Reihen-Querförderung bzw. die Parallel-Axialförderung angepasst.

Folgende Gestaltungen des erfindungsgemäßen Verfahrens werden hervorgehoben.

Vorteilhaft können an der zu dem zweiten Halte- und Führungsspalt gehörenden zweiten Spalt-Förderstrecke Lateralschnitte wenigstens eines genannten Paares an der Spalt-Förderstrecke gegenüberliegend und längs dieser versetzt durchgeführt werden. Eine Gestaltung besteht darin, dass an der zweiten Spalt-Förderstrecke die zweiten Lateralschnitte unter dem Kniegelenk bis in den Bereich an der Beinvorderseite geführt werden.

An der ersten Spalt-Förderstrecke kann ein zweiter Vorderseiten-Schnitt unmittelbar unter dem Kniegelenk mit Schnitttiefe bis zum Oberschenkelknochen durchgeführt werden, wobei an der zweiten Spalt-Förderstrecke die zweiten Lateralschnitte auf der gleichen Schnitthöhe am Geflügelbein wie der zweite Vorderseiten-Schnitt an der ersten Spalt-Förderstrecke angebracht werden.

Es ist gefunden worden, dass dieser zweite Vorderseiten-Schnitt an der ersten Spalt-Förderstrecke insbesondere dann entfallen kann, wenn, gemäß einer weiteren Verfahrensgestaltung, an der zweiten Spalt-Förderstrecke die zweiten Lateralschnitte unter dem Kniegelenk bis in den Bereich an der Beinvorderseite geführt werden.

In dem zweiten Förderabschnitt können an der zweiten Spalt-Förderstrecke zweckmäßig weitere Bearbeitungsstationen zum Entbeinen (Filetieren) des Geflügelbeins angeordnet werden, wobei jeweils das Geflügelbein-Kniegelenk, mit dem das Geflügelbein in den Halte- und Führungsspalt gleitbewegbar eingehängt ist, eine Bezugsstelle insbesondere für die Höhenposition des Geflügelbeins für sämtliche Bearbeitungsschritte, insbesondere nämlich zum Schneiden, Fleischabziehen, auch zum Enthäuten darstellt. Insbesondere kann in dem zweiten Förderabschnitt das auf den Hüftgelenkknochen geschobene Oberschenkelfleisch abgetrennt werden. Eine weitere vorteilhafte Verfahrensgestaltung besteht darin, dass, vorteilhaft am Ende des zweiten Förderabschnitts, das Geflügelbein zweckmäßig in Höhe des Kniegelenks durchgeschnitten wird, um den Unterschenkel von dem entfleischten Oberschenkel zu trennen.

Vorteilhaft kann jedes axial geförderte Geflügelbein dadurch in den zweiten stationären Halte- und Führungsspalt eingefädelt werden, dass es in dem zweiten Förderabschnitt entlang eines zweiten Beuge-Förderabschnitts, der dem zweiten stationären Halte- und Führungsspalt vorgeordnet ist, zum Einhängen in den zweiten stationären Halte- und Führungsspalt gebeugt und gehoben wird. Die Beugepositionen sind durch einen dem Kniekehlenwinkel zwischen Oberschenkel und Unterschenkel entsprechenden Beugewinkel bestimmt, der während des Hebens kleiner wird. Zweckmäßig wird dieses Verfahren mit einer genannten Axial-Positioniervorrichtung durchgeführt, die, wie beschrieben, zum Fördern, Positionieren und Bearbeiten besonders ausgestaltet ist.

Eine weitere Verfahrensgestaltung besteht darin, dass jedes quer geförderte Geflügelbein in dem ersten Förderabschnitt entlang eines ersten Beuge-Förderabschnitts, der dem ersten stationären Halte- und Führungsspalt vorgeordnet ist, zum Einhängen in den ersten stationären Halte- und Führungsspalt quer zur Förderrichtung gebeugt und gehoben wird, wobei die Beugepositionen durch einen dem Kniekehlenwinkel zwischen Oberschenkel und Unterschenkel entsprechenden Beugewinkel bestimmt sind, der während des Hebens kleiner wird. Vorteilhaft wird dieses Verfahren mit einer genannten Lateral-Positioniervorrichtung durchgeführt, die, wie beschrieben, zum Fördern, Positionieren und Bearbeiten besonders ausgestaltet ist.

Eine besondere Gestaltung besteht darin, dass wenigstens in einem Abschnitt eines genannten Halte- und Führungsspalts die Bearbeitung am im Wesentlichen ungebeugten, in dem zugehörigen Halte- und Führungsspalt hängenden Geflügelbein durchgeführt wird. Einfädelungs-Beugepositionen werden dann beseitigt.

Auf die genannten und noch andere zweckmäßige und vorteilhafte Ausgestaltungen der Erfindung sind Unteransprüche gerichtet. Lediglich besonders zweckmäßige und vorteilhafte Ausbildungsformen und -möglichkeiten werden anhand der folgenden Beschreibung der in der schematischen Zeichnung dargestellten Ausführungsbeispiele näher beschrieben. Jede beschriebene Einzel- oder Detailgestaltung innerhalb eines Ausführungsbeispiels ist als selbstständiges Detailbeispiel für andere nicht oder nicht vollständig beschriebene, unter die Erfindung fallende Ausführungen und Gestaltungen zu verstehen.

Es zeigen
- Fig. 1A/1B bis Fig. 5A/5B: jeweils in Längsansicht und axonometrischer Darstellung eine erste erfindungsgemäße Positioniervorrichtung (Lateral-Positio-niervorrichtung) mit gefördertem Geflügelbein in fünf Förderpositionen,
- Fig. 6A/6B bis Fig. 17A/B: jeweils in Längsansicht und axonometrischer Darstellung eine zweite Positioniervorrichtung (Axial-Positioniervorrichtung) mit geförderten Geflügelbeinen in drei Einfädelungs-Beugepositionen sowie in nachfolgenden Bearbeitungspositionen,
- Fig. 18: in Seitenansicht ein teilweise gebeugtes Geflügelbein und
- Fig. 19: in Blockdiagramm-Darstellung und Draufsicht eine erfindungsgemäße Positioniervorrichtung, die aus einer erfindungsgemäßen Lateral-Positioniervorrichtung und einer damit verbundenen, nachfolgenden erfindungsgemäßen Axial-Positioniervorrichtung gebildet ist.

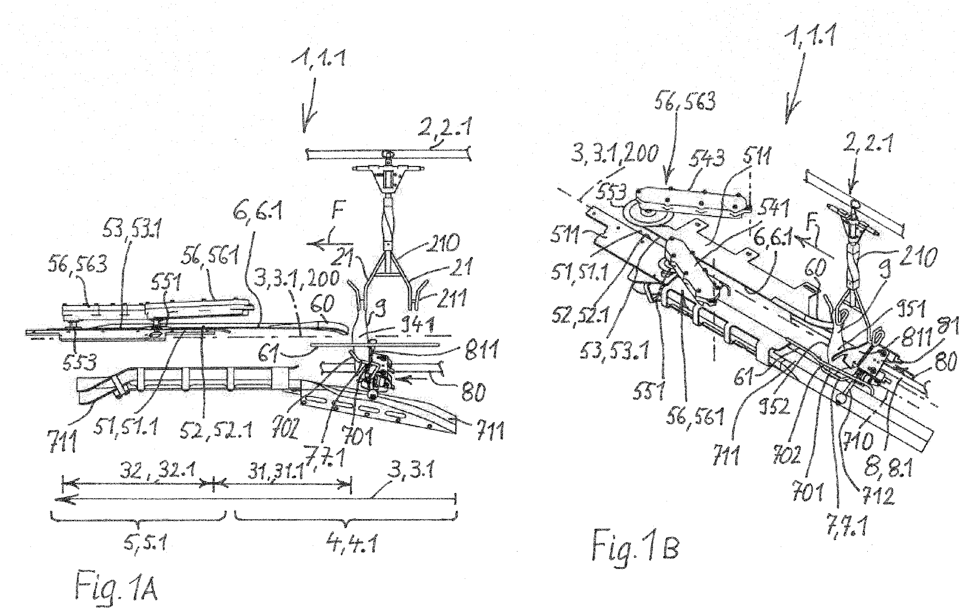

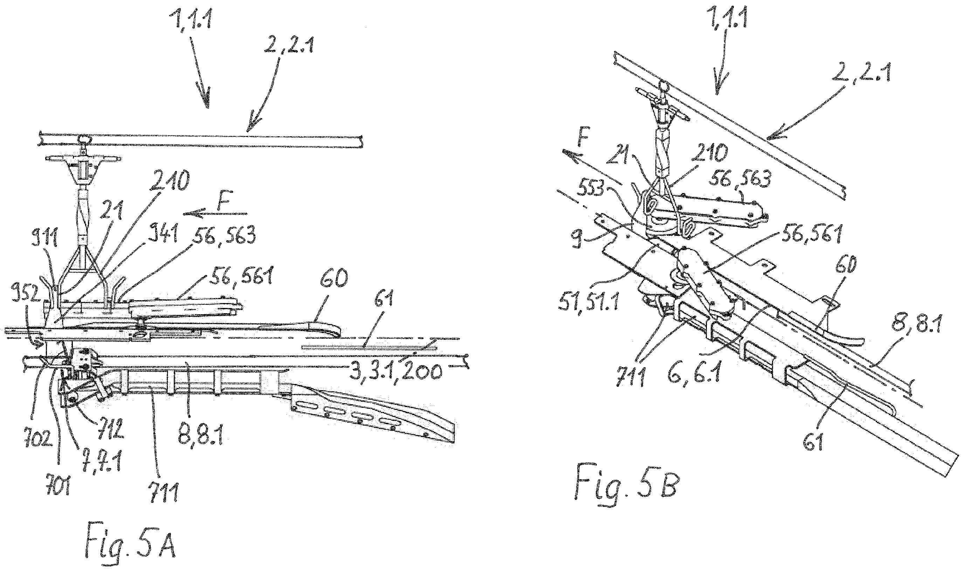

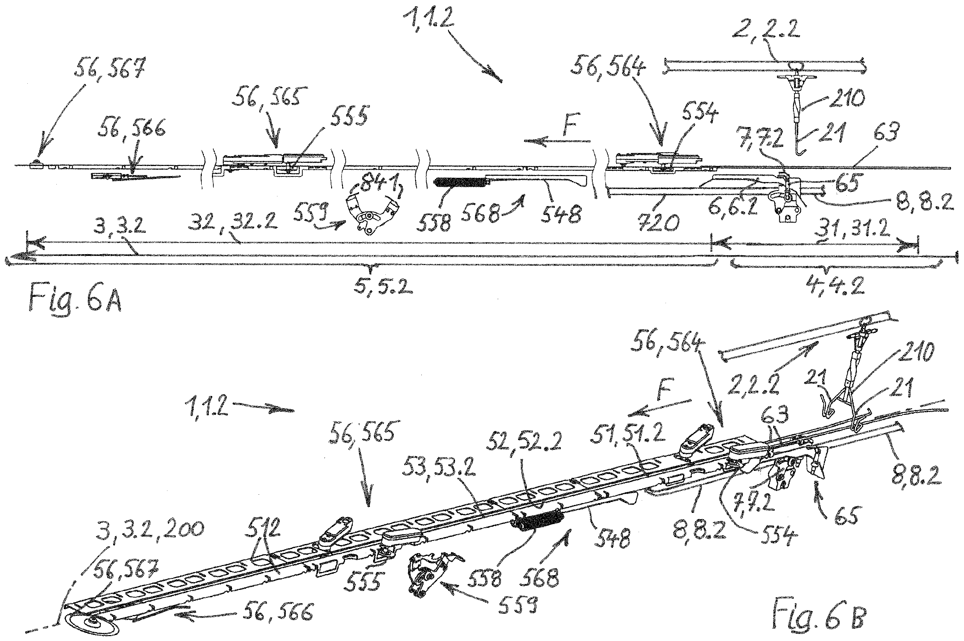

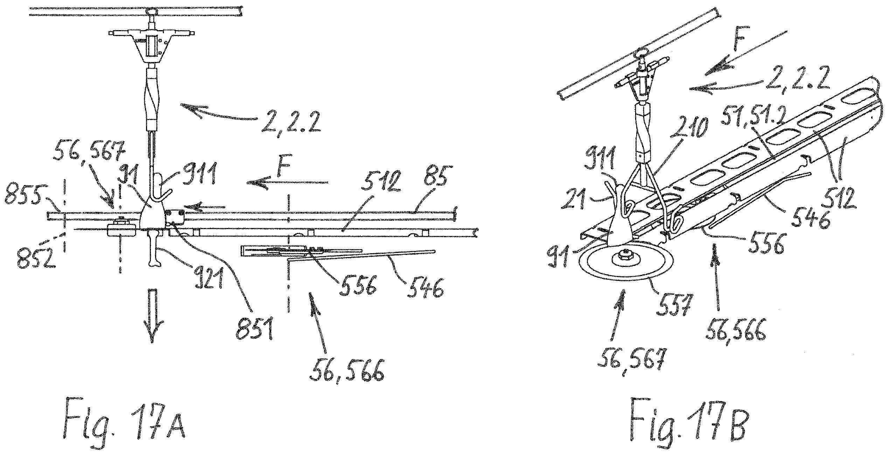

In Fig. 1A/B (Fig. 1) bis Fig. 5A/B (Fig. 5) ist ein Ausführungsbeispiel einer erfindungsgemäßen ersten Positioniervorrichtung 1 dargestellt, die auch mit Lateral-Positioniervorrichtung 1.1 bezeichnet wird. Aus Fig. 6A/B (Fig. 6) bis Fig. 17A/B (Fig. 17) ist ein weiteres Beispiel einer erfindungsgemäßen Positioniervorrichtung 1 ersichtlich, nämlich eine zweite Positioniervorrichtung, die auch als Axial-Positioniervorrichtung 1.2 bezeichnet wird.

Zunächst werden Organe und Aggregate der beiden genannten Positioniervorrichtungen 1 beschrieben, soweit sie für die Positioniervorrichtungen der Beispiele 1.1 und 1.2 und jede erfindungsgemäße Positioniervorrichtung übereinstimmend und allgemein zutreffen. Damit wesentliche Teile der Vorrichtungen aus der Zeichnung klar ersichtlich sind, werden Gestell-, Rahmen- und Verbindungsteile, an denen die Organe und Aggregate montiert und durch die sie miteinander verbunden sind, sowie Antriebsmotoren oder dergleichen Elemente nicht dargestellt.

Jede Positioniervorrichtung 1 weist eine eine Einfädeleinrichtung bildende Beugeeinrichtung 4 sowie eine Halte- und Führungseinrichtung 5 auf, die entlang einer in Förderrichtung F geradlinigen Förderstrecke (Förderweg) 3 angeordnet sind. Weiterhin ist jede Positioniervorrichtung 1 mit einer Fördereinrichtung 2 ausgestattet, die entlang der Förderstrecke 3 eine Reihe von bewegbaren Trägern 21 zum hängenden Transport von Geflügelbeinen 9 aufweist.

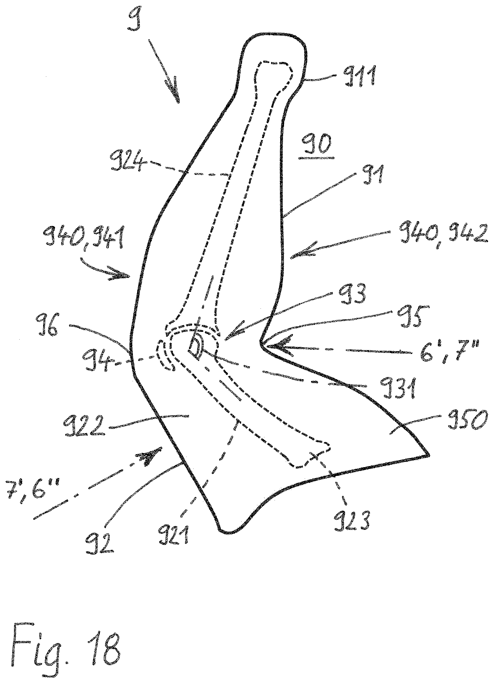

Wie anhand der Fig. 18 verdeutlicht wird, sind die Geflügelbeine 9 von einem Geflügelkörper getrennte fleischbehaftete Beine, deren Unterschenkel 91 und Oberschenkel 92 über das Kniegelenk 93 aneinander angelenkt sind. Eine axiale Beinseite 940, an der sich die Kniescheibe 94 befindet, wird als Beinvorderseite 941 bezeichnet, und die andere axiale Beinseite 940, an der sich die Kniekehle 95 befindet, bildet die Beinrückseite 942. Die Achse des Oberschenkelknochens 921 und die Achse des Unterschenkelknochens 924 des Geflügelbeins 9 erstrecken sich jedenfalls im Wesentlichen in einer Geflügelbein-Axialebene 90. Das in Fig. 18 schematisch dargestellte Geflügelbein 9 kann sowohl als linkes als auch als rechtes Geflügelbein betrachtet werden. In Fig. 1 bis 17 werden die Geflügelbeine 9 in der dargestellten Förderlinie als linke Geflügelbeine betrachtet.

Die Fördereinrichtung 2 ist eine Überkopf- oder Hängefördereinrichtung, an der die Träger 21 in einheitlicher Höhe aufgehängt und entlang einer Umlaufstrecke gefördert werden. Jedes Geflügelbein 9 fasst mit seinem Fußgelenkkopf 911 in einen zugehörigen Träger 21, im Beispiel in einen Trägerbügel 211 ein. In der Zeichnung Fig. 1 bis 17 ist nur ein mit einem linken Geflügelbein 9 beschickter Träger 21 der in Förderrichtung F aufeinander folgenden Träger dargestellt.

Jede Beugeeinrichtung 4 weist ein sich in einem Beuge-Förderabschnitt 31 der Förderstrecke 3 erstreckendes stationäres Positionierelement 6 und eine Reihen von mittlaufenden Positionierelementen 7 auf. Jedes Positionierelement 7 läuft in Zuordnung zu einem zugehörigen Träger 21 in Förderrichtung F mit. In der Zeichnung wird nur das zu dem beschickten Träger 21 zugehörige Positionierelement 7 dargestellt. Jeweils bildet ein mittlaufendes Positionierelement 7 mit dem stationären Positionierelement 6 ein Paar von Positionierelementen.

Wie in Fig. 18 schematisch mit 6'/7' und 6"/7" dargestellt, ist jedes Paar der Positionierelemente 6, 7 derart eingerichtet, dass es ein mit seinem Kniegelenk 93 zwischen die beiden Positionierelemente 6, 7 gebrachtes Geflügelbein 9 während der Förderung hebt und dabei mit einem dem Beugewinkel 931 entsprechenden Kniekehlenwinkel beugt. Eines der Positionierelemente 6, 7 ist zum Eingriff in die Kniekehle 95 des Geflügelbeins 9 angeordnet und eingerichtet, während das andere der Positionierelemente 6, 7 zur Anlage an den Oberschenkel 92 an der Beinvorderseite 941 angeordnet und eingerichtet ist. In Fig. 18 bezieht sich die Paarung 6`/7` auf die Positioniereinrichtung 1.1, während die Paarung 6"/7" die Positioniereinrichtung 1.2 betrifft.

Die mitlaufenden Positionierelemente 7 sind durch angetriebene Andrückelemente gebildet, die mittels einer Antriebs- und Steuereinrichtung 8 angetrieben und bewegt werden. Diese Einrichtung ist schematisch jeweils nur mit wesentlichen Elementen dargestellt, die die mitlaufenden Positionierelemente 7 zum Mitlaufen in Förderrichtung F sowie zum Beugen zweidimensional in Heberichtung und quer dazu mit Richtung in der Geflügelbein-Axialebene 90 bewegen. Bei den Führungs-/Steuerelementen handelt es sich z. B. um Kulissen, Nocken, Schienen, Stangen, Schwenkelemente, Schiebeelemente oder dergleichen, die die mitlaufend bewegten Positionierelemente 7 führen, ausrichten und positionieren. Solche Steuer-/Führungseinrichtungen sind dem Prinzip nach in vielfältiger Ausführung bekannt. Insbesondere wird der Antrieb für die Mitlaufbewegung durch einen angetriebenen Strang 80, z. B. eine umlaufend geführte und bewegte Kette verwirklicht, an dem die mitlaufenden Positionierelemente 7 in Reihe angeordnet und befestigt sind. Die Positionierbewegung des mitlaufenden Positionierelements 7 kann mittels einer Zeit-/Weg-Steuerung der Antriebs- und Steuereinrichtung 8 vorteilhaft derart eingerichtet sein, dass die Positionierbewegung zunimmt, also progressiv ist. In der Zeichnung wird ein in Förderrichtung F bewegter Abschnitt eines Strangs 80, der Bestandteil der Antriebs- und Steuereinrichtung 8 ist, nur mit einem Fragment dargestellt.

Die Förderstrecke 3 weist einen zu der Beugeeinrichtung 4 gehörenden Beuge-Förderabschnitt 31 auf. Jedes Paar der Positionierelemente 6, 7 bewirkt entlang dieses Beuge-Förderabschnitts 31 das Heben und Beugen des Geflügelbeins 9 in eine bestimmte, insbesondere maximale Beugeposition am Ende des Beuge-Förderabschnitts 31.

An den Beuge-Förderabschnitt 31 schließt ein Bearbeitungs-Förderabschnitt 32 der Förderstrecke 3 an. Die Halte- und Führungseinrichtung 5 erstreckt sich entlang des Bearbeitungs-Förderabschnitts 32. Wesentliche Bestandteile der Halte- und Führungseinrichtung 5 ist ein sich in der Förderstrecke 3 geradlinig erstreckender Halte- und Führungsspalt 51, der zwischen zwei Spalträndern 52, 53 ausgebildet ist. Der Halte- und Führungsspalt 51 ist derart eingerichtet, dass er zwischen seinen Spalträndern 52, 53 jedes Geflügelbein 9 im Bereich des Kniegelenks 93 aufnimmt. Das heißt, dass die beiden Spaltränder 52, 53 Kniegelenkknochen unterfassen und dadurch eine Art Spalt-Schienenführung bilden, in der das Geflügelbein 9 mit Knochenerhebungen seines Kniegelenks 93 und entsprechenden Beinverdickungen eingehängt ist und entlang des Spalts 51 schiebbar ist, und zwar unter Gleitanlage des Beinfleisches zwischen dem Kniegelenk 93 und den Spalträndern 52, 53. Zweckmäßig sind die Spaltränder 52, 53 angefast, um die Gleitbewegung zu begünstigen.

Der Halte- und Führungsspalt 51 erstreckt sich in einer Vertikalebene, entlang der die Träger 21 bewegt werden. In den Ausführungsbeispielen erstrecken sich die Spaltränder 52, 53 in Bezug auf die Axialdimension des Geflügelbeins 9 auf der gleichen Höhe. Die Spaltränder können auch relativ zueinander in der Höhe geringfügig versetzt sein. In jedem Fall bilden sie entlang des Bearbeitungs-Förderabschnitts 32 eine stationäre Führung, in der das Kniegelenk 93 eines jeden Geflügelbeins 9 mit definierter Höhe des Kniegelenks in Förderrichtung F bewegt wird. Gemäß den Ausführungsbeispielen befindet sich das Kniegelenk 93 entlang des Bearbeitungs-Förderabschnitts 32 in einer Referenzposition mit einheitlicher Höhenlage. Die Referenzpositionierung kann aber auch mit sich, zum Beispiel in Stufen, verändernden Referenzpositionen eingerichtet sein, z. B. mit einem Führungs-Referenzspalt, der in einer vertikalen Förderebene wenigstens abschnittsweise schräg und/oder mit einer Krümmung verläuft. In sämtlichen Fällen ist der Streckenverlauf geradlinig in dem Sinn, dass die Förderstrecke 31 frei von horizontaler Ablenkung, damit frei von Karussellführung, in zumindest im Wesentlichen gerader Linie 200 in der vertikalen Förderebene ausgerichtet ist.

Die Beugeeinrichtung 4 bildet die Einfädeleinrichtung dadurch, dass jedes Geflügelbein 9 in der bestimmten Hebe- und Beugeposition mit seinem Kniegelenk 93 genau zum Einfädeln und Einhängen des Geflügelbeins 9 in den Halte- und Führungsspalt 51 gelangt. Man erkennt allgemein, dass die Geflügelbeine 9 durch das Einhängen in den Halte- und Führungsspalt 51 bzw. durch die Übergabe an diesen mit einer auf das Kniegelenk 93 bezogenen Referenzpositionierung geführt werden, in der die Axialausrichtung des Geflügelbeins 9 zum Bearbeiten desselben unabhängig von einer Beugung bzw. einer Beugeposition am Ende des Beuge-Förderabschnitts 31 ist.

Die bisher beschriebene Positioniervorrichtung 1 ist eine selbstständige Moduleinheit, an der mehrere Bearbeitungsstellen, vorzugsweise an der Förderstrecke 3 einander gegenüberliegend und versetzt, angeordnet werden können. Beispiele für die Anordnung von Bearbeitungsstationen 56 sind anhand der Positioniervorrichtungen 1.1 und 1.2 zu sehen.

In Folgenden wird die Lateral-Positioniervorrichtung 1.1 gemäß Fig. 1 bis 5 näher beschrieben. Zu dieser Beschreibung werden u. a. Bezugszeichen verwendet, die sich auf die vorstehend allgemein beschriebenen Teile und Angaben beziehen, jetzt aber mit einer zusätzlichen individualisierenden Bezugsziffer (Nachpunktstelle) versehen werden.

Mittels der Fördereinrichtung 2.1 werden die Geflügelbeine 9 quer gefördert, wobei im Ausführungsbeispiel ein linkes Geflügelbein 9 zu sehen ist, das mit seiner lateralen Bein-Außenseite 950, 952 voraus gefördert wird.

Das stationäre Positionierelement 6, 6.1 ist durch einen stationären Positionierrand gebildet, der Teil eines längs der Förderstrecke 3.1 durchgehenden Referenz-Halterandes ist. Das Bezugszeichen 6.1 wird im Folgenden auch für den Positionierrand als das stationäre Positionierelement verwendet. Jedes mitlaufende Positionierelement 7.1 der Reihe von mitlaufenden Positionierelementen ist zur Anlage an den Oberschenkel 92 an der Beinvorderseite 940, 941 eingerichtet.

Die Beugeeinrichtung 4.1 weist den stationären Positionierrand 6.1 auf, der in die Kniekehlen 95 der quer geförderten Geflügelbeine 9 eingreift, sowie die Reihe der mitlaufenden Positionierelemente 7.1, die mittels der Antriebs- und Steuereinrichtung 8.1 mit Bewegungskomponente jeweils in der Geflügelbein-Axialebene 90 zur Anlage an den Oberschenkel 92 an der Beinvorderseite 941 gebracht werden.

Es sind nur wesentliche Teile der Beugeeinrichtung 4.1 entlang des Beuge-Förderabschnittes 31.1 dargestellt, wobei ein mitlaufendes Positionierelement 7.1, das den Beuge-Förderabschnitt 31.1 passiert, gemäß Fig. 1 bis 5 in fünf Positionen dargestellt wird, aus denen auch die Positionen des zwischen dem mitlaufenden Positionierelement 7.1 und dem Positionierrand 6.1 befindlichen Geflügelbeins 9 hervorgehen.

Das durch ein Winkelstück gebildete mitlaufende Positionierelement 7.1 weist zwei mit Winkel zueinander ausgerichtete Armteile auf, nämlich einen ersten Armteil 701 und einen zweiten Armteil 702. Das Winkelstück wird mittels der Antriebs- und Steuereinrichtung 8.1 so geführt und bewegt, dass der Armteil 701 im Wesentlichen an der Beinvorderseite 941 unter Bewegung quer zur Förderrichtung F angreift. Der zweite Armteil 702 ist dabei so ausgerichtet und er wird so bewegt, dass er quer zur Förderrichtung F gerichtet ist und, in Förderrichtung F mitlaufend, im Wesentlichen an in Förderrichtung F stromabwärts gelegener lateraler Bein-Außenseite 952 an dem Oberschenkel 92 zu dessen Stützung anliegt. Die gesteuert geführte Versatzbewegung des doppelarmigen mitlaufenden Positionierelements 7.1 ist derart, dass dieses Element in der Geflügelbein-Axialebene 90, die sich in Förderrichtung F fortbewegt, mit zwei sich überlagernden Bewegungskomponenten in Richtung auf den Positionierrand 6.1 bewegt wird, nämlich in eine Richtung, die das Geflügelbein 9 anhebt und in eine Richtung quer dazu, die den Oberschenkel 92 des Geflügelbeins 9 in den Bereich unter den Positionierrand 6.1 bewegt. Das mitlaufende Positionierelement 7.1 kann im Ausführungsbeispiel und allgemein auch lediglich durch ein dem Armteil 701 entsprechendes Element, z. B. in Form eines Arms oder einer Platte, zum Angriff ausschließlich oder zumindest im Wesentlichen an der Beinvorderseite 941 ausgebildet sein.

Weiterhin weist die Lateral-Positioniervorrichtung 1.1 eine Reihe von in Förderrichtung F mit den Trägern 21 mitlaufenden lateralen Schiebeelementen 811 auf, die den Positionierelementen 7.1 zugeordnet sind und mit diesen Laufpaare bilden, die in Förderrichtung F mitlaufen und eine Andrück- und Stützhalterung bilden.

Das mitlaufende Schiebeelement 811 greift im Bereich des Geflügelbein-Oberschenkels 92 an der in Förderrichtung F stromaufwärts gelegenen lateralen Bein-Innenseite 950, 951 an. Die mitlaufenden lateralen Schiebeelemente 811 können in Förderrichtung F mit einem Fördermittel bewegt werden, das auch die mitlaufenden Positionierelemente 7.1 in Förderrichtung bewegt und insoweit Bestandteil der Antriebs- und Steuereinrichtung 8.1 ist. Die lateralen Schiebeelemente 811 können aber auch mit einem von der Antriebs- und Steuereinrichtung 8.1 unabhängigen Antriebsmittel bewegt werden, z. B. mit einem Strangantrieb wie einer umlaufend angetriebenen Kette oder dergleichen Mittel, an dem die Reihe der lateralen Schiebeelemente 811 befestigt ist.

Im Ausführungsbeispiel der Fig. 1 bis 5 ist das mitlaufende Positionierelement 7.1 schwenkbar an einem Schlitten 81 angelenkt. Der an dem Antriebsstrang 80 befestigte Schlitten 81 lagert das laterale Schiebeelement 811. Die Schwenkanlenkung des Positionierelements 7.1 erfolgt um eine entsprechend der Förderrichtung F längs gerichtete Schwenkachse 710. Die Schwenkbewegung des Positionierelements 7.1, die die genannte Versatzbewegung bewirkt, wird mittels einer längs der Förderlinie 200 angeordneten stationären Führungsbahn 711 und einem daran geführten, mit dem Positionierelement 7.1 verbundenen Schwenk-Führungsarm 712 bewirkt, der quer zur Förderlinie 200 gerichtet ist. Jede andere Bewegungssteuerung kann zum Erzeugen der Förder- und Querbewegung des Positionierelements 7.1 eingerichtet werden.

Wie aus Fig. 1 bis 5 hervorgeht, weist die Positioniervorrichtung 1.1 bzw. die Beugeeinrichtung 4.1 eine stationäre (gestellfeste) Eingangs-Positionierführung 61 auf, die sich in einem Eingangsabschnitt der Förderstrecke 3.1 erstreckt und den mitlaufenden Positionierelementen 7.1 zugeordnet ist. Die Eingangs-Positionierführung 61 ist durch eine Führungsstange gebildet, die jedes in die Positioniervorrichtung 1.1 einlaufende Geflügelbein 9 in eine Anfangsposition gegen den Positionierrand 6.1 bringt, wobei die Führungsstange und der Positionierrand 6.1 in Förderrichtung F leicht konvergieren können. Die Eingangs-Positionierführung 61 endet in einem Bereich, in dem das mitlaufende Positionierelement 7.1 die Positionierung des Geflügelbeins 9 übernimmt.

Im Ausführungsbeispiel ist der stationäre Positionierrand 6.1 längs eines eingangsseitigen Teils, in dem die Beinrückseite 942 des Geflügelbeins 9 zur ersten Anlage an das stationäre Positionierelement 6.1 gelangt, mit einem im Querschnitt keilförmigen Rand 60 ausgebildet, dessen Orientierung und Querschnitt auf eine Kehlung zwischen dem Unterschenkel 91 und dem Oberschenkel 92 des Geflügelbeins 9 bei Eintritt in die Positioniereinrichtung 1.1 angepasst ist.

In jedem Fall sind die Träger 21 der Fördereinrichtung 2.1 in der Höhe in Bezug auf den stationären Positionierrand 6.1 so angeordnet, dass jedes Geflügelbein 9 beim Einlaufen in die Beugeeinrichtung 4.1 an der Beinrückseite 942 in der Bein-Kniekehle 95 und vorzugsweise etwas oberhalb der Bein-Kniekehle 95, das heißt am Unterschenkel 91 zur Anlage kommt.

Fig. 1 zeigt das linke Geflügelbein 9 in der Position, in der es von der stationären Eingangs-Positionierführung 61 an das zugeordnete mitlaufende Positionierelement 7.1 übergeben wird. Man erkennt, dass in dieser Position auch das zugeordnete mitlaufende laterale Schiebelement 811 zur Anlage an die laterale Bein-Innenseite 951 gelangt.

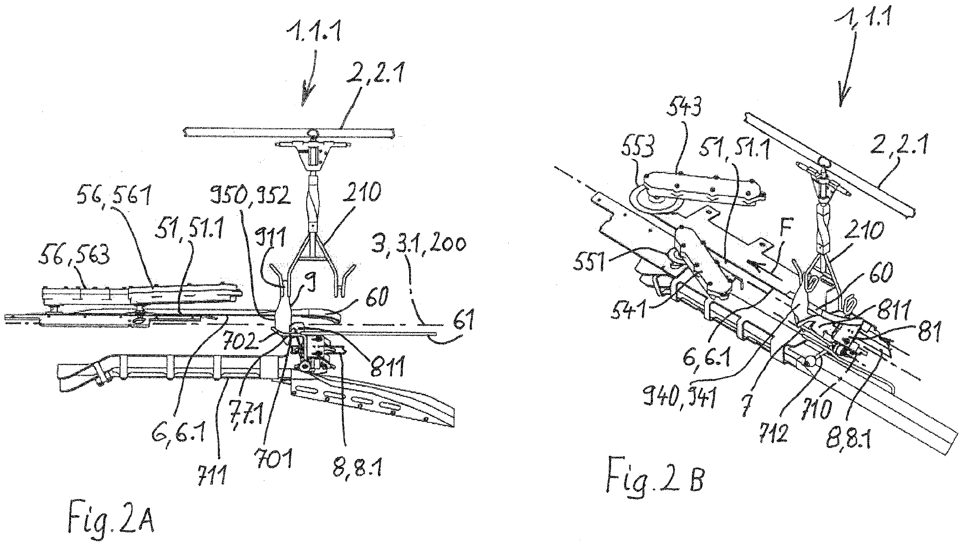

In Fig. 2 ist das linke Geflügelbein 9 in eine Zwischenposition längs der Beugeeinrichtung 4.1 weitergefördert worden. In dieser Position befindet sich das Geflügelbein 9 in einer mittels des mitlaufenden Positionierelements 7.1 gehobenen Position derart, dass der Positionierrand 6.1 einen Teil des Unterschenkels 91 untergreift und weit in die Kniekehle 95 eingreift, wobei das Gelflügelbein 9 in eine positionierende Beugeposition gebracht worden ist. Das Heben des Geflügelbeins 9 erkennt man an dem in dem Träger 21 gehobenen Fußgelenkkopf 911.

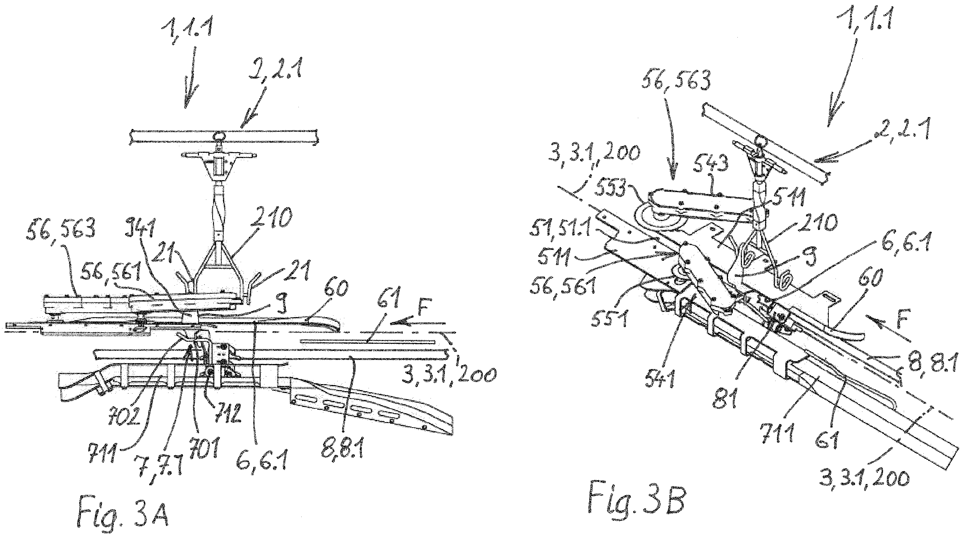

Fig. 3 zeigt eine Position des Geflügelbeins 9, in der es mittels des mitlaufenden Positionierelements 7.1 noch etwas weiter, also mit kleiner gewordenem Beugungswinkel 931 gebeugt worden ist, wobei der stationäre Positionierrand 6.1 weiter in die Kniekehle 95 hineingedrängt worden ist. In dieser Position tritt das Geflügelbein 9 auf Höhe seines Kniegelenks 93 in den Halte- und Führungsspalt 51.1 ein. Dadurch wird das Geflügelbein 9 mit seinem Kniegelenk 93 in den Halte- und Führungsspalt 51.1 eingefädelt und eingehängt.

Während das Geflügelbein 9 den Beuge-Förderabschnitt 31.1 passiert, gleitet es im Bereich seiner Kniekehle 95 entlang des Positionierrandes 6.1. Der Positionierrand 6.1 geht in einen zweiten Referenz-Halterandteil über, der den einen Spaltrand 52.1 des Halte- und Führungsspalts 51.1 bildet. Der Positionierrand 6.1 und der erste Spaltrand 52.1 werden zweckmäßig als Gleitränder von Führungsplatten 511 eingerichtet. Der erste Spaltrand 52.1 und der Positionierrand 6.1 können der Rand einer einheitlichen Platte sein. Die beiden Ränder können auch zu unterschiedlichen Führungsteilen gehören.

Der Halte- und Führungsspalt 51.1 der Halte- und Führungseinrichtung 5.1 kann sich in Förderrichtung F ein wenig verengen. Gegebenenfalls ist diese Konvergenz jedoch so gering und die Gestaltung ist derart, dass das lateral geförderte Geflügelbein 9 - unabhängig davon, ob es sich um ein linkes Geflügelbein 9 mit lateraler Bein-Außenseite 952 voraus oder um ein rechtes Geflügelbein 9 mit lateraler Bein-Innenseite 951 voraus handelt (oder umgekehrt) - zuverlässig in den Halte- und Führungsspalt 51.1 eingefädelt wird. Zweckmäßig werden die Platten 511 zum Ausbilden des Halte- und Führungsspalts 51.1 auf gleicher Höhe angeordnet.

Mittels des in den Halte- und Führungsspalt 51.1 eingehängten Geflügelbeins 9 befindet sich dessen Kniegelenk 93 in einer Referenzposition an jeder Stelle längs des Halte- und Führungsspalts 51.1. Das Kniegelenk 93 des quer geförderten Geflügelbeins 9 bildet eine Kniegelenk-Knochenerhebung, mit der das gleitende Einhängen des Geflügelbeins 9 in den Halte- und Führungsspalt 51.1 erreicht wird. Der Halte- und Führungsspalt 51.1 ist auf die genannte Knochenerhebung angepasst, und zwar derart, dass Geflügelbeine 9 unterschiedlicher Größe gleitbewegbar aufgenommen werden.

Die Lateral-Positioniervorrichtung 1.1 ist eine Vorrichtung, die entlang des Halte- und Führungsspalts 51.1 zum Bestücken mit bzw. Anbringen von Bearbeitungswerkzeugen und Bearbeitungsstationen 56 an Bearbeitungsstellen vorgesehen und eingerichtet ist. Im Ausführungsbeispiel ist die Halte- und Führungseinrichtung 5.1 mit zwei Schneidestationen 561 und 563 ausgestattet.

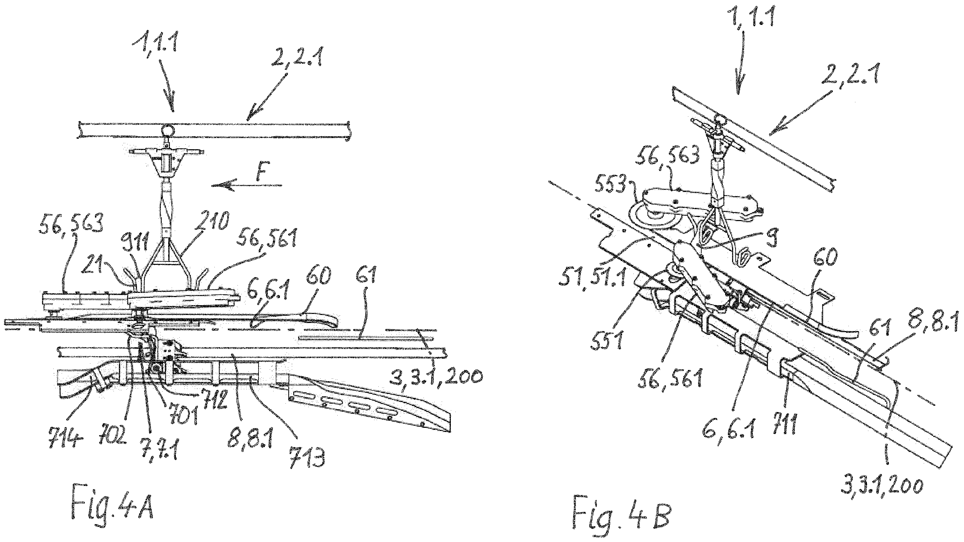

Die erste Schneidestation ist eine stationäre Vorderseiten-Schneidestation 561, die an einem eingangsseitigen Teil-Förderabschnitt der Halte- und Führungseinrichtung 5.1 angeordnet ist. Die Vorderseiten-Schneidestation 561 weist ein oberhalb des Halte- und Führungsspalts 51.1 arbeitendes Schneidmittel 551 auf, das insbesondere, wie im Ausführungsbeispiel, mittels eines gegen eingestellte Federkraft ausweichendes Kreismessers gebildet ist, das an einem schwenkbaren Haltearm 54, 541 gelagert ist. Im Ausführungsbeispiel wird mittels der Vorderseiten-Schneidestation 561 an der Beinvorderseite 941 des Geflügelbeins 9 in Höhe des Kniegelenks 93 ein Schnitt mit Schnitttiefe bis zum Knorpel angebracht. Diese Schnittposition ist aus Fig. 4 ersichtlich.

Im Ausführungsbeispiel ist die Antriebs- und Steuereinrichtung 8.1 mit den mitlaufenden Positionierelementen 7.1 derart eingerichtet, dass die Hebe- und Beugeposition, die zum Einfädeln und Einhängen des Geflügelbeins 9 am Ende des Beuge-Förderabschnitts 31.1 erreicht wird, für den Schnitt mittels der Schneidestation 561 beibehalten wird. Zu diesem Zweck wird der Führungsarm 712 mittels eines Bahnabschnitts 713 der Führungsbahn 711 in zum Beugen eingeschwenkter Position gehalten. Die Steuerführung der Antriebs- und Steuereinrichtung 8.1 ist im Ausführungsbeispiel weiterhin so eingerichtet, dass das Positionierelement 7.1 nach Passieren der Schneidestation 561 von dem Halte- und Führungsspalt 51.1 weggeführt wird, um die durch das Positionierelement 7.1 bewirkte Beugeposition zu beseitigen. Der Führungsarm 712 wird mittels eines Kurvenabschnitts 714 zurückgeschwenkt und abgesenkt. Dabei bleibt die Hebeposition des Geflügelbeins 9 nach Maßgabe des in den Halte- und Führungsspalt 51.1 eingehängten Kniegelenks 93 erhalten.

Im Ausführungsbeispiel ist an dem Bearbeitungs-Förderabschnitt 32.1 der Halte- und Führungseinrichtung 5.1 eine weitere stationäre Schneidestation, nämlich eine Rückseiten-Schneidestation 563 angeordnet, die ein oberhalb des Halte- und Führungsspalts 51.1 arbeitendes Schneidmittel 553 aufweist, das durch ein Kreismesser gebildet ist. Das Kreismesser ist gegen Federkraft ausweichlich an einem Schwenkarm 543 gelagert. Wie in Fig. 5 dargestellt, stellt die Rückseitenschneidestation 563 an der Beinrückseite 942 in Höhe des Kniegelenks 93 einen Schnitt mit Schnitttiefe bis zum Kniegelenkknochen her. Dabei befindet sich das Geflügelbein 9 mittels seiner Kniegelenk-Aufhängung in der dadurch erzielten Referenzposition. In diesem Fall ist die Beugeposition, die mit dem mitlaufenden Positionierelement 7.1 bewirkt worden ist, nicht mehr vorhanden. Der mittels der stationären Vorderseiten-Schneidestation 561 in Höhe des Kniegelenks 93 hergestellte Schnitt kann genutzt werden, um die Gleit- und Hängeführung des Kniegelenks 93 an dem zweiten Spaltrand 53.1 zu unterstützen.

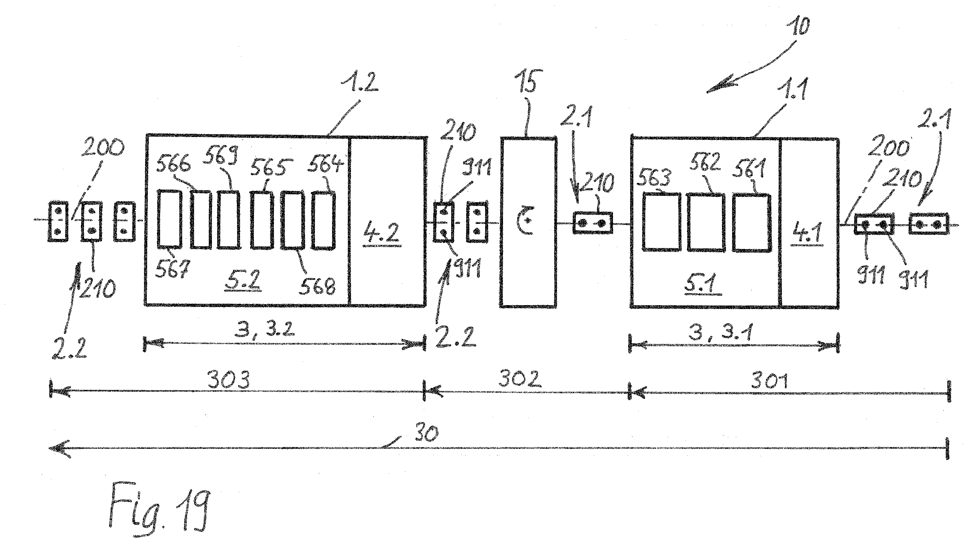

Wie in Fig. 19 nur schematisch eingetragen, wird gemäß einem weiteren Beispiel an dem Bearbeitungs-Förderabschnitt 32.1 der Halte- und Führungseinrichtung 5.1 eine zweite stationäre Vorderseiten-Schneidestation 562 angeordnet, die ein unterhalb des Halte- und Führungsspalts 51.1 arbeitendes Schneidmittel aufweist. Dieses Schneidmittel kann vorgesehen werden, um an der Beinvorderseite 941 unmittelbar unter dem Kniegelenk 93 einen Schnitt mit Schnitttiefe bis zum Oberschenkelknochen 921 anzubringen. Zweckmäßig wird ein Kreismesser an einem federbelasteten Schwenkarm angeordnet.

Die Ebene eines jeden Kreismessers der ersten Positioniervorrichtung 1.1 liegt horizontal oder leicht schräg zur Horizontalausrichtung, so dass jeweils der Schnitt quer zur Axialausrichtung des Geflügelbeins 9 an den beschriebenen Stellen angebracht und durchgeführt wird.

Die Träger 21 sind doppelte Bestandteile eines Doppelträgers 210, an denen in Trägerposition parallel zur Förderrichtung F das linke Geflügelbein 9 voraus und ein rechtes Geflügelbein nachfolgend aufzuhängen sind. Zum Bearbeiten der rechten Geflügelbeine ist die Beugeeinrichtung 4.1 mit nicht dargestellten Teilen und Organen ausgestattet, die den mit 7.1, 701, 702 und 811 bezeichneten entsprechen und insbesondere zur Anlage an das mit Bein-Innenseite 951 voraus geförderte rechte Geflügelbein besonders angepasst sein können. Als vorteilhaft hat es sich erwiesen, dass dann das mitlaufende Positionierelement z. B. als Arm oder Platte ausgebildet wird und zumindest im Wesentlichen nur an der Beinvorderseite angreift. Die mitlaufenden Positionierelemente 7.1 sind dann für die linken und rechten Geflügelbeine wechselweise in zwei Gruppen unterteilt.

Im Folgenden wir die Axial-Positioniervorrichtung 1.2 gemäß Fig. 6 bis 17 näher beschrieben. Zu dieser Beschreibung werden u. a. Bezugszeichen verwendet, die sich auf die vorstehend allgemein beschriebenen Teile und Angaben beziehen, jetzt aber mit einer zusätzlichen individualisierenden Bezugsziffer (Nachpunktstelle) versehen werden.

Mittels der Fördereinrichtung 2.2 werden die Geflügelbeine 9 axial, d. h. mit axialer Beinseite 940, nämlich der Beinvorderseite 941 voraus gefördert. Im Ausführungsbeispiel wird ein linkes Geflügelbein 9 gefördert. Das stationäre Positionierelement 6, 6.2 ist durch eine stationäre Rampe der Einfädeleinrichtung mit in Förderrichtung F nach oben gerichteter Rampenführung gebildet. Das Bezugszeichen 6.2 wird im Folgenden auch für die stationäre Rampe als das stationäre Positionierelement verwendet. Jedes mitlaufende Positionierelement 7, 7.1 der Reihe von mitlaufenden Positionierelementen ist zum Eingriff in die Kniekehle 95 des Geflügelbeins 9 eingerichtet.

Die Beugeeinrichtung 4.2 weist die stationäre Rampe 6.2 auf, gegen die der Oberschenkel 92 an der Beinvorderseite 941 zur Anlage gelangt, sowie die Reihe der mitlaufenden Positionierelemente 7.2, die mittels der Antriebs- und Steuereinrichtung 8.2 jeweils in die Kniekehlen 95 der mit der Beinvorderseite 941 voraus axial geförderten Geflügelbeine 9 eingreifen.

In Fig. 6 bis 17 sind nur wesentliche Teile der Beugeeinrichtung 4.2 entlang des Beuge-Förderabschnittes 31.2 dargestellt, wobei eines der mitlaufenden Positionierelemente 7.2, das den Beuge-Förderabschnitt 31.2 passiert, in elf Positionen dargestellt wird, aus denen auch die Positionen des zwischen dem mitlaufenden Positionierelements 7.2 und der stationären Rampe 6.2 befindlichen Geflügelbeins 9 hervorgehen.

Die stationäre Rampe 6.2 ist entlang des Beuge-Förderabschnitts 31.2 in sechs Führungsabschnitte 621 bis 626 unterteilt. Die Rampe 6.2 beginnt stromaufwärts mit einem relativ steilen Abschnitt 621, an den sich ein weniger steiler Abschnitt 622 anschließt. Letzterem folgt ein flacher horizontaler Abschnitt 623, dem ein in der Steigung weiter reduzierter Abschnitt 624 folgt. An diesem Abschnitt 624 schließt sich ein im Vergleich mit jeweils den übrigen Abschnitten etwa doppelt so langer horizontaler flacher Abschnitt 625 an, und die Rampe 6.2 ist an ihrem Ende mit einem abfallenden Abschnitt 626 ausgebildet. Das Ausführungsbeispiel der Axial-Positioniereinrichtung 1.2 ist auf ein solches stationäres Positionierelement (Rampe) 6.2 nicht eingeschränkt. Jedes eingangs allgemein definierte stationäre Positionierelement 6.2 kann vorgesehen werden, das im Zusammenspiel mit dem mitlaufenden Positionierelement 7.2 das Beugen und Heben zum Einfädeln bewirkt.

Weiterhin weist die Axial-Positioniervorrichtung 1.2 optional ein stationär angeordnetes Gegenhalte-Positionierelement 65 auf, das zusammen mit der Rampe 6.2 zum Angriff an der Beinvorderseite 941 vorgesehen ist. Das Gegenhalte-Positionierelement 65 wird insbesondere an einem Steigungsabschnitt der Rampe 6.2, zum Beispiel im Bereich des zweiten Führungsabschnitts 622, angeordnet.

Im Ausführungsbeispiel weist das stationäre Gegenhalte-Positionierelement 65 zwei gegen Federkraft angelenkte Schwenkarme 651, 652 auf, die nach Art einer Schwenktür einen Durchgang für das geförderte Geflügelbein 9 bilden. Die Schwenkarme 651, 652 stellen sich zunächst dem Durchlauf des Geflügelbeins 9 entgegen, schwenken dann aber gegen Federkraft und unter Beibehaltung der Anlage an dem Geflügelbein 9 zur Seite, so dass das Geflügelbein 9 gegen eine an der Stelle des Gegenhalte-Positionierelements 65 erzeugte Gegenkraft passiert. Jedes eine vorübergehende Gegenhaltekraft erzeugende Gegenhalte-Positionierelement kann eingesetzt werden.

Jedes mitlaufende Positionierelement 7, 7.2 ist durch ein Kniekehlen-Schiebeelement gebildet, das an der in Förderrichtung F stromaufwärts gelegenen axialen Beinseite 940, nämlich der Beinrückseite 942 in die Kniekehle 95 des Geflügelbeins 9 einfasst. Das Bezugszeichen 7.2 wird im Folgenden auch für das Kniekehlen-Schiebeelement als das mitlaufende Positionierelement verwendet.

Im Ausführungsbeispiel ist das Kniekehlen-Schiebeelement 7.2 ein armartiges Element mit einer Ausnehmung, in der die Kniekehle 95 zu liegen kommt. Die Kniekehlen-Schiebeelemente 7.2 sind zum Beispiel an einem umlaufenden Triebelement 720, zum Beispiel an einem Strang oder einer Kette der Antriebs- und Steuereinrichtung 8.2 in Reihenanordnung befestigt, wobei sie jeweils in Zuordnung zu einem Träger 21 mit Ausrichtung in Förderrichtung F und quer dazu zu liegen kommen.

Die Antriebs- und Steuereinrichtung 8.2 ist allgemein derart eingerichtet, dass das Kniekehlen-Schiebeelement 7.2 beim Eintritt des Geflügelbeins 9 in die Positioniervorrichtung 1.2. aus einer unterhalb der Kniekehle 95 des Geflügelbeins 9 gelegenen Position in die Kniekehle 95 gelangt.

Im Ausführungsbeispiel ist jedes Kniekehlen-Schiebeelement 7.2 über einen Schwenkarm 721 an einer Welle 722 befestigt, die einen zugehörigen Schlitten 723 durchgreift, der an dem Triebelement 720 befestigt ist. Der Schwenkarm 721 ist zwischen zwei Anschlagpositionen hin und her schwenkbar. Die Anschlagpositionen sind durch die Enden eines in den Schwenkarm 721 eingebrachten Schlitzes 724 bestimmt, der durch einen Kreisabschnitt gebildet ist und in den ein Anschlagbolzen 725 einfasst, der an dem Schlitten 723 befestigt ist. Schwenkpositionen des Schwenkarms 721 werden in Abhängigkeit von der Position des Schlittens 721 längs des Förderweges mittels einer nicht dargestellten Drehsteuerung der Welle 722 bewirkt.

Die Drehsteuerung weist zum Beispiel einen an der Welle 722 festen Hebel auf, dessen Schwenkstellung über ein Mitnehmerelement gesteuert wird, das in eine sich längs des Förderweges erstreckende Führungsbahn derart einfasst, dass der Schwenkarm 721 in Abhängigkeit von der Höhenposition des Mitnehmerelements links- bzw. rechtsherum geschwenkt wird. Das Kniekehlen-Schiebeelement 7, 7.2 gelangt bei Zwischenpositionen des Anschlagbolzens 725 innerhalb des Schlitzes 724 in die Kniekehle 95. Mit zunehmend steiler gestellter Position des Schwenkarms 721 wird das Kniekehlen-Schiebeelement 7.2 in die Kniekehle 95 hineingedrängt. Das Maß dieses Versatzes wird durch den Verlauf bzw. die Steigung der Führungsbahn bestimmt.

Wie aus Fig. 6 bis 17 hervorgeht, ist die Beugeeinrichtung 4.2 mit einer Streckenführung 63 ausgestattet. Diese ist durch ein Paar Führungsstangen gebildet, die sich entlang des Beuge-Förderabschnitts 31.2 parallel erstrecken und eine seitliche Führung bilden, an der die geförderten Geflügelbeine 9 im Bereich des dickeren Teils des Unterschenkels lateralseitig zur Anlage kommen. Es handelt sich um eine Hilfsführung, um ein Ausweichen oder Drehen der Geflügelbeine 9 quer zur Förderrichtung F zu verhindern.

Die Träger 21 der Fördereinrichtung 2.2 sind in einheitlicher Höhe so eingerichtet, dass die mitlaufenden Positionierelemente 7.2 am Eingang der Beugeeinrichtung 4.2 in die Kniekehlen 95 der Geflügelbeine 9 gelangen.

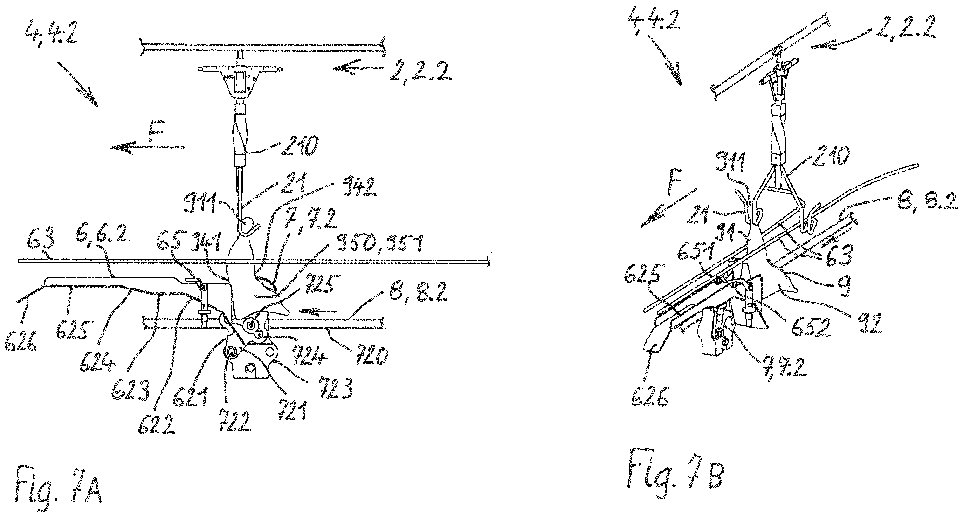

Die Fig. 7 zeigt das linke Geflügelbein 9 am Eingang der Beugeeinrichtung 4.2 in einer noch frei hängenden Position mit in den Träger 21 eingehängtem Fußgelenkkopf 911. In dieser Position hat das Geflügelbein 9 das stationäre Positionierelement 6.2 gerade noch nicht erreicht, und das mitlaufende Positionierelement 7.2 befindet sich in einer Position zeitlich und örtlich kurz vor dem Eingriff in die Kniekehle 95. In dieser Position befindet sich das mitlaufende Positionierelement 7.2 in einer Stellung unterhalb der Kniekehle 95, also in einer entsprechend herabgeschwenkten und dem zugehörigen Träger 21 nacheilenden Position des Schwenkarms 721.

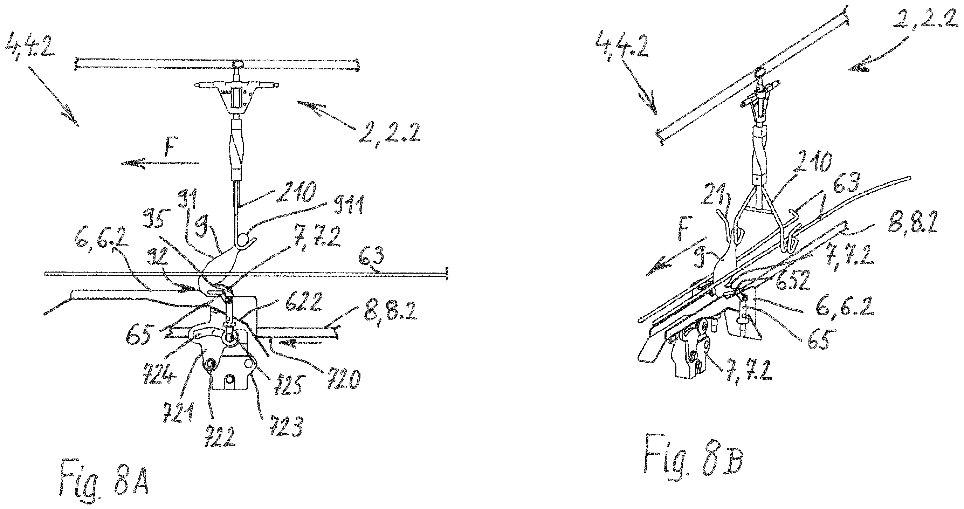

In Fig. 8 ist das linke Geflügelbein 9 in eine Zwischenposition längs der Beugeeinrichtung 4.2 weitergefördert worden. In dieser Position befindet sich das Geflügelbein 9 in in einer ersten Phase gehobener und gebeugter Position. Das Geflügelbein 9 ist in der Position dargestellt, in der sowohl das stationäre Positionierelement 6.2, das stationäre Gegenhalte-Positionierelement 65 und das mitlaufende Positionierelement 7.2 am Geflügelbein 9 angreifen. Das mitlaufende Positionierelement 7.2 ist aus unterer Schwenkposition in eine steile Schwenkposition verschwenkt worden, in der es in die gebeugte Kniekehle 95 eingreift. Das mitlaufende Positionierelement 7.2 befindet sich in Förderrichtung F vorauseilend vor dem Träger 21 bzw. dem Fußgelenkkopf 911. Infolgedessen gelangt das Geflügelbein 9 in eine V-förmige Position, in der die Kniescheibe 94 bzw. die Kniespitze 96 an der geschlossenen Seite der V-Formation in Förderrichtung F vorausgerichtet sind. Dabei läuft der Oberschenkel 92 des Geflügelbeins 9 auf den zweiten Abschnitt 622 des stationären Positionierelements 6.2 auf. Zudem greift das stationäre Gegenhalte-Positionierelement 65 mit seinen beiden Armen 651, 652 etwas unterhalb der Position des mitlaufenden Positionierelements 7.2 an dem Geflügelbein 9 an. Infolgedessen bilden die Arme 651, 652 in der dargestellten Phase eine Gegenanlage unterhalb des Kniegelenks 93 im Bereich desselben. Diese unter federelastischer Rückstellkraft stehende Gegenanlage wird beim Passieren des Gegenhalte-Positionierelements 65 überwunden.

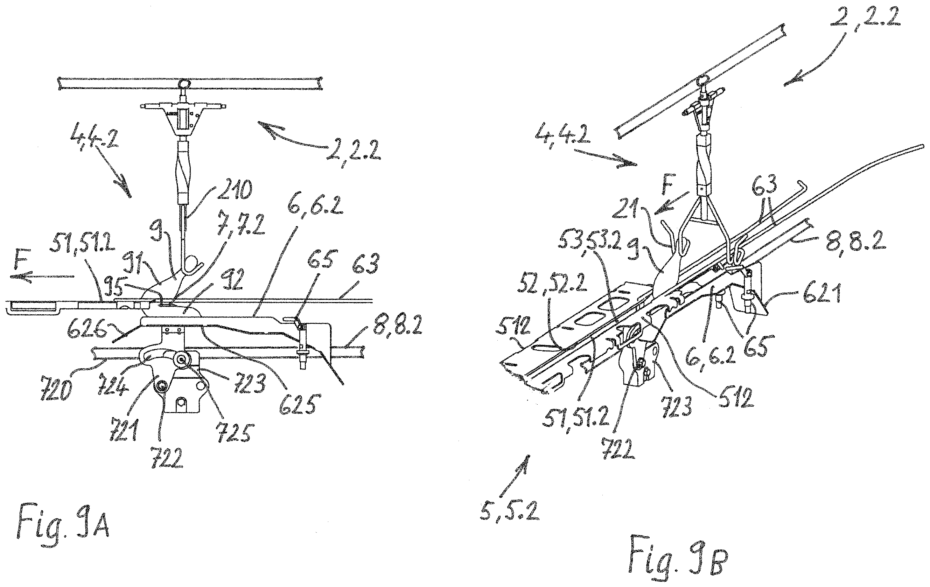

Fig. 9 zeigt eine Position des Geflügelbeins 9, in der es noch weiter mit kleiner gewordenem Beugungswinkel 931 bis in eine maximale Beugungsposition gehoben worden ist. Der Oberschenkel 92 ist auf den oberen Abschnitt 625 des stationären Positionierelements 6.2 aufgelaufen, und das mitlaufende Positionierelement 7.2 ist weiter in die Kniekehle 95 hineingedrängt worden.

In dieser Position tritt das Geflügelbein 9 in Höhe seines Kniegelenks 93 in den Halte- und Führungsspalt 51.2 ein. Dadurch wird das Geflügelbein 9 mit seinem Kniegelenk 93 in den Halte- und Führungsspalt 51.2 eingefädelt und eingehängt. Das Geflügelbein 9 nimmt die genannte, weiter ausgeprägte V-förmig gebeugte Position ein, in der das mitlaufende Positionierelement 7.2 in Förderrichtung F vor dem Träger 21 läuft.

Aus den axonometrischen Darstellungen der Fig. 6 bis 17 ist ersichtlich, dass jeder Träger 21 Bestandteil eines Doppelträgers 210 ist, an dem in Position quer zur Förderrichtung F an dem einen - in Förderrichtung F rechten - Träger das linke Geflügelbein 9 aufgehängt ist. Der andere Träger 21 ist eingerichtet, um das rechte Geflügelbein 9 zu transportieren. Die Positioniervorrichtung 1.2 ist entsprechend mit parallelen Strecken und entsprechenden Mitteln zum Fördern, Positionieren bzw. Bearbeiten auch der rechten Geflügelbeine ausgestattet. Die parallelen Strecken und Elemente für die rechten Geflügelbeine sind in der Zeichnung Fig. 6 bis 17 nicht dargestellt. Die lateralen Seiten der beiden Geflügelbeine (links/rechts) in zugehörigen Förderlinien sind vertauscht. Entsprechend werden auch die genannten Mittel seitlich vertauscht angeordnet. In Fig. 19 sind zwei parallele Linien für beide Geflügelbeine ersichtlich. Prinzipiell ist die Erfindung mit bereits einer Bein-Förderlinie, wie mit Fig. 1 bis 17 beschrieben, realisiert.

Die Fig. 6, 9 bis 17 zeigen die Halte- und Führungseinrichtung 5.2 der Axial-Positioniervorrichtung 1.2.

Der Halte- und Führungsspalt 51.2 weist eine gleichbleibende Breite auf. Dieser Spalt ist zum Einhängen und Gleit-Fördern der Geflügelbeine 9 mit vorausgerichteter Kniescheibe 94 besonders geeignet. Der Halte- und Führungsspalt 51.2 wird zweckmäßig zwischen zwei auf gleicher Höhe angeordneten Platten 512 ausgebildet.

Mittels des in den Halte- und Führungsspalt 51.2 eingehängten Geflügelbeins 9 befindet sich dessen Kniegelenk 93 stets in einer Referenzposition an jeder Stelle längs des Halte- und Führungsspalts 51.2. Das Kniegelenk 93 des axial geförderten Geflügelbeins 9 bildet eine Kniegelenk-Knochenerhebung bzw. eine Beinverdickung, mit der das gleitende Einhängen des Geflügelbeins 9 in den Halte- und Führungsspalt 51.2 erreicht wird. Der Halte- und Führungsspalt 51.2 ist auf die genannte Knochenerhebung angepasst, und zwar derart, dass Geflügelbeine 9 unterschiedlicher Größe gleitbewegbar aufgenommen werden. Ein erster Spaltrand 52.2 und ein zweiter Spaltrand 52.3 bilden Referenz-Halteränder.

Die Axial-Positioniervorrichtung 1.2 ist eine Vorrichtung, die entlang des Halte- und Führungsspalts 51.2 zum Bestücken mit bzw. Anbringen von Bearbeitungswerkzeugen und Bearbeitungsstationen 56 an Bearbeitungsstellen vorgesehen und eingerichtet ist. Im Ausführungsbeispiel ist die Halte- und Führungseinrichtung 5.2 mit zwei stationären Lateral-Schneidestationen 564, 565, einer dritten stationären Schneidestation 566 und einer vierten Schneidestation 567 sowie einer Abziehstation 569 ausgestattet. In der Zeichnung wird die Abziehstation nur an einer Stelle mit dem Bezugszeichen 569 versehen, an der Oberschenkelfleisch 922 vom Oberschenkelknochen 921 abgezogen wird.

Die erste stationäre Lateral-Schneidestation 564 ist durch ein erstes Paar von längs der Förderstrecke 3.2 versetzt angeordneten ersten Lateral-Schneidmitteln 554 gebildet. Diese bringen unterhalb des Halte- und Führungsspalts 51.2 erste Lateralschnitte an den beiden lateralen Beinseiten 950 des Geflügelbeins 9 in Höhe des Kniegelenks 93 mit Schnitttiefe bis zum Knochenknorpel an. Die Lateral-Schneidmittel 554 sind durch Kreismesser gebildet, die jeweils gegen Federkraft ausweichlich an einem Schwenkarm 544 gelagert sind.

Die zweite stationäre Lateral-Schneidestation 565 ist ein Organ der Abziehstation 569, die zum Abziehen des Oberschenkelfleisches 922 von dem Oberschenkelknochen 921 des Geflügelbeins 9 eingerichtet ist. Die zweite stationäre Lateral-Schneidestation 565 weist ein zweites Paar von längs der Förderstrecke 3.2 versetzt angeordneten zweiten Lateral-Schneidmitteln 555 auf, die unter dem Halte- und Führungsspalt 51.2 unterhalb des Kniegelenks 93 zweite Lateralschnitte an den lateralen Beinseiten 950 des Geflügelbeins 9 mit Schnitttiefe bis zum Oberschenkelknochen 921 anbringen. Die Lateral-Schneidmittel 555 sind durch Kreismesser gebildet, die jeweils gegen Federkraft ausweichlich an einem Schwenkarm 545 gelagert sind.

Die Abziehstation 569 weist unterhalb des Halte- und Führungsspalts 51.2 in Reihe geförderte Abziehmittel 559 zum Abziehen bzw. Abschaben des Oberschenkelfleisches 922 von dem Oberschenkelknochen 921 des Geflügelbeins 9 auf. Jedes Abziehmittel 559 läuft mit einem zugeordneten Träger 21 in Förderrichtung F mit. Die Abziehmittel 559 sind derart eingerichtet, dass sie das Oberschenkelfleisch 922 auf dem Oberschenkelknochen 921 bis zu seinem proximalen Ende, dem Hüftgelenkknochen 923 schieben.

Wie aus Fig. 9 ersichtlich, sind im Ausführungsbeispiel das stationäre Positionierelement 6.2 und das mitlaufende Positionierelement 7.2 derart eingerichtet, dass das Positionierelement 6.2 in der Phase des Einhängens vollständig außer Eingriff mit dem Geflügelbein 9 gelangt. Am Ende der Beugeeinrichtung 4.2 endet das stationäre Positionierelement 6.2 mit dem nach unten abgewinkelten Abschnitt 626, so dass das Geflügelbein 9 von dem stationären Positionierelement 6.2 am Eingang der Halte- und Führungseinrichtung 5.2 frei kommt.

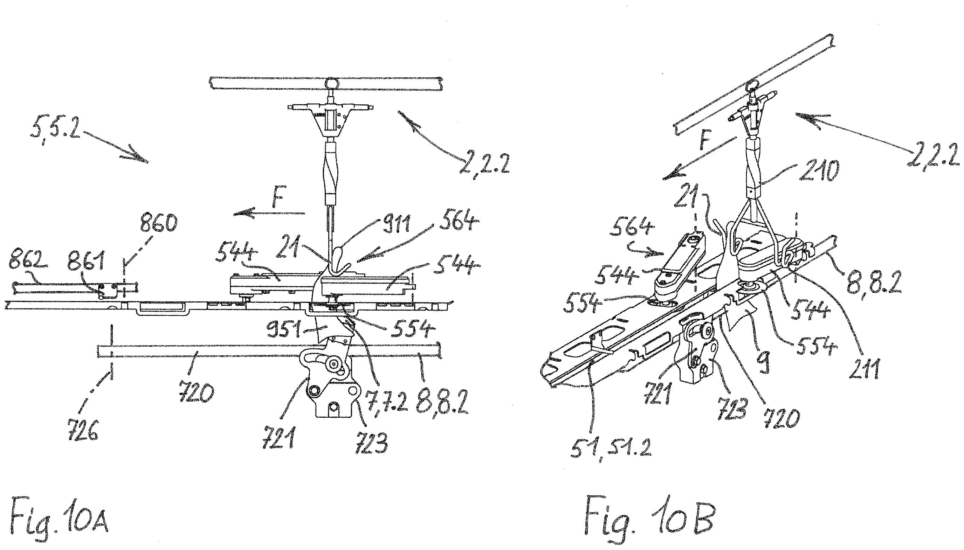

Wie aus Fig. 10 ersichtlich, wird das mitlaufende Positionierelement 7.2 am Anfang der Förderstrecke 3.2 der Halte- und Führungseinrichtung 5.2 wieder in eine zurückgeschwenkte Position gebracht. Die dem Träger 21 voreilende Position des mitlaufenden Positionierelements 7.2 ist beseitigt, und das Geflügelbein 9 gelangt durch Beseitigung der Beugung in eine mehr oder weniger aufrechte Position, wobei das Kniegelenk 93 in den Halte- und Führungsspalt 51.2 eingehängt ist. Daraus resultiert, dass der Fußgelenkkopf 911 des Geflügelbeins 9 in dem Träger 21 nach oben gehoben wird.

Im Ausführungsbeispiel wird der Schwenkarm 721 in eine Zwischenposition geschwenkt, in der das mitlaufende Positionierelement 7, 7.2 an der Beinrückseite 942 unterhalb der Kniekehle 95 im Bereich des Oberschenkels 92 noch eine Stütz- und Haltefunktion zum Transport in Förderrichtung F ausübt. Im Übrigen wird mit dem Träger 21 die Förderung des Geflügelbeins 9 fortgesetzt, wobei Teile des Trägerbügels 211 an dem Geflügelbein 9 angreifen. In dieser Position des Geflügelbeins 9 werden die ersten Lateralschnitte mittels der Lateral-Schneidestation 564 durchgeführt.

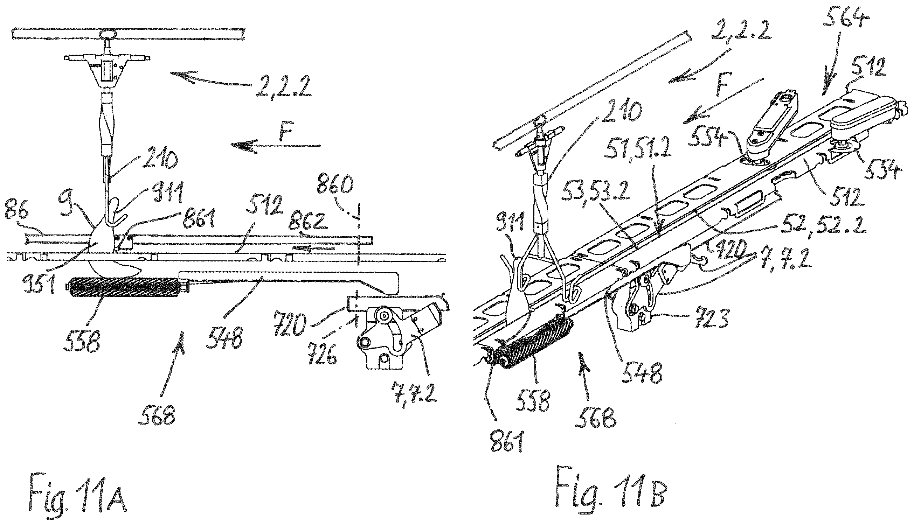

Die Antriebs- und Steuereinrichtung 8.1 ist so eingerichtet und angeordnet, dass die Stütz-/Halteanlage des Positionierelements 7, 7.2 stromabwärts der Lateral-Schneidestation 564 beseitigt wird. Das in einem Umlaufweg geführte Triebelement 720 wird an einer Stelle 726 in Richtung quer zur Förderrichtung F umgelenkt. Wie aus Fig. 11 ersichtlich, wird das Positionierelement 7, 7.2 vor der Umlenk-/Abführstelle durch Herabschwenken in eine tiefe Position vollständig außer Eingriff mit dem Geflügelbein 9 gebracht. Eine solche Positionieränderung des Positionierelements 7, 7.2 kann an jeder gewünschten Stelle längs des Förderabschnitts 32.2 eingerichtet werden.

Wie aus Fig. 6 und 11 hervorgeht, kann an der Halte- und Führungseinrichtung 5.2 zweckmäßig auch eine Enthäutestation 568 angeordnet werden. Diese Station wird vorteilhaft an der Strecke eines Zwischentransports zwischen der ersten stationären Lateral-Schneidestation 564 und der zweiten stationären Lateral-Schneidestation 565 angeordnet.

Die Enthäutestation 568 weist ein Enthäutemittel 558, nämlich, wie an sich bekannt, ein Paar strukturierter Enthäutewalzen auf, die in Förderrichtung F parallel angeordnet sind. Zwischen den beiden Enthäutewalzen, die jeweils mit einer Haut abnehmenden Schraubenwendel versehen sind, ist ein Einzugsspalt ausgebildet. Der Oberschenkel 92 des Geflügelbeins 9 kommt an der Beinvorderseite 941 in gebeugter Lage längs des Walzenpaares auf diesen mittig über dem Walzenspalt zu liegen. Die Beugelage wird mittels einer horizontalen Rampe 548 herbeigeführt. Die Enthäutestation 568 kann vorteilhaft mit einer Höhenverstellung eingerichtet sein, mittels der die Enthäutewalzen je nach Bedarf zum Enthäuten in Enthäuteposition sowie, wenn nicht enthäutet werden soll, in eine unwirksame abgesenkte Position gebracht werden.

Wie nur in Fig. 11A schematisch dargestellt, kann auch im Streckenabschnitt des Enthäutens vorteilhaft jedem Träger 21 ein mitlaufendes Stützelement 861 zugeordnet werden. Die Stützelemente 861 sind Bestandteile einer Antriebs- und Steuereinrichtung 86. Jedes mitlaufende Stützelement 861 ist so angeordnet und geführt, dass es stromaufwärts an dem Unterschenkel 91 des Geflügelbeins 9 oberhalb des Halte- und Führungsspalts angreift. Die Stützelemente 861 sind an einem umlaufenden, getriebenen Strang 862 befestigt. Sie gelangen an einer Umlenkstelle 860 in den Förderweg (Fig. 10A).

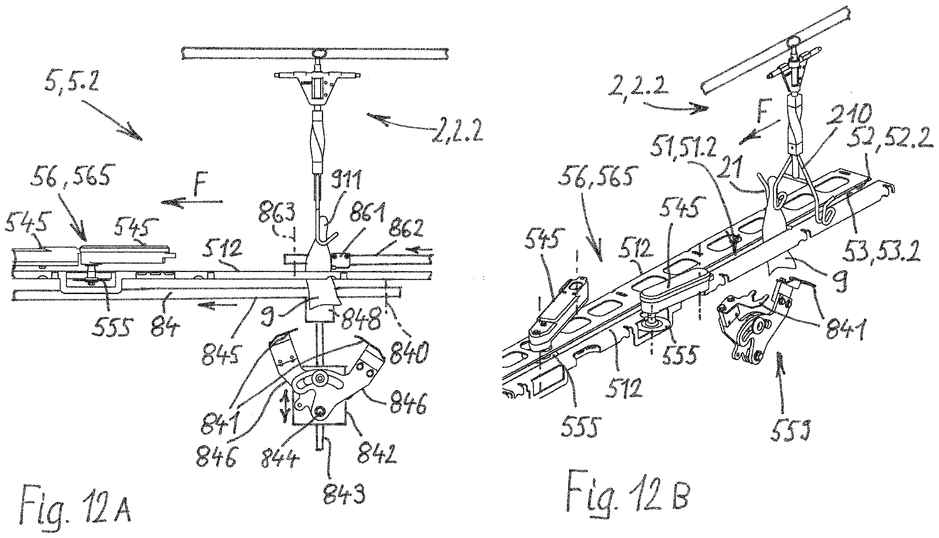

Wie nur in Fig. 12A, 13A, 14A und 15A dargestellt, ist im Ausführungsbeispiel das mitlaufende Abziehmittel 559 in Verbindung mit einer Antriebs- und Steuereinrichtung 84 so eingerichtet, dass es vor dem Anbringen der zweiten Lateralschnitte in der Nähe des Kniegelenks 93 an den Oberschenkel 92 gelangt. Das Abziehmittel 559 wird zum Beispiel durch zwei Greifausnehmungen aufweisende Abzieh- und Greifplatten 841 gebildet, die jeweils an einem Arm 846 befestigt sind. Die Arme 846 sind zangenartig mit Anlenkung um eine Welle 844 an einen zugehörigen Schlitten 842 angelenkt sind, der mit einem Triebmittel, z. B. einer Kette od. dgl. Strang, der Antriebs- und Steuereinrichtung 84 mit zugehörigem Träger 21 mitlaufend bewegt wird. Der Schlitten 842 ist zudem an einer Führungseinrichtung 843, z. B. an einer vertikalen Stange höhenverstellbar gelagert, die an dem Triebmittel 845 mittels eines Schlittens oder eine Platte 848 befestigt ist. Die Abziehmittel 559 sind in Reihe an dem Triebmittel 845 befestigt, das umlaufend (endlos) geführt ist, wobei die Abziehmittel 559 an einer Umlenkstelle 840 in den Förderweg gelangen (Fig. 12A). Die Bewegungs- und Ortssteuerung der Greif- und Abziehplatten 841 erfolgt mittels nicht dargestellter Steuerbahnen der Antriebs- und Steuereinrichtung 84, die den Schlitten 842 und die Arme 846 der Greif- und Abziehplatten 841 in Abhängigkeit von ihrer Position längs des Förderweges führen und bewegen.

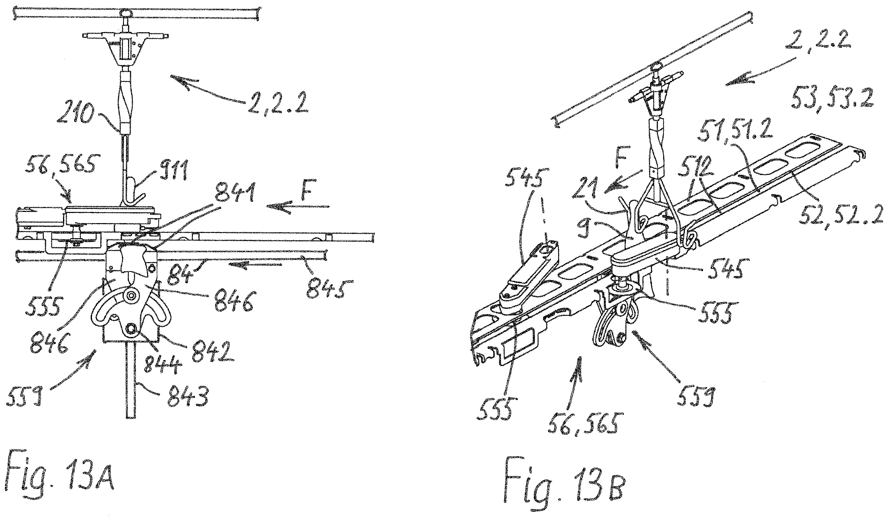

In einer ersten Steuerposition sind die beiden Greif- und Abziehplatten 841 zangenartig geöffnet (Fig. 12A). Sie werden im Streckenabschnitt vor der Lateral-Schneidestation 565 in die Höhe des Geflügelbein-Kniegelenks 93 bewegt, wobei das Geflügelbein 9 im Bereich seines Oberschenkels 92 in der Nähe des Kniegelenks 93 zwischen die beiden Greif- und Abziehplatte 841 gelangt. Wie in Fig. 13 zu sehen, ist die Steuerung dann derart, dass die beiden Greif- und Abziehplatten 841 in eine geschlossene Position gebracht werden, in der das Geflügelbein 9 mit den beiden Greifausnehmungen noch vor Erreichen der zweiten Lateral-Schneidestation 565 zangenartig gegriffen wird. Die beiden Greif- und Abziehplatten 841 bilden in der Schließposition ein mitlaufendes Stütz- und Haltemittel. Die Steuerung des Schlittens 842 und der Zangenarme 846 erfolgt so, dass die zweiten Lateralschnitte mittels der Lateral-Schneidestation 569 in der genannten Schließ- und Ortsposition angebracht werden.

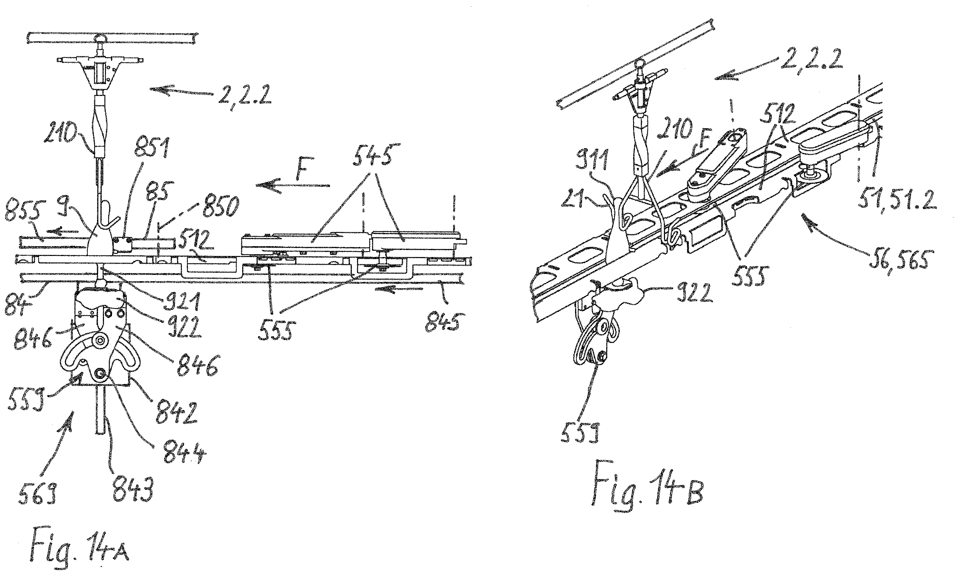

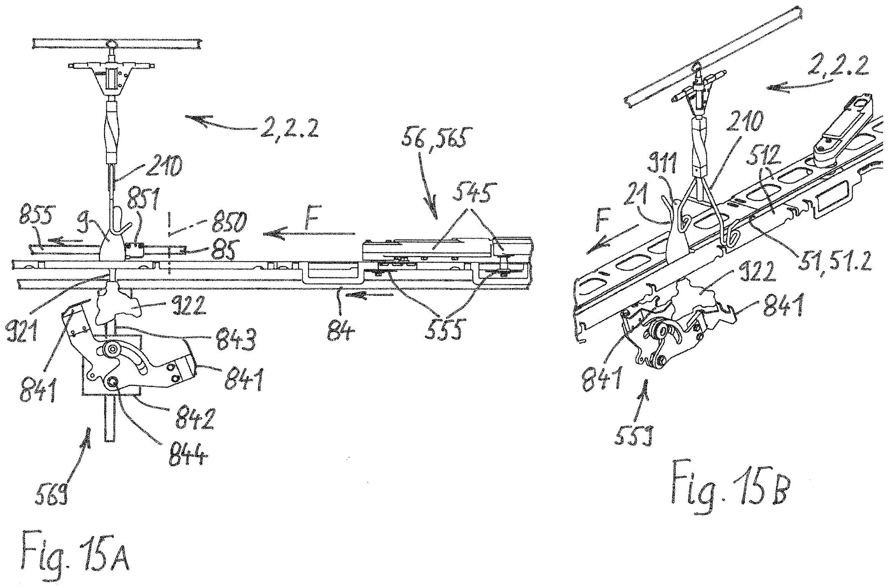

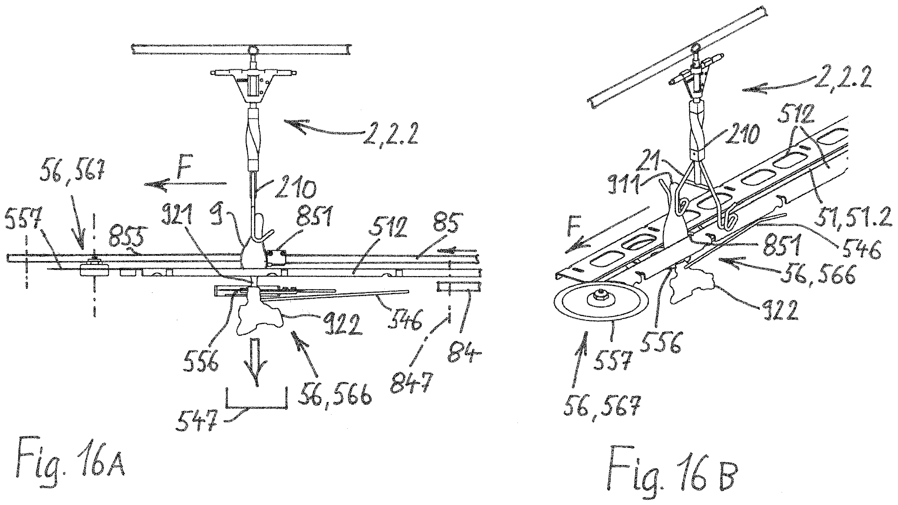

Nach dem Durchführen der zweiten Lateralschnitte wird, wie in Fig. 14 und 15 dargestellt, der Abziehvorgang durchgeführt, indem mittels der Antriebs- und Steuereinrichtung 84 die beiden Greif- und Abziehplatten 841 weiterhin geschlossen gehalten werden und in der Schließstellung der Schlitten 842 mittels der Führungseinrichtung 843 nach unten zum proximalen Ende des Oberschenkels 92 bewegt wird. Die Steuerung ist so eingerichtet, dass die Greif- und Abziehplatten 841 am Ende des Schiebevorgangs geöffnet und an einer Umlenkstelle 847 von dem Geflügelbein-Oberschenkel 92 weggeführt und von dem Förderweg entfernt werden (Fig. 16A). Das Abziehmittel 559 bildet in der Phase, in der die geschlossenen Greif- und Abziehplatten 841 das Oberschenkelfleisch 922 zum proximalen Ende des Oberschenkelknochens 921 schieben, die örtliche Abziehstation 569, an der das abgeschabte Oberschenkelfleisch 922 gewonnen wird.

Zweckmäßig kann, wie im Ausführungsbeispiel in Fig. 14A, 15A, 16A und 17A dargestellt, eine weitere Antriebs- und Steuereinrichtung 85 vorgesehen werden, die hinter (stromabwärts) der zweiten Lateral-Schneidestation 565 bis zum Ende des Halte- und Führungsspalts 51.2 mitlaufende Stützelemente 851 bewegt und führt. Jedes mitlaufende Stützelement 851 ist einem Träger 21 zugeordnet und dabei so angeordnet und geführt, dass es stromaufwärts an dem Unterschenkel 91 des Geflügelbeins 9 oberhalb des Halte- und Führungsspalts 51.2 angreift. Die Stützelemente 851 sind in Reihenanordnung an einem umlaufend (endlos) geführten Triebstrang 855, z. B. einer Kette od. dgl. befestigt. Sie gelangen an einer Umlenkstelle 850 in den Förderweg und verlassen diesen an einer Umlenkstelle 852.

Wie aus Fig. 6, 16 und 17 ersichtlich, ist der Abziehstation 569 die dritte stationäre Schneidestation 566 mit einem Schneidmittel 556 zugeordnet. Das Schneidmittel 556 ist auf Höhe des von Oberschenkelfleisch 922 freigeschobenen Endes des Oberschenkelknochens 921 angeordnet. Mit dieser Einrichtung wird das Oberschenkelfleisch 922 von dem Ende des Oberschenkelknochens 921 abgetrennt, gesammelt und mit einem Mittel 547 abgeführt.

Aus Fig. 6, 16 und 17 geht weiterhin die vierte stationäre Schneidestation 567 mit einem Schneidmittel 557 hervor, das am Ende des Halte- und Führungsspalts 51.2 angeordnet ist und den entfleischten Oberschenkelknochen 921 von dem Unterschenkelfleisch aufweisenden Geflügelbein-Unterschenkel 91 mit einem frontal an der Beinvorderseite 941 angesetzten Schnitt durch das Kniegelenk 93 trennt. Das Frontal-Schneidmittel 557 ist in der Höhe des Halte- und Führungsspalts 51.2 angeordnet.

Im Ausführungsbeispiel sind sämtliche Schneidmittel der Halte- und Führungseinrichtung 5.2 durch Kreismesser gebildet, die an federbelasteten Schwenkarmen stationär gelagert sind. Die Schwenkarme sind an einem Gestell, einem Rahmen oder dergleichen der Halte- und Führungseinrichtung 5.2 angelenkt. Die Ebene eines jeden Kreismessers liegt horizontal oder leicht schräg zur Horizontalausrichtung, so dass jeweils der Schnitt quer zur Axialausrichtung des Geflügelbeins 9 an den beschriebenen Stellen angebracht und durchgeführt wird. Andere Schneidmittel, die die gewünschten Schnitte anbringen, können eingesetzt werden.

Fig. 19 zeigt im Ausführungsbeispiel eine Positioniervorrichtung 10, die die beschriebene Lateral-Positioniervorrichtung 1.1 und die beschriebene Axial-Positioniervorrichtung 1.2 umfasst. Die Förderstrecke 30 der Positioniervorrichtung 10 ist durchgängig mit gerader Förderlinie 200 eingerichtet. Die Lateral-Positioniervorrichtung 1.1 ist in einem ersten Förderabschnitt 301 entlang der Förderstrecke 3.1 stromaufwärts, und die Axial-Positioniervorrichtung 1.2 in einem zweiten Förderabschnitt 303 entlang der Förderstrecke 3.2 nachfolgend stromabwärts angeordnet. Zwischen den beiden Positioniervorrichtungen 1.1 und 1.2 ist eine Dreheinrichtung 15 in einem Förderabschnitt 302 angeordnet. Die Dreheinrichtung 15 ist Bestandteil einer Gesamt-Fördereinrichtung, die die Lateral-Fördereinrichtung 2.1 sowie die Axial-Fördereinrichtung 2.2 aufweist. Wie beschrieben, sind die Lateral-Fördereinrichtung 2.1 und die Axial-Fördereinrichtung 2.2 mit Doppelträgern 210 ausgestattet, die jeweils ein Paar Träger 21 aufweisen, in die jeweils ein linkes und ein rechtes Geflügelbein 9 mit Fußgelenkkopf 911 eingehängt wird. In der Dreheinrichtung 15 werden die Träger 21 aus der Anordnung hintereinander, die zum Querfördern der Geflügelbeine 9 eingerichtet ist, in die Parallelanordnung zum Axialfördern der Geflügelbeine 9 gedreht.

Das erfindungsgemäße Verfahren wird mit Bezug zur beispielhaften Verwendung der beiden Positioniervorrichtungen 1.1 und 1.2 beschrieben. Mittels der aus den beiden Positioniervorrichtungen gebildeten Positioniervorrichtung 10 werden durch definiertes Heben und Halten der Kniegelenke 93 der Gelfügelbeine 9 deren Oberschenkel 92 entbeint bzw. filetiert. Die im Zusammenhang mit den Positioniervorrichtungen 1.1 und 1.2 beschriebenen Bearbeitungen erfolgen entlang der geradlinigen Förderstrecke 30, wobei die Bearbeitungen gezielt den beschriebenen Bearbeitungsstellen zugeordnet und in Abstimmung aufeinander durchgeführt werden.

Die Geflügelbeine 9 werden in Förderrichtung F mit gerader Linie 200 durch die beiden Positioniervorrichtungen 1.1 und 1.2 gefördert. Im Förderabschnitt 301 der Positioniervorrichtung 1.1 werden die Geflügelbeine 9 mit vorauslaufender lateraler Beinseite 950 quer gefördert und nach Drehung jedes Trägers 21 um eine Vertikalachse anschließend im Förderabschnitt 303 der Positioniervorrichtung 1.2 weitergefördert, in dem die Geflügelbeine 9 mit axialer Beinvorderseite 941 voraus gefördert werden.

In dem ersten Förderabschnitt 301 wird jedes in Reihe quer geförderte Geflügelbein 9 mit seinem Kniegelenk 93 in den ersten stationären Halte- und Führungsspalt 51.1 gehängt und dadurch zum Durchführen der beschriebenen Bearbeitungen längs des ersten Bearbeitungs-Förderabschnitts 32.1 in definierte Kniegelenk-Referenzposition gehoben und unter gleitender Anlage des Kniegelenks 93 an den Spalträndern 52.1, 53.1 in Förderrichtung F bewegt, wobei der Fußgelenkkopf 911 zum Heben des Geflügelbeins 9 in dem ihn haltenden Träger 21 frei ausweichlich gehalten wird.

In dem zweiten Förderabschnitt 303 wird jedes in Reihe axial geförderte Geflügelbein 9 mit seinem Kniegelenk 93 in den zweiten stationären Halte- und Führungsspalt 51.2 gehängt und dadurch zum Durchführen der beschriebenen Bearbeitungen längs des zweiten Bearbeitungs-Förderabschnitts 32.2 in definierte Kniegelenk-Referenzposition gehoben und mit Beibehaltung letzterer unter gleitender Anlage des Kniegelenks 93 an den Spalträndern 52.2, 53.2 in Förderrichtung F bewegt, wobei der Fußgelenkkopf 911 zum Heben des Geflügelbeins 9 in dem ihn haltenden Träger 21 frei ausweichlich gehalten wird.

Das Verfahren ist allgemein durch die beschriebenen Bearbeitungen bzw. Verfahrensmaßnahmen mit der Kniegelenk-Referenzpositionierung an dem ersten stationären Halte- und Führungsspalt 51.1 und dem zweiten stationären Halte- und Führungsspalt 51.2 bestimmt, ohne dass es insoweit auf die Gestaltung der Bearbeitungsmittel ankommt. Zur Verfahrensdurchführung kommt es allgemein nur darauf an, dass das jedes Geflügelbein 9 zunächst mittels Querförderung (Lateralförderung) in einen ersten Halte- und Führungsspalt 51 und dann mittels der Axialförderung in einen zweiten stationären Halte- und Führungsspalt 51 eingeführt wird. Zum Durchführen des Verfahrens kann das Einführen in die Halte- und Führungsspalte 51 in jeder geeigneten Weise erfolgen.

Besonders vorteilhaft und zweckmäßig wird jedes axial geförderte Geflügelbein 9 in dem zweiten Förderabschnitt 303 entlang eines Beuge-Förderabschnitts 31.2, der dem stationären Halte- und Führungsspalt 51.2 vorgeordnet ist, zum Einhängen des Geflügelbeins 9 in den stationären Halte- und Führungsspalt 51.2 in Förderrichtung F gebeugt und gehoben, wobei die Beugeposition durch einen dem Kniekehlenwinkel zwischen Oberschenkel 92 und Unterschenkel 91 entsprechenden Beugewinkel 931 bestimmt ist, der während des Hebens kleiner wird. Zum Durchführen dieser Verfahrensschritte werden vorteilhaft die anhand der Axial-Positioniervorrichtung 1.2 beschriebenen Maßnahmen zum Heben und Beugen durchgeführt.

Vorteilhaft und zweckmäßig erfolgt das Einführen der zunächst quer geförderten Geflügelbeine 9 in dem Förderabschnitt 301 entlang eines Beuge-Förderabschnitts 31.1, der dem stationären Halte- und Führungsspalt 51.1 vorgeordnet ist. Jedes quergeförderte Geflügelbein 9 wird zum Einhängen in den ersten stationären Halte- und Führungsspalt 51.1 quer zur Förderrichtung F gebeugt und gehoben, wobei die Beugeposition durch einen dem Kniekehlenwinkel zwischen Oberschenkel 92 und Unterschenkel 91 entsprechenden Beugewinkel 931 bestimmt ist, der während des Hebens kleiner wird. Vorteilhaft werden zum Durchführen dieser Verfahrensschritte die Maßnahmen vorgesehen, die zum Beugen und Heben anhand der Lateral-Positioniervorrichtung 1.1 beschrieben worden sind.

Insbesondere erfolgt wenigstens eine Bearbeitung am zumindest im Wesentlichen ungebeugten, im zugehörigen Halte- und Führungsspalt 51.1 bzw. 51.2 hängenden Geflügelbein 9. Gegebenenfalls wird eine zum Einfädeln erzeugte Beugeposition beseitigt.

Erfindungsgemäß ist auch bereits unabhängig von den anderen Maßnahmen und für sich von besonderer Bedeutung, dass die beschriebenen Verfahrensschritte zum Entbeinen des Geflügelbein-Oberschenkels 92 in der beschriebenen Reihenfolge und Abstimmung aufeinander durchgeführt werden. Insoweit kommt es darauf an, dass zunächst an der Beinvorderseite 941 in Höhe des Kniegelenks 92 ein erster Beinvorderseitenschnitt mit Schnitttiefe bis zum Knorpel und dann an der Beinrückseite 942 in Höhe des Kniegelenks 93 ein Beinrückseiten-Schnitt mit Schnitttiefe bis zum Kniegelenkknochen angebracht werden; dass weiterhin ein Paar erster Lateralschnitte an den lateralen Beinseiten 950 des Geflügelbeins 9 in Höhe des Kniegelenks 93 mit Schnitttiefe bis zum Knochenknorpel und anschließend ein Paar zweiter Lateralschnitte an den lateralen Beinseiten 950 des Geflügelbeins 9 unterhalb des Kniegelenks 93 mit Schnitttiefe bis zum Oberschenkelknochen 921 angebracht werden; und dass nach dem Durchführen der Schnitte das Oberschenkelfleisch 922 auf den Hüftgelenkknochen 923 am proximalen Ende des Oberschenkelknochens 921 geschoben wird. Zweckmäßig wird dann das auf den Hüftgelenkknochen 923 geschobene Oberschenkelfleisch 922 abgetrennt. Weiter vorteilhaft kann das Geflügelbein 9 durchgeschnitten werden, um den entfleischten Oberschenkel 92 von dem Unterschenkel 91 zu trennen.

Weiter vorteilhaft werden die zweiten Lateralschnitte unter dem Kniegelenk 93 bis in den Bereich an der Beinvorderseite 941 geführt.

Dem ersten Vorderseiten-Schnitt nachfolgend kann ein zweiter Vorderseiten-Schnitt unmittelbar unter dem Kniegelenk 93 mit Schnitttiefe bis zum Oberschenkelknochen durchgeführt werden, wobei die genannten zweiten Lateralschnitte auf der gleichen Schnitthöhe am Geflügelbein 9 wie der zweite Vorderseiten-Schnitt angebracht werden. Wie in dem Ausführungsbeispiel gemäß Fig. 1 bis 5 entfällt dann vorteilhaft der zweite Vorderseiten-Schnitt, wenn die zweiten Lateralschnitte bis in den Bereich an der Beinvorderseite 941 geführt werden. Im Bedarfsfall kann der zweite Vorderseiten-Schnitt, wie in Fig. 19 schematisch dargestellt, mittels einer zweiten Vorderseiten-Schneidestation 562 durchgeführt werden, die zwischen den Stationen 561 und 563 der Lateral-Positioniervorrichtung 1.1 angeordnet wird.

## Patentansprüche

1. Positioniervorrichtung (1), eingerichtet zum Positionieren von in Förderrichtung (F) längs einer Förderstrecke (3) in Reihe geförderten Geflügelbeinen (9) in eine Bearbeitungsposition, die eine Referenzposition zum Bearbeiten der Geflügelbeine (9) darstellt, wobei Unterschenkel (91) und Oberschenkel (92) der Geflügelbeine (9) über das Kniegelenk (93) aneinander angelenkt sind und wobei die eine axiale Beinseite (940), an der sich die Kniescheibe (94) befindet, die Beinvorderseite (941) sowie die andere axiale Beinseite (940), an der sich die Kniekehle (95) befindet, die Beinrückseite (942) bestimmen, umfassend
- eine Fördereinrichtung (2) mit entlang der Förderstrecke (3) in Förderrichtung (F) bewegbaren Trägern (21), die die Geflügelbeine (9) mit jeweils in einen zugehörigen genannten Träger (21) einfassendem Fußgelenkkopf (911) längs der gesamten Fördertrecke (3) der Positioniervorrichtung (1) fördern und halten, wobei die Träger (21) die Geflügelbeine (9) beim Einfördern in der Positioniereinrichtung (1) hängend halten,
- eine Beugeeinrichtung (4) mit einem sich in einem Beuge-Förderabschnitt (31) der Förderstrecke (3) erstreckenden stationären Positionierelement (6) und einer Reihe von mitlaufenden Positionierelementen (7), die jeweils in Zuordnung zu einem zugehörigen genannten Träger (21) in Förderrichtung (F) mitlaufen, wobei jeweils ein mitlaufendes Positionierelement (7) mit dem stationären Positionierelement (6) ein Paar von Positionierelementen bildet, von denen ein erstes Positionierelernent (6.1; 7.2) zum Eingriff in die Kniekehle (95) des Geflügelbeins (9) sowie ein zweites Positionierelement (6.2; 7.1) zur Anlage an den Oberschenkel (92) an der Beinvorderseite (941) eingerichtet ist, und wobei in dem Beuge-Förderabschnitt (31) der Förderstrecke (3) das erste Positionierelement (6.1; 7.2) und das zweite Positionierelement (6.2; 7.1) im Paar zwischen sich einen dem Kniekehlenwinkel entsprechenden Beugewinkel (931) erzeugen und bestimmen, der sich unter Hebung des Geflügelbeins (9) aus hängender Ausgangsposition bis zum Erreichen der genannten Referenzposition verringert und entsprechende Beugepositionen des Geflügelbeins (9) zur Folge hat, wobei die Träger (21) der Fördereinrichtung (2) derart eingerichtet sind, dass der Fußgelenkkopf (911) in dem Träger (21) entsprechend dem Heben des Geflügelbeins (9) ausweichen kann und
- einen sich in der Förderstrecke (3) erstreckenden Referenz-Halterand, an dem das Geflügelbein (9) im Bereich des Kniegelenks in definierter Hebeposition, nämlich in der Referenzposition, gehalten wird,
**dadurch gekennzeichnet,**
- **dass** die Positioniervorrichtung (1) eine dem Beuge-Förderabschnitt (31) in Förderrichtung (F) nachgeordnete stationäre Halte- und Führungseinrichtung (5) aufweist, die jedes Geflügelbein (9) während des Förderns längs eines Bearbeitungs-Förderabschnitts (32) der Förderstrecke (3) in Referenzposition zum Bearbeiten bereithält, wobei die Halte- und Führungseinrichtung (5) über die Länge des Bearbeitungs-Förderabschnitts (32) mit einem sich in der Förderstrecke (3) erstreckenden stationären Halte- und Führungsspalt (51) mit stationären Spalträndern (52, 53) ausgestattet ist, die das Geflügelbein (9) im Bereich des Kniegelenks (93) zum Halten und Führen in Referenzposition aufnehmen und wobei der genannte Referenz-Halterand wenigstens teilweise einen genannten stationären Spaltrand (52) bildet,
- **dass** der Beuge-Förderabschnitt (31) längs der Förderstrecke (3) und der Bearbeitungs-Förderabschnitt (32) längs der Förderstrecke (3) geradlinig sind, und
- **dass** die genannte Beugeeinrichtung (4) eine Einfädeleinrichtung zum Einfädeln des Geflügelbeins (9) im Bereich des Kniegelenks (93) in den Halte- und Führungsspalt (51) bildet, wobei die mitlaufenden Positionierelemente (7) durch angetriebene Andrückelemente gebildet sind und eine Antriebs- und Steuereinrichtung (8) eingerichtet ist, die jedes angetriebene Andrückelement in Förderrichtung sowie zum Beugen zweidimensional in Heberichtung und quer dazu in eine Richtung bewegt, in der das angetriebene Andrückelement das Geflügelbein (9) an einer der genannten axialen Beinseiten (940) zum Heben und Beugen untergreift.

2. Vorrichtung nach einem der Anspruch 1, **dadurch gekennzeichnet, dass** die Antriebs- und Steuereinrichtung (8) der mitlaufenden Positionierelemente (7) derart eingerichtet ist, dass in wenigstens einem Abschnitt des Bearbeitungs-Förderabschnitts (32) des Halte- und Führungsspalts (51) der Eingriff des mitlaufenden Positionierelements (7) in das Geflügelbein (9) wenigstens verringert wird.

3. Vorrichtung nach Anspruch 1 oder 2, **dadurch gekennzeichnet, dass** die Antriebs- und Steuereinrichtung (8) der mitlaufenden Positionierelemente (7) zum Bewegen jedes mitlaufenden Positionierelements (7) wenigstens eine Schwenkbewegung und wenigstens eine lineare Bewegung erzeugt, wobei sich die Bewegungen zum Bewegen des mitlaufenden Positionierelements (7) überlagern.

4. Vorrichtung nach einem der Ansprüche 1 bis 3, **dadurch gekennzeichnet, dass** an dem Bearbeitungs-Förderabschnitt (32) der Halte- und Führungseinrichtung (5) wenigstens zwei Bearbeitungsstellen vorgesehen sind, die an der Förderstrecke (3) einander gegenüberliegend angeordnet sind.

5. Vorrichtung nach Anspruch 4, **dadurch gekennzeichnet, dass** wenigstens zwei der einander gegenüberliegenden Bearbeitungsstellen längs der Förderstrecke (3) versetzt angeordnet ist.

6. Vorrichtung nach einem der Ansprüche 1 bis 5, **dadurch gekenn**- **zeichnet,** dass die Positioniervorrichtung (1) in wenigstens einem Teil des Bearbeitungs-Förderabschnitts (32) der Halte- und Führungseinrichtung (5) erste Stützelemente (851, 861) aufweist, die mit den Trägern (21) mitlaufen und oberhalb des Halte- und Führungsspalts (51) an den Geflügelbeinen (9) zur Anlage kommen.

7. Vorrichtung nach einem der Ansprüche 1 bis 6, **dadurch gekennzeichnet, dass** die Positioniereinrichtung (1) in wenigstens einem Teil des Bearbeitungs-Förderabschnitts (32) der Halte- und Führungseinrichtung (5) zweite Stützelemente (702, 811, 841) aufweist, die mit den Trägern (21) mitlaufen und unterhalb des Halte- und Führungsspalts (51) an den Geflügelbeinen (9) anliegen.

8. Vorrichtung nach einem der Ansprüche 1 bis 7, **dadurch gekennzeichnet, dass** die Fördereinrichtung (2) derart eingerichtet ist, dass in wenigstens einem Teil des Bearbeitungs-Förderabschnitts (32) der Halte- und Führungseinrichtung (5) ausschließlich die Träger (21) ein die Geflügelbeine (9) entlang des Halte- und Führungsspalts (51) bewegendes Fördermittel bilden.

9. Positioniervorrichtung (1.2) nach einem der Ansprüche 1 bis 8, **dadurch gekennzeichnet,**
- **dass** die Fördereinrichtung (2.2) zur Axialförderung der Geflügelbeine (9) derart angeordnet und eingerichtet ist, dass die Träger (21) die Geflügelbeine (9) mit der axialen Beinseite (940), an der sich die Kniescheibe (94) befindet, mit der Kniescheibe (94) voraus axial, nämlich in einer den Achsen von Oberschenkelknochen (921) und Unterschenkelknochen (924) gemeinsamen Axialebene (90), fördern,
- **dass** in jedem Paar der Positionierelemente das genannte erste Positionierelement, das zum Eingriff in die Kniekehle (95) des Geflügelbeins (9) eingerichtet ist, als das mitlaufende Positionierelement (7.2) der Reihe von mitlaufenden Positionierelementen ausgebildet ist und das genannte zweite Positionierelement, das zur Anlage an den Oberschenkel (92) an der Beinvorderseite (941) eingerichtet ist, durch das stationäre Positionierelement (6.2) gebildet ist, und
- **dass** der stationäre Halte- und Führungsspalt (51.2) der Halte- und Führungseinrichtung (5.2) durch einen Knieknochen-Führungsspalt mit einer Spaltbreite gebildet ist, die auf Knochenerhebungen des mit der Kniescheibe (94) voraus geförderten Kniegelenks (93) derart angepasst ist, dass das Geflügelbein (9) an definierter Stelle der Kniegelenk-Knochenerhebungen über diese in den Knieknochen-Spalt eingehängt und an dessen Spalträndern (52.2, 53.2) in Förderrichtung (F) gleitend geführt wird,
- wobei die im Paar beim Beugen und Heben zusammenwirkenden Positionierelemente (6.2, 7.2) zum Einfädeln und zum Einhängen des Geflügelbeins (9) mit Kniescheibe (94) voraus, in den Knieknochen-Führungsspalt eingerichtet sind.

10. Vorrichtung nach Anspruch 9, **dadurch gekennzeichnet, dass** das stationäre Positionierungselement (6.2) so angeordnet und eingerichtet ist, dass am Anfang des Knieknochen-Führungsspalts die Anlage des stationären Positionierungselements (6.2) an den Oberschenkel (92) des Geflügelbeins (9) entfällt.

11. Vorrichtung nach Anspruch 9 oder 10, **dadurch gekennzeichnet, dass** das stationäre Positionierelement (6.2) durch eine stationäre Rampe der Einfädeleinrichtung mit in Förderrichtung (F) wenigstens teilweise nach oben gerichteter Rampenführung gebildet ist, so dass der Oberschenkel (92) an der Beinvorderseite (941) des Geflügelbeins (9) auf einen tiefen Führungsabschnitt (621) der Rampe aufläuft und diese über einen höher gelegenen Führungsabschnitt (625) verlässt.

12. Vorrichtung nach Anspruch 11, **dadurch gekennzeichnet, dass** die Rampenführung in Förderrichtung in wenigstens zwei das Geflügelbein (9) beugende Führungsabschnitte (621-625) unterteilt ist, wobei ein oberer Führungsabschnitt (625), der der Halte- und Führungseinrichtung (5.2) am nächsten gelegen ist, flach verläuft.

13. Vorrichtung nach einem der Ansprüche 9 bis 12, **dadurch gekenn**- **zeichnet**, dass jedes mitlaufende Positionierelement (7.2) durch ein in die Kniekehle (95) einfassendes Kniekehlen-Schiebeelement gebildet ist, wobei die Antriebs- und Steuereinrichtung (8.2) derart eingerichtet ist, dass das Kniekehlen-Schiebeelement nach dem Eintritt des Geflügelbeins (9) in die Positioniervorrichtung (1.2) in die Kniekehle (95) des Geflügelbeins (9) gedrängt und anschließend in Anpassung auf die durch das stationäre Positionierelement (6.2) bewirkte Bewegung des Geflügelbeins (9) mit fortgesetztem Eingriff in die Kniekehle (95) so bewegt und geführt wird, dass das Kniekehlen-Schiebeelement dem Träger (21), an dem das Geflügelbein (9) hängt, beim Schieben und zunehmenden Beugen des Geflügelbeins (9) vorauseilt.

14. Vorrichtung nach Anspruch 13, **dadurch gekennzeichnet, dass** die Antriebs- und Steuereinrichtung (8.2) derart eingerichtet ist, dass das Kniekehlen-Schiebeelement beim Eintritt des Geflügelbeins (9) in die Positioniervorrichtung (1.2) aus einer unterhalb der Kniekehle (95) des Geflügelbeins (9) gelegenen Position in die Kniekehle (95) gelangt.

15. Vorrichtung nach Anspruch 13 oder 14, **dadurch gekennzeichnet, dass** die Antriebs- und Steuereinrichtung (8.2) derart eingerichtet ist, dass das Kniekehlen-Schiebeelement im Bereich der Halte- und Führungseinrichtung (5.2) unterhalb des Kniekochen-Führungsspalts zu liegen kommt und dort soweit gegen die Förderrichtung (F) zurückbleibt, dass die mit dem Kniekehlen-Schiebeelement bewirkte Beugeposition des Geflügelbeins (9) verringert oder beseitigt ist.

16. Vorrichtung nach einem der Ansprüche 9 bis 15, **dadurch gekenn**- **z e i c h n e t ,** dass die Positioniervorrichtung (1.2) wenigstens ein stationäres Gegenhalte-Positionierelement (65) aufweist, das zusammen mit dem zweiten, nämlich dem stationären Positionierelement (6.2) an der Beinvorderseite (941) angreift.

17. Vorrichtung nach einem der Ansprüche 9 bis 16, **dadurch gekennzeichnet, dass** an dem Bearbeitungs-Förderabschnitt (32.2) der Halte- und Führungseinrichtung (5.2) eine erste stationäre Lateral-Schneidestation (564) angeordnet ist, die durch ein erstes Paar von längs der Förderstrecke (3.2) versetzt angeordneten ersten Lateral-Schneidmitteln (554) gebildet ist, die unterhalb des Halte- und Führungsspalts (51.2) erste Lateralschnitte an beiden lateralen Beinseiten (950) des Gelfügelbeins (9) in Höhe des Kniegelenks (93) mit Schnitttiefe bis zum Knochenknorpel anbringen.

18. Vorrichtung nach Anspruch 17, **dadurch gekennzeichnet, dass** an dem Bearbeitungs-Förderabschnitt (32.2) der Halte- und Führungseinrichtung (5.2), der ersten Lateral-Schneidestation (564) nachfolgend, eine Abziehstation (569) zum Abziehen des Oberschenkelfleisches von dem Oberschenkelknochen angeordnet ist, wobei die Abziehstation (569) eine zweite stationäre Lateral-Schneidestation (565) mit einem zweiten Paar von längs der Förderstrecke (3.2) versetzt angeordneten zweiten Lateral-Schneidmitteln (555) sowie in Förderrichtung (F) mitlaufende Abziehmittel (559) zum Abziehen des Oberschenkelfleisches von dem Oberschenkelknochen des Geflügelbeins (9) umfassen, wobei die zweiten Lateral-Schneidmittel (555) unter dem Halte- und Führungsspalt (51.2) unterhalb des Kniegelenks (93) zweite Lateralschnitte an den beiden lateralen Beinseiten (950) des Geflügelbeins (9) mit Schnitttiefe bis zum Oberschenkelknochen anbringen und jedes Abziehmittel (559) das Oberschenkelfleisch bis zum proximalen Ende des Oberschenkelknochens (921) schiebt.

19. Vorrichtung nach Anspruch 18, **dadurch gekennzeichnet, dass** die Abziehstation (569) so eingerichtet ist, dass das mitlaufende Abziehmittel (559) ein Stütz- und Haltemittel bildet, das vor dem Anbringen der zweiten Lateralschnitte zur Anlage an den Oberschenkel (92) in der Nähe des Kniegelenks (93) gelangt.

20. Vorrichtung nach Anspruch 18 oder 19, **dadurch gekennzeichnet, dass** der Abziehstation (569) eine dritte stationäre Schneidestation (566) mit Schneidmittel (556) nachgeordnet ist, die das Oberschenkelfleisch (922) am proximalen Ende des Oberschenkelknochens (921) von diesem abtrennt.

21. Vorrichtung nach Anspruch 20, **dadurch gekennzeichnet, dass** eine vierte stationäre Schneidstation (567) mit Schneidmittel (557) eingerichtet ist, das den Unterschenkelfleisch aufweisenden Geflügelbein-Unterschenkel (91) von dem entfleischten Oberschenkelknochen (921) mit einem Schnitt durch das Kniegelenk (93) trennt.

22. Positioniervorrichtung (1.1) nach einem der Ansprüche 1 bis 8, **dadurch gekennzeichnet,**
- **dass** die Fördereinrichtung (2.1) zur Lateralförderung der Geflügelbeine (9) derart angeordnet und eingerichtet ist, dass die Träger (21) die Geflügelbeine (9) quer fördern, wobei eine der beiden lateralen Beinseiten (950) vorausläuft,
- **dass** das genannte erste Positionierelement, das zum Eingriff in die Kniekehle (95) eingerichtet ist, das stationäre Positionierelement (6.1) ist, das durch einen Positionierrand gebildet ist,
- **dass** das genannte zweite Positionierelement, das zur Anlage an den Oberschenkel (92) an der Beinvorderseite (941) eingerichtet ist, als das im Paar mit dem stationären Positionierelement (6.1) zusammenwirkende mitlaufende Positionierelement (7.1) der Reihe von mitlaufenden Positionierelementen eingerichtet ist,
- **dass** der stationäre Halte- und Führungsspalt (51.1) der Halte- und Führungseinrichtung (5.1) durch einen Knieknochen-Führungsspalt mit einer Spaltbreite ausgebildet ist, die auf Knieknochenerhebungen des Kniegelenks (93) des quer geförderten Geflügelbeins (9) derart angepasst ist, dass das quer geförderte Geflügelbein (9) an definierter Stelle der Kniegelenk-Knochenerhebungen über diese in den Knieknochen-Führungsspalt eingehängt und an dessen Spalträndern (52.1, 53.1) in Förderrichtung (F) gleitend geführt wird,
- wobei die im Paar beim Beugen und Heben zusammenwirkenden Positionierelemente (6.1, 7.1) zum Einfädeln und Einhängen des quer geförderten Geflügelbeins (9) in den Knieknochen-Führungsspalt eingerichtet sind,
- wobei der genannte Referenz-Halterand entlang der Förderstrecke (3.1) der Positioniervorrichtung (1.1) in zwei Referenz-Halterandteile unterteilt ist, nämlich in einen ersten Referenz-Halterandteil, der Bestandteil des genannten Beuge-Förderabschnitts (31.1) ist und dort den stationären Positionierrand bildet, sowie einen anschließenden zweiten Referenz-Halterandteil, der den einen Spaltrand (52.1) des Knieknochen-Führungsspalts der Halte- und Führungseinrichtung (5.1) bildet.

23. Vorrichtung nach Anspruch 22, **dadurch gekennzeichnet, dass** die Antriebs- und Steuereinrichtung (8.1) des mitlaufenden Positionierelements (7.1) so eingerichtet ist, dass das mitlaufende Positionierelement (7.1) in wenigstens einem Abschnitt des Bearbeitungs-Förderabschnitts (32.1) der Halte- und Führungseinrichtung (5.1) außer Eingriff mit dem Geflügelbein (9) gelangt.

24. Vorrichtung nach Anspruch 22 oder 23, **dadurch gekennzeichnet, dass** die Lateral-Positioniervorrichtung (1.1) mit in Förderrichtung (F) mitlaufenden lateralen Schiebeelementen (811) ausgestattet ist, die den mitlaufenden Positionierelementen (7.1) zugeordnet und so eingerichtet sind, dass jeweils im Paar das mitlaufende Positionierelement (7.1) und das mitlaufende laterale Schiebeelement (811) eine mitlaufende Andrück- und Stützhalterung bilden, wobei das mitlaufende Schiebeelement (811) im Bereich des Geflügelbein-Oberschenkels (92) an der in Förderrichtung (F) stromaufwärts gelegenen lateralen Beinseite (950) in Schiebeanlage angreift und das mitlaufende Positionierelement (7.1) quer zur Förderrichtung (F) die Bewegungen zum Heben und zunehmenden Beugen des Geflügelbeins (9) ausführt.

25. Vorrichtung nach Anspruch 24, **dadurch gekennzeichnet, dass** die Lateral-Positioniervorrichtung (1.1) so eingerichtet ist, dass das mitlaufende laterale Schiebeelement (811) die Schiebeanlage an der genannten lateralen Beinseite (950) des Geflügelbeins (9) wenigstens längs einer Teilstrecke des Halte- und Führungsspalts (51.1) beibehält.

26. Vorrichtung nach einem der Ansprüche 22 bis 25, **dadurch gekennzeichnet, dass** das mitlaufende Positionierelement (7.1) als armartiges Element mit zwei Armteilen ausgebildet ist, nämlich mit einem ersten Armteil (701), der im Wesentlichen an der Beinvorderseite (941) unter Bewegung quer zur Förderrichtung (F) angreift, sowie einem zweiten Armteil (702), der im Wesentlichen an in Förderrichtung (F) stromabwärts gelegener lateraler Beinseite (950) an dem Oberschenkel (92) zu dessen Stützung anliegt.

27. Vorrichtung nach einem der Ansprüche 22 bis 26, **dadurch gekennzeichnet, dass** die Positioniervorrichtung (1.1) eine sich in einem Eingangsabschnitt der Förderstrecke (3.1) erstreckende stationäre Eingangs-Positionierführung (61) aufweist, die dem mitlaufenden Positionierelement (7.1) zugeordnet ist, gegen die die Beinvorderseite (941) im Bereich des Oberschenkels (92) gelangt und die das Geflügelbein (9) quer zur Förderrichtung (F) gegen das stationäre Positionierelement (6.1) führt, bevor das mitlaufende Positionierelement (7.1) zur Anlage an das Geflügelbein (9) gelangt.

28. Vorrichtung nach einem der Ansprüche 22 bis 27, **dadurch gekennzeichnet, dass** das stationäre Positionierelement (6.1) längs eines eingangsseitigen Teils des Beuge-Förderabschnitts (31.1) der Positioniervorrichtung (1.1) mit einem im Querschnitt keilförmigen Rand (60) ausgebildet ist, dessen Querschnitt auf eine Kehlung zwischen Unterschenkel (91) und Oberschenkel (92) angepasst ist, die beim Eintritt des Geflügelbeins (9) in die Positioniervorrichtung (1.1) vorhanden ist.

29. Vorrichtung nach einem der Ansprüche 22 bis 28, **dadurch gekennzeichnet, dass** die Träger (21) als drehbare Träger ausgebildet sind, die jeweils um eine vertikale Achse in eine Position drehbar sind, in der sich die Geflügelbeine (9) zum axialen Weiterfördern mit Kniescheibe (94) voraus befinden.

30. Vorrichtung nach einem der Ansprüche 22 bis 29, **dadurch gekennzeichnet, dass** an dem Bearbeitungs-Förderabschnitt (32.1) der Halte- und Führungseinrichtung (5.1) eine erste stationäre Vorderseiten-Schneidestation (561) angeordnet ist, die ein oberhalb des Halte- und Führungsspalts (51.1) arbeitendes Schneidmittel (551) aufweist, das an der Beinvorderseite (941) in Höhe des Kniegelenks (93) einen Schnitt mit Schnitttiefe bis zum Knorpel anbringt.

31. Vorrichtung nach Anspruch 30, **dadurch gekennzeichnet, dass** die erste Vorderseiten-Schneidestation (561) in einem eingangsseitigen Teil-Förderabschnitt der Halte- und Führungseinrichtung (5.1) angeordnet ist, in dem sich das mitlaufende Positionierelement (7.1) in einer Andrückposition zum Beugen des Geflügelbeins (9) befindet.

32. Vorrichtung nach Anspruch 30 oder 31, **dadurch gekennzeichnet, dass** an dem Bearbeitungs-Förderabschnitt (32.1) der Halte- und Führungseinrichtung (5.1) eine zweite stationäre Vorderseiten-Schneidestation (562) angeordnet ist, die ein unterhalb des Halte- und Führungsspalts (51.1) arbeitendes Schneidmittel (552) aufweist, das an der Beinvorderseite (941) unmittelbar unter dem Kniegelenk (93) einen Schnitt mit Schnitttiefe bis zum Oberschenkelknochen (921) anbringt.

33. Vorrichtung nach einem der Ansprüche 30 bis 32, **dadurch gekennzeichnet, dass** an dem Bearbeitungs-Förderabschnitt (32.1) der Halte- und Führungseinrichtung (5.1) eine stationäre Rückseiten-Schneidestation (563) angeordnet ist, die ein oberhalb des Halte- und Führungsspalts (51.1) arbeitendes Schneidmittel (553) aufweist, das an der Beinrückseite (942) in Höhe des Kniegelenks (93) einen Schnitt mit Schnitttiefe bis zum Kniegelenkknochen anbringt.

34. Vorrichtung nach Anspruch 33, **dadurch gekennzeichnet, dass** die Rückseiten-Schneidestation (563) in einem ausgangsseitigen Förderabschnitt der Halte- und Führungseinrichtung (5.1) angeordnet ist, in dem sich das mitlaufende Positionierelement (7.1) zum Beseitigen der Beugeposition des Geflügelbeins (9) außer Eingriff mit dem Geflügelbein (9) befindet.

35. Positioniervorrichtung, **dadurch gekennzeichnet, dass** längs einer Förderstrecke (30) eine erste Positioniervorrichtung, die eine eine Lateral-Positioniervorrichtung (1.1) bildende Positioniervorrichtung nach einem der Ansprüche 22 bis 34 ist, sowie eine nachfolgende zweite Positioniervorrichtung, die eine eine Axial-Positioniervorrichtung (1.2) bildende Positioniervorrichtung nach einem der Ansprüche 9 bis 21 ist, und zwischen der ersten Positioniervorrichtung (1.1) und der zweiten Positioniervorrichtung (1.2) eine Drehstation (15) angeordnet sind, wobei die Drehstation (15) mit drehbaren Trägern eingerichtet ist, die die Träger (21) bilden, die die Geflügelbeine (9) entlang der Förderstrecken (3.1, 3.2) der beiden Positioniervorrichtungen (1.1, 1.2) fördern, wobei die Träger (21) aus der Position der Lateralförderung in die Position der Axialförderung drehbar sind.

36. Verfahren zum während Förderung durchgeführten Entfernen des Oberschenkelfleisches von in Reihe in Förderrichtung (F) geförderten Geflügelbeinen (9), deren Unterschenkel (91) und Oberschenkel (92) jeweils über das Kniegelenk (93) aneinander angelenkt sind und die sich mit in eine Trageinrichtung einfassenden Fußgelenkköpfen (911) in hängender Anordnung befinden, wobei das Geflügelbein (9) durch definiertes Heben und Halten des Kniegelenks (93) positioniert wird, im Bereich des Knies des Geflügelbeins (9) Schnitte in das Geflügelbeinfleisch bis zum Knochen angebracht werden und das Oberschenkelfleisch vom definiert positionierten Kniegelenk (93) zum Hüftgelenkknochen (923) geschoben wird, **dadurch gekennzeichnet,**
- **dass** die Geflügelbeine (9) während sämtlicher zur Positionierung und Bearbeitung automatisch durchgeführter Manipulationen mit geradliniger Förderrichtung (F) gefördert werden, wobei die Geflügelbeine (9) mit entlang geradliniger Förderstrecke bewegbaren Trägern (21) gefördert werden, die die Geflügelbeine (9) mittels ihres Fußgelenkkopfes (911) jeweils zugehörig zu einem Träger (21) während der gesamten Förderung halten,
- **dass** die Geflügelbeine (9) mit jeweils geradliniger Förderstrecke in zwei Förderabschnitten gefördert werden, nämlich in einem ersten Förderabschnitt (301), in dem die Geflügelbeine (9) mit vorauslaufender lateraler Beinseite (950) quer gefördert werden, sowie nach Drehung jedes Trägers (21) um eine Vertikalachse in einem zweiten Förderabschnitt (303), in dem die Geflügelbeine (9) mit vorauslaufender axialer Beinseite (940), an der sich die Kniescheibe (94) befindet, axial, nämlich in einer den Achsen des Oberschenkelknochens (921) und des Unterschenkelknochens (924) gemeinsamen Axialebene (90), mit Kniescheibe (94) voraus gefördert werden,
- **dass** in dem ersten Förderabschnitt (301) die quer geförderten Geflügelbeine (9) in einen ersten, sich in Förderrichtung (F) geradlinig erstreckenden stationären Halte- und Führungsspalt (51.1), der erste stationäre Spaltränder (52.1, 53.1) aufweist, eingeführt werden, wobei das quer geförderte Geflügelbein (9) an definierter Stelle einer Kniegelenk-Knochenerhebung mittels dieser in den ersten stationären Halte- und Führungsspalt (51.1) gehängt und dadurch zum Durchführen von Bearbeitungen längs einer ersten Spalt-Fördertrecke des ersten Halte- und Führungsspalts (51.1) in definierte Referenzposition gehoben und unter gleitender Anlage in Höhe des Kniegelenks (93) an den Spalträndern (52.1, 53.1) in Förderrichtung (F) bewegt wird, wobei der Fußgelenkkopf (911) zum Heben des Geflügelbeins (9) in dem ihn haltenden Träger (21) ausweichlich gehalten wird,
- **dass** an der ersten Spalt-Förderstrecke des ersten stationären Halte- und Führungsspalts (51.1) an der Beinvorderseite (941) in Höhe des Kniegelenks (93) ein erster Beinvorderseiten-Schnitt mit Schnitttiefe bis zum Knorpel und an der Beinrückseite (942) in Höhe des Kniegelenks (93) ein Beinrückseiten-Schnitt mit Schnitttiefe bis zum Kniegelenkknochen angebracht werden,
- **dass** in dem zweiten Förderabschnitt (303) die dort axial geförderten Geflügelbeine (9) in einen zweiten, sich in Förderrichtung (F) geradlinig erstreckenden stationären Halte- und Führungsspalt (51.2), der zweite stationäre Spaltränder (52.2, 53.2) aufweist, eingeführt werden, wobei das axial geförderter Geflügelbein (9) an definierter Stelle einer Kniegelenk-Knochenerhebung mittels dieser in den zweiten stationären Halte- und Führungsspalt (51.2) gehängt und dadurch zum Durchführen von Bearbeitungen längs der zweiten Spalt-Förderstrecke des zweiten Halte- und Führungsspalts (51.2) in definierte Referenzposition gehoben und unter gleitender Anlage in Höhe des Kniegelenks (93) an den Spalträndern (52.2, 53.2) in Förderrichtung (F) bewegt wird, wobei der Fußgelenkkopf (911) zum Heben des Geflügelbeins (9) in dem ihn haltenden Träger (21) ausweichlich gehalten wird, und
- **dass** an der zweiten Spalt-Förderstrecke des zweiten stationären Halte- und Führungsspalts (51.2) ein Paar erster Lateralschnitte an den lateralen Beinseiten (950) des Geflügelbeins (9) in Höhe des Kniegelenks (93) mit Schnitttiefe bis zum Knochenknorpel und anschließend ein Paar zweiter Lateralschnitte an den lateralen Beinseiten (950) des Geflügelbeins (9) unterhalb des Kniegelenks (93) mit Schnitttiefe bis zum Oberschenkelknochen (921) angebracht werden, und dass das Oberschenkelfleisch (922) auf den Hüftgelenkknochen (923) am proximalen Ende des Oberschenkelknochens (921) geschoben wird.

37. Verfahren nach Anspruch 36, **dadurch gekennzeichnet, dass** an der zu dem zweiten Halte- und Führungsspalt (51.2) gehörenden zweiten Spalt-Förderstrecke Lateralschnitte wenigstens eines genannten Paares an der Spalt-Förderstrecke gegenüberliegend und längs dieser versetzt durchgeführt werden.

38. Verfahren nach Anspruch 36 oder 37, **dadurch gekennzeichnet, dass** an der zweiten Spalt-Förderstrecke die zweiten Lateralschnitte unter dem Kniegelenk (93) bis in den Bereich an der Beinvorderseite (941) geführt werden.

39. Verfahren nach Anspruch 36 oder 37, **dadurch gekennzeichnet, dass** an der ersten Spalt-Förderstrecke ein zweiter Vorderseiten-Schnitt unmittelbar unter dem Kniegelenk (93) mit Schnitttiefe bis zum Oberschenkelknochen durchgeführt wird, wobei an der zweiten Spalt-Förderstrecke die zweiten Lateralschnitte auf der gleichen Schnitthöhe am Geflügelbein (9) wie der zweite Vorderseiten-Schnitt an der ersten Spalt-Förderstrecke angebracht werden.

40. Verfahren nach einem der Ansprüche 36 bis 39, **dadurch gekennzeichnet, dass** in dem zweiten Förderabschnitt (303) das auf den Hüftgelenkknochen (923) geschobene Oberschenkelfleisch abgetrennt wird.

41. Verfahren nach einem der Ansprüche 36 bis 40, **dadurch gekennzeichnet, dass** am Ende des zweiten Förderabschnitts (303) das Geflügelbein (9) durchgeschnitten wird, um den Unterschenkel (91) von dem entfleischten Oberschenkel (92) zu trennen.

42. Verfahren nach einem der Ansprüche 36 bis 41, **dadurch gekennzeichnet, dass** jedes in dem zweiten Förderabschnitt (303) axial geförderte Geflügelbein (9) entlang eines zweiten Beuge-Förderabschnitts (31.2), der dem zweiten stationären Halte- und Führungsspalt (51.2) vorgeordnet ist, zum Einhängen des Geflügelbeins (9) in den zweiten stationären Halte- und Führungsspalt (51.2) in Förderrichtung (F) gebeugt und gehoben wird, wobei die Beugepositionen durch einen dem Kniekehlenwinkel zwischen Oberschenkel und Unterschenkel entsprechenden Beugewinkel (931) bestimmt sind, der während des Hebens kleiner wird.

43. Verfahren nach Anspruch 42, wobei zum Durchführen des Verfahrens in dem zweiten Förderabschnitt (303) eine Positioniervorrichtung (1.2) nach Ansprüchen 9 bis 21 zum damit eingerichteten Fördern, Positionieren und Bearbeiten verwendet wird.

44. Verfahren nach einem der Ansprüche 36 bis 43, **dadurch gekennzeichnet, dass** jedes quer geförderte Geflügelbein (9) in dem ersten Förderabschnitt (301) entlang eines ersten Beuge-Förderabschnitts (31.1), der dem ersten stationären Halte- und Führungsspalt (51.1) vorgeordnet ist, zum Einhängen in den ersten stationären Halte- und Führungsspalt (51.1) quer zur Förderrichtung (F) gebeugt und gehoben wird, wobei die Beugepositionen durch einen dem Kniekehlenwinkel zwischen Oberschenkel (92) und Unterschenkel (91) entsprechenden Beugewinkel (931) bestimmt sind, der während des Hebens kleiner wird.

45. Verfahren nach Anspruch 44, wobei zum Durchführen des Verfahrens in dem ersten Förderabschnitt (301) eine Positioniervorrichtung (1.1) nach Ansprüchen 22 bis 34 zum damit eingerichteten Fördern, Positionieren und Bearbeiten verwendet wird.

46. Verfahren nach einem der Ansprüche 36 bis 45, **dadurch gekennzeichnet, dass** wenigstens in einem Abschnitt eines genannten Halte- und Führungsspalts (51.1, 51.2) eine Bearbeitung am im Wesentlichen ungebeugten, in dem zugehörigen Halte- und Führungsspalt (51.1, 51.2) hängenden Geflügelbein (9) durchgeführt wird.

## Claims

1. A positioning apparatus (1) configured for positioning poultry legs (9) conveyed in a row in a direction of conveyance (F) along a conveying way (3) in a processing position which represents a reference position for processing the poultry legs (9), wherein the drumstick (91) and thigh (92) of the poultry legs (9) are connected to one another by the knee joint (93) and wherein one axial side (940) of the leg, on which the patella (94) is located, determines the front side (941) of the leg and the other axial side (940) of the leg, on which the hollow of the knee (95) is located, determines the rear side (942) of the leg, comprising
- a conveyor device (2) having carriers (21) which are movable along the conveying way (3) in the direction of conveyance (F) and which convey and hold the poultry legs (9), each with an ankle joint ball (911) held in an associated mentioned carrier (21), along the entire conveying way (3) of the positioning apparatus (1), wherein the carriers (21) hold the poultry legs (9) in a suspended position while they are fed into the positioning device (1),
- a bending device (4) having a stationary positioning element (6) extending in a bending conveying section (31) of the conveying way (3), and a series of co-running positioning elements (7) which each co-run in the direction of conveyance (F) in association with an associated mentioned carrier (21), wherein a co-running positioning element (7) forms with the stationary positioning element (6) a pair of positioning elements, of which a first positioning element (6.1; 7.2) is configured to engage in the hollow of the knee (95) of the poultry leg (9) and a second positioning element (6.2; 7.1) is configured to rest against the thigh (92) on the front side (941) of the leg, and wherein in the bending conveying section (31) of the conveying way (3) the first positioning element (6.1; 7.2) and the second positioning element (6.2; 7.1) in the pair produce and determine between them a bending angle (931) which corresponds to the angle of the hollow of the knee and which becomes smaller while lifting the poultry leg (9) from the initial suspended position until the mentioned reference position is reached, and results in corresponding bent positions of the poultry leg (9), wherein the carriers (21) of the conveyor device (2) are so configured that the ankle joint ball (911) in the carrier (21) is able to move in a manner corresponding to the lifting of the poultry leg (9), and
- a reference holding edge extending in the conveying way (3), on which the poultry leg (9) is held in a defined lifting position, namely in the reference position, in the region of the knee joint, **characterised in that**
- the positioning apparatus (1) has a stationary holding and guiding device (5) downstream of the bending conveying section (31) in the direction of conveyance (F), which holding and guiding device holds each poultry leg (9) in the reference position ready for processing as it is conveyed along a processing conveying section (32) of the conveying way (3), wherein the holding and guiding device (5) is equipped over the length of the processing conveying section (32) with a stationary holding and guiding gap (51) extending in the conveying way (3) and having stationary gap edges (52, 53) which receive the poultry leg (9) in the region of the knee joint (93) for holding and guiding in the reference position, and wherein the mentioned reference holding edge forms at least in part a mentioned stationary gap edge (52),
- the bending conveying section (31) along the conveying way (3) and the processing conveying section (32) along the conveying way (3) are linear, and
- the mentioned bending device (4) forms a threading device for threading the poultry leg (9) in the region of the knee joint (93) into the holding and guiding gap (51), wherein the co-running positioning elements (7) are formed by driven pressing elements, and a drive and control device (8) is provided which moves each driven pressing element in the direction of conveyance and, for bending, in two dimensions in the lifting direction and transversely thereto in a direction in which the driven pressing element grips the poultry leg (9) from beneath on one of the mentioned axial sides (940) of the leg for lifting and bending.

2. The apparatus according to claim 1, **characterised in that** the drive and control device (8) of the co-running positioning elements (7) is so configured that in at least one section of the processing conveying section (32) of the holding and guiding gap (51), the engagement of the co-running positioning element (7) in the poultry leg (9) is at least reduced.

3. The apparatus according to claim 1 or 2, **characterised in that** the drive and control device (8) of the co-running positioning elements (7) generates at least a pivoting movement and at least a linear movement for moving each co-running positioning element (7), wherein the movements for moving the co-running positioning element (7) are superimposed.

4. The apparatus according to any one of claims 1 to 3, **characterised in that** at least two processing points are provided on the processing conveying section (32) of the holding and guiding device (5), which processing points are arranged opposite one another on the conveying way (3).

5. The apparatus according to claim 4, **characterised in that** at least two of the mutually opposite processing points are offset along the conveying way (3).

6. The apparatus according to any one of claims 1 to 5, **characterised in that** the positioning apparatus (1) has in at least one part of the processing conveying section (32) of the holding and guiding device (5) first support elements (851, 861) which co-run with the carriers (21) and come to rest against the poultry legs (9) above the holding and guiding gap (51).

7. The apparatus according to any one of claims 1 to 6, **characterised in that** the positioning apparatus (1) has in at least one part of the processing conveying section (32) of the holding and guiding device (5) second support elements (702, 811, 841) which co-run with the carriers (21) and rest against the poultry legs (9) below the holding and guiding gap (51).

8. The apparatus according to any one of claims 1 to 7, **characterised in that** the conveyor device (2) is so configured that in at least one part of the processing conveying section (32) of the holding and guiding device (5), only the carriers (21) form a means of moving the poultry legs (9) along the holding and guiding gap (51).

9. The positioning apparatus (1.2) according to any one of claims 1 to 8, **characterised in that**
- for axial conveyance of the poultry legs (9) the conveyor device (2.2) is so arranged and configured that the carriers (21) convey the poultry legs (9) axially with the axial side (940) of the leg, on which the patella (94) is located, with the patella (94) leading, namely in an axial plane (90) common to the axes of the thigh bone (921) and of the drumstick bone (924),
- in each pair of positioning elements, the mentioned first positioning element, which is configured for engaging in the hollow of the knee (95) of the poultry leg (9), is designed as the co-running positioning element (7.2) of the series of co-running positioning elements, and the mentioned second positioning element, which is configured for resting against the thigh (92) on the front side (941) of the leg, is formed by the stationary positioning element (6.2), and
- the stationary holding and guiding gap (51.2) of the holding and guiding device (5.2) is formed by a knee bone guiding gap having a gap width which is so adapted to bony prominences of the knee joint (93) conveyed with the patella (94) leading that the poultry leg (9) is suspended in the knee bone gap at a defined point of the knee joint bony prominences by means of those bony prominences and guided in the direction of conveyance (F) in a sliding manner on the gap edges (52.2, 53.2) of the knee bone gap,
- wherein the positioning elements (6.2, 7.2) which cooperate as a pair during bending and lifting are configured for threading and suspending the poultry leg (9) in the knee bone guiding gap with the patella (94) leading.

10. The apparatus according to claim 9, **characterised in that** the stationary positioning element (6.2) is so arranged and configured that, at the beginning of the knee bone guiding gap, the stationary positioning element (6.2) ceases to rest against the thigh (92) of the poultry leg (9).

11. The apparatus according to claim 9 or 10, **characterised in that** the stationary positioning element (6.2) is formed by a stationary ramp of the threading device having a ramp guide which is oriented upwards in the direction of conveyance (F) at least in part, so that the thigh (92) on the front side (941) of the poultry leg (9) runs onto a low guiding section (621) of the ramp and leaves the ramp *via* a more highly situated guiding section (625).

12. The apparatus according to claim 11, **characterised in that** the ramp guide is divided in the direction of conveyance into at least two guiding sections (621-625) which bend the poultry leg (9), wherein an upper guiding section (625), which is situated closest to the holding and guiding device (5.2), is flat.

13. The apparatus according to any one of claims 9 to 12, **characterised in that** each co-running positioning element (7.2) is formed by a knee hollow pushing element which engages in the hollow of the knee (95), wherein the drive and control device (8.2) is so configured that, after the poultry leg (9) has entered the positioning apparatus (1.2), the knee hollow pushing element is pushed into the hollow of the knee (95) of the poultry leg (9) and then, in accordance with the movement of the poultry leg (9) effected by the stationary positioning element (6.2), is so moved and guided, with continued engagement in the hollow of the knee (95), that, during pushing and increasing bending of the poultry leg (9), the knee hollow pushing element precedes the carrier (21) on which the poultry leg (9) is suspended.

14. The apparatus according to claim 13, **characterised in that** the drive and control device (8.2) is so configured that the knee hollow pushing element, upon entry of the poultry leg (9) into the positioning apparatus (1.2), moves from a position below the hollow of the knee (95) of the poultry leg (9) into the hollow of the knee (95).

15. The apparatus according to claim 13 or 14, **characterised in that** the drive and control device (8.2) is so configured that the knee hollow pushing element comes to lie in the region of the holding and guiding device (5.2) below the knee bone guiding gap, where it remains, against the direction of conveyance (F), to such an extent that the bent position of the poultry leg (9) effected by the knee hollow pushing element is reduced or eliminated.

16. The apparatus according to any one of claims 9 to 15, **characterised in that** the positioning apparatus (1.2) has at least one stationary bracing positioning element (65) which engages the front side (941) of the leg together with the second, namely the stationary, positioning element (6.2).

17. The apparatus according to any one of claims 9 to 16, **characterised in that** a first stationary lateral cutting station (564) is arranged on the processing conveying section (32.2) of the holding and guiding device (5.2), which cutting station is formed by a first pair of first lateral cutting means (554) which are arranged offset along the conveying way (3.2) and which, below the holding and guiding gap (51.2), apply first lateral cuts on both lateral sides (950) of the poultry leg (9) at the height of the knee joint (93) with a cutting depth to the cartilage of the bone.

18. The apparatus according to claim 17, **characterised in that** a pull-off station (569) for pulling the thigh meat from the thigh bone is arranged on the processing conveying section (32.2) of the holding and guiding device (5.2), following the first lateral cutting station (564), wherein the pull-off station (569) comprises a second stationary lateral cutting station (565) having a second pair of second lateral cutting means (555) arranged offset along the conveying way (3.2) and pull-off means (559) co-running in the direction of conveyance (F) for pulling the thigh meat from the thigh bone of the poultry leg (9), wherein the second lateral cutting means (555), beneath the holding and guiding gap (51.2), apply second lateral cuts below the knee joint (93) on both lateral sides (950) of the poultry leg (9) with a cutting depth to the thigh bone, and each pull-off means (559) pushes the thigh meat to the proximal end of the thigh bone (921).

19. The apparatus according to claim 18, **characterised in that** the pull-off station (569) is so configured that the co-running pull-off means (559) forms a support and holding means which comes to rest against the thigh (92) close to the knee joint (93) before the second lateral cuts are applied.

20. The apparatus according to claim 18 or 19, **characterised in that** downstream of the pull-off station (569) there is a third stationary cutting station (566) having cutting means (556), which separates the thigh meat (922) at the proximal end of the thigh bone (921) from the thigh bone.

21. The apparatus according to claim 20, **characterised in that** there is provided a fourth stationary cutting station (567) having cutting means (557), which separates the drumstick (91), which bears the drumstick meat, of the poultry leg from the defleshed thigh bone (921) with a cut through the knee joint (93).

22. The positioning apparatus (1.1) according to any one of claims 1 to 8, **characterised in that**
- for lateral conveyance of the poultry legs (9) the conveyor device (2.1) is so arranged and configured that the carriers (21) convey the poultry legs (9) transversely, with one of the two lateral sides (950) of the leg leading,
- the mentioned first positioning element, which is configured to engage in the hollow of the knee (95), is the stationary positioning element (6.1), which is formed by a positioning edge,
- the mentioned second positioning element, which is configured to rest against the thigh (92) on the front side (941) of the leg, is configured as the co-running positioning element (7.1) of the series of co-running positioning elements which cooperates with the stationary positioning element (6.1) in a pair,
- the stationary holding and guiding gap (51.1) of the holding and guiding device (5.1) is formed by a knee bone guiding gap having a gap width which is so adapted to knee bony prominences of the knee joint (93) of the transversely conveyed poultry leg (9) that the transversely conveyed poultry leg (9) is suspended in the knee bone guiding gap at a defined point of the knee joint bony prominences by means of those bony prominences and guided in the direction of conveyance (F) in a sliding manner on the gap edges (52.1, 53.1) of the knee bone guiding gap,
- wherein the positioning elements (6.1, 7.1) which cooperate in a pair during bending and lifting are configured for threading and suspending the transversely conveyed poultry leg (9) in the knee bone guiding gap,
- wherein the mentioned reference holding edge is divided along the conveying way (3.1) of the positioning apparatus (1.1) into two reference holding edge sections, namely into a first reference holding edge section, which is part of the mentioned bending conveying section (31.1) and forms the stationary positioning edge thereof, and a subsequent second reference holding edge section, which forms one gap edge (52.1) of the knee bone guiding gap of the holding and guiding device (5.1).

23. The apparatus according to claim 22, **characterised in that** the drive and control device (8.1) of the co-running positioning element (7.1) is so configured that the co-running positioning element (7.1) disengages from the poultry leg (9) in at least one section of the processing conveying section (32.1) of the holding and guiding device (5.1).

24. The apparatus according to claim 22 or 23, **characterised in that** the lateral positioning apparatus (1.1) is equipped with lateral pushing elements (811) co-running in the direction of conveyance (F), which lateral pushing elements are associated with the co-running positioning elements (7.1) and are so configured that the co-running positioning element (7.1) and the co-running lateral pushing element (811), in each case in a pair, form a co-running pressing and support mounting, wherein the co-running pushing element (811) engages the lateral side (950) of the leg that is situated upstream in the direction of conveyance (F) by pushing contact in the region of the thigh (92) of the poultry leg, and the co-running positioning element (7.1) performs the movements for lifting and increasingly bending the poultry leg (9), transversely to the direction of conveyance (F).

25. The apparatus according to claim 24, **characterised in that** the lateral positioning apparatus (1.1) is so configured that the co-running lateral pushing element (811) maintains pushing contact with the mentioned lateral side (950) of the poultry leg (9) at least along a part-section of the holding and guiding gap (51.1).

26. The apparatus according to any one of claims 22 to 25, **characterised in that** the co-running positioning element (7.1) is in the form of an arm-like element having two arm sections, namely having a first arm section (701), which substantially engages the front side (941) of the leg with movement transversely to the direction of conveyance (F), and a second arm section (702), which substantially rests against the thigh (92) on the lateral side (950) of the leg that is situated downstream in the direction of conveyance (F) in order to support it.

27. The apparatus according to any one of claims 22 to 26, **characterised in that** the positioning apparatus (1.1) has a stationary initial positioning guide (61) extending in an initial section of the conveying way (3.1), which initial positioning guide is associated with the co-running positioning element (7.1), against which the front side (941) of the leg abuts in the region of the thigh (92) and which guides the poultry leg (9) transversely to the direction of conveyance (F) against the stationary positioning element (6.1) before the co-running positioning element (7.1) comes to rest against the poultry leg (9).

28. The apparatus according to any one of claims 22 to 27, **characterised in that** the stationary positioning element (6.1) is formed along an entry-side part of the bending conveying section (31.1) of the positioning apparatus (1.1) having an edge (60) of wedge-shaped cross-section, the cross-section of which is adapted to a hollow between the drumstick (91) and the thigh (92) that is present when the poultry leg (9) enters the positioning apparatus (1.1).

29. The apparatus according to any one of claims 22 to 28, **characterised in that** the carriers (21) are in the form of rotary carriers, which are rotatable about a vertical axis into a position in which the poultry legs (9) are located with the patella (94) leading for further conveying.

30. The apparatus according to any one of claims 22 to 29, **characterised in that** a first stationary front-side cutting station (561) is arranged on the processing conveying section (32.1) of the holding and guiding device (5.1), which cutting station has a cutting means (551) operating above the holding and guiding gap (51.1) which applies a cut on the front side (941) of the leg at the height of the knee joint (93) with a cutting depth to the cartilage.

31. The apparatus according to claim 30, **characterised in that** the first front-side cutting station (561) is arranged in an entry-side conveying section part of the holding and guiding device (5.1), in which the co-running positioning element (7.1) is in a pressing position for bending the poultry leg (9).

32. The apparatus according to claim 30 or 31, **characterised in that** a second stationary front-side cutting station (562) is arranged on the processing conveying section (32.1) of the holding and guiding device (5.1), which cutting station has a cutting means (552) operating below the holding and guiding gap (51.1) which applies a cut on the front side (941) of the leg directly below the knee joint (93) with a cutting depth to the thigh bone (921).

33. The apparatus according to any one of claims 30 to 32, **characterised in that** a stationary rear-side cutting station (563) is arranged on the processing conveying section (32.1) of the holding and guiding device (5.1), which cutting station has a cutting means (553) operating above the holding and guiding gap (51.1) which applies a cut on the rear side (942) of the leg at the height of the knee joint (93) with a cutting depth to the knee joint bone.

34. The apparatus according to claim 33, **characterised in that** the rear-side cutting station (563) is arranged in an exit-side conveying section of the holding and guiding device (5.1), in which the co-running positioning element (7.1) is disengaged from the poultry leg (9) in order to eliminate the bent position of the poultry leg (9).

35. Positioning apparatus, **characterised in that** there are arranged along a conveying way (30) a first positioning apparatus, which is a positioning apparatus according to any one of claims 22 to 34 forming a lateral positioning apparatus (1.1), and a subsequent second positioning apparatus, which is a positioning apparatus according to any one of claims 9 to 21 forming an axial positioning apparatus (1.2), and, between the first positioning apparatus (1.1) and the second positioning apparatus (1.2), a rotary station (15), wherein the rotary station (15) is configured with rotatable carriers which form the carriers (21) which convey the poultry legs (9) along the conveying ways (3.1, 3.2) of the two positioning apparatuses (1.1, 1.2), wherein the carriers (21) are rotatable from the position of lateral conveying into the position of axial conveying.

36. A method for removing, during conveying, the thigh meat from poultry legs (9) conveyed in a row in the direction of conveyance (F), the drumsticks (91) and thighs (92) of said legs being connected to one another by the knee joint (93) and the legs being in a suspended arrangement with the ankle joint balls (911) held in a carrying device, wherein the poultry leg (9) is positioned by defined lifting and holding of the knee joint (93), cuts are applied in the poultry leg meat in the region of the knee of the poultry leg (9) with a cutting depth down to the bone, and the thigh meat is pushed from the specifically positioned knee joint (93) to the hip joint bone (923), **characterised in that**
- the poultry legs (9) are conveyed in a linear direction of conveyance (F) while all manipulations for positioning and processing are performed automatically, wherein the poultry legs (9) are conveyed by carriers (21) which can be moved along a linear conveying way and in which the poultry legs (9), each associated with a carrier (21), are held by the ankle joint ball (911) during the entire conveying operation,
- the poultry legs (9) are conveyed by a linear conveying way in two conveying sections, namely in a first conveying section (301) in which the poultry legs (9) are conveyed transversely with the lateral side (950) of the leg leading and, after rotation of each carrier (21) about a vertical axis, in a second conveying section (303) in which the poultry legs (9) are conveyed axially with the axial side (940) of the leg, on which the patella (94) is located, leading, namely in an axial plane (90) common to the axes of the thigh bone (921) and of the drumstick bone (924), with the patella (94) leading,
- in the first conveying section (301), the transversely conveyed poultry legs (9) are introduced into a first stationary holding and guiding gap (51.1) which extends linearly in the direction of conveyance (F) and has first stationary gap edges (52.1, 53.1), wherein the transversely conveyed poultry leg (9) is suspended in the first stationary holding and guiding gap (51.1) at a defined position of a knee joint bony prominence by means of that bony prominence and thereby lifted into a defined reference position for the performance of processing operations along a first gap conveying way of the first holding and guiding gap (51.1) and is moved in the direction of conveyance (F) by sliding at the height of the knee joint (93) on the gap edges (52.1, 53.1), wherein the ankle joint ball (911), for lifting the poultry leg (9), is held in a movable manner in the carrier (21) holding it,
- in the first gap conveying way of the first stationary holding and guiding gap (51.1), a first front-side leg cut is applied on the front side (941) of the leg at the height of the knee joint (93) with a cutting depth to the cartilage, and a rear-side leg cut is applied on the rear side (942) of the leg at the height of the knee joint (93) with a cutting depth to the knee joint bone,
- in the second conveying section (303), the poultry legs (9) conveyed axially therein are introduced into a second stationary holding and guiding gap (51.2) which extends linearly in the direction of conveyance (F) and has second stationary gap edges (52.2, 53.2), wherein the axially conveyed poultry leg (9) is suspended in the second stationary holding and guiding gap (51.2) at a defined point of a knee joint bony prominence by means of that bony prominence and thereby lifted into a defined reference position for the performance of processing operations along the second gap conveying way of the second holding and guiding gap (51.2) and is moved in the direction of conveyance (F) by sliding at the height of the knee joint (93) on the gap edges (52.2, 53.2), wherein the ankle joint ball (911), for lifting the poultry leg (9), is held in a movable manner in the carrier (21) holding it, and
- in the second gap conveying way of the second stationary holding and guiding gap (51.2), a pair of first lateral cuts are applied on the lateral sides (950) of the poultry leg (9) at the height of the knee joint (93) with a cutting depth to the cartilage of the bone, and then a pair of second lateral cuts are applied on the lateral sides (950) of the poultry leg (9) below the knee joint (93) with a cutting depth to the thigh bone (921), and the thigh meat (922) is pushed onto the hip joint bone (923) at the proximal end of the thigh bone (921).

37. The method according to claim 36, **characterised in that,** on the second gap conveying way belonging to the second holding and guiding gap (51.2), lateral cuts of at least one mentioned pair are made opposite the gap conveying way and offset along it.

38. The method according to claim 36 or 37, **characterised in that,** on the second gap conveying way, the second lateral cuts are guided below the knee joint (93) into the region on the front side (941) of the leg.

39. The method according to claim 36 or 37, **characterised in that,** on the first gap conveying way, a second front-side cut is made directly below the knee joint (93) with a cutting depth to the thigh bone, wherein on the second gap conveying way, the second lateral cuts are applied at the same cutting height on the poultry leg (9) as the second front-side cut on the first gap conveying way.

40. The method according to any one of claims 36 to 39, **characterised in** t**hat,** in the second conveying section (303), the thigh meat pushed onto the hip joint bone (923) is removed.

41. The method according to any one of claims 36 to 40, **characterised in that** at the end of the second conveying section (303), the poultry leg (9) is cut through in order to separate the drumstick (91) from the defleshed thigh (92).

42. The method according to any one of claims 36 to 41, **characterised in that** each poultry leg (9) conveyed axially in the second conveying section (303) is bent and lifted in the direction of conveyance (F) along a second bending conveying section (31.2), which is upstream of the second stationary holding and guiding gap (51.2), for suspension of the poultry leg (9) in the second stationary holding and guiding gap (51.2), wherein the bent positions are determined by a bending angle (931) corresponding to the angle of the hollow of the knee between the thigh and drumstick, which bending angle becomes smaller during the lifting.

43. The method according to claim 42, wherein, in order to carry out the method, a positioning apparatus (1.2) according to claims 9 to 21 is used in the second conveying section (303) for the conveying, positioning and processing established thereby.

44. The method according to any one of claims 36 to 43, **characterised in that** each transversely conveyed poultry leg (9) in the first conveying section (301) is bent and lifted transversely to the direction of conveyance (F) along a first bending conveying section (31.1), which is upstream of the first stationary holding and guiding gap (51.1), for suspension in the first stationary holding and guiding gap (51.1), wherein the bent positions are determined by a bending angle (931) corresponding to the angle of the hollow of the knee between the thigh (92) and the drumstick (91), which bending angle becomes smaller during the lifting.

45. The method according to claim 44, wherein, in order to carry out the method, a positioning apparatus (1.1) according to claims 22 to 34 is used in the first conveying section (301) for the conveying, positioning and processing established thereby.

46. The method according to any one of claims 36 to 45, **characterised in that** at least in a section of a mentioned holding and guiding gap (51.1, 51.2), processing is carried out on the substantially unbent poultry leg (9) suspended in the associated holding and guiding gap (51.1, 51.2).

## Revendications

1. Un dispositif de positionnement (1) conçu pour positionner des pattes de volailles (9) transportées en une file dans une direction de transport (F) le long d'une ligne de transport (3) jusqu'à une position de traitement, constituant une position de référence pour le traitement des pattes de volailles (9), dans lequel le pilon (91) et la cuisse (92) des pattes de volailles (9) sont articulés autour de l'articulation du genou (93) et dans lequel un côté axial de la patte (940) sur lequel se trouve la rotule (94) constitue le côté avant de la patte (941) tandis que l'autre côté axial de la patte (940) sur lequel se trouve le jarret (95) constitue le côté arrière de la patte (942), comprenant
- un dispositif de transport (2) muni de supports mobiles (21) placés le long de la ligne de transport (3) dans la direction de transport (F), assurant le transport et le maintien des pattes de volailles (9) le long de l'ensemble de la ligne de transport (3) du dispositif de positionnement (1) en engageant respectivement la tête d'articulation de la cheville (911) dans le support (21) spécifié correspondant, dans lequel les supports (21) maintiennent les pattes de volailles (9) en position pendue lors du chargement dans le dispositif de positionnement (1)
- un dispositif de pliage (4) muni d'un élément de positionnement fixe (6) s'étendant dans une section de transport de pliage (31) de la ligne de transport (3) et d'une série d'éléments de positionnement (7) accompagnateurs, se déplaçant respectivement dans la direction de transport (F) en association avec un support (21) spécifié correspondant, dans lequel un élément de positionnement accompagnateur (7) respectif et l'élément de positionnement fixe (6) constituent une paire d'éléments de positionnement, dont un premier élément de positionnement (6.1 ; 7.2) de saisie dans le jarret (95) de la patte de volaille (9) et un second élément de positionnement (6.2 ; 7.1) d'appui contre la cuisse (92) sont installés sur la partie avant de la patte (941), et dans lequel le premier élément de positionnement (6.1 ; 7.2) et le second élément de positionnement (6.2 ; 7.1) créent et définissent entre eux, dans la section de transport de pliage (31) de la ligne de transport (3), un angle de pliage (931) correspondant à l'angle du jarret, s'amenuisant sous l'effet du levage de la patte de volaille (9) de sa position pendue jusqu'à atteindre la position de référence spécifiée engendrant les positions de pliage correspondantes de la patte de volaille (9), dans lequel les supports (21) du dispositif de transport (2) sont conçus de façon à pouvoir permettre à la tête d'articulation de la cheville (911) de s'échapper du support (21) en fonction du levage de la patte de volaille (9) et
- un bord de maintien de référence s'étendant dans la ligne de transport (3), contre lequel la patte de volaille (9) est maintenue dans la région de l'articulation du genou dans une position de levage définie, notamment la position de référence
**caractérisé en ce que**,
- le dispositif de positionnement (1) comprend un dispositif de maintien et de guidage (5) en aval de la section de transport de pliage (31) dans la direction de transport (F), préparant chaque patte de volaille (9) pour le traitement dans la position de référence durant le transport le long d'une section de transport de traitement (32) de la ligne de transport (3), dans lequel le dispositif de maintien et de guidage (5) est muni sur la longueur de la section de transport de traitement (32) d'une fente de maintien et de guidage fixe (51) s'étendant le long de la ligne de transport (3) et munie de bords fendus fixes (52, 53), prélevant la patte de volaille (9) dans la région de l'articulation du genou (93) afin de la maintenir et de la guider jusqu'à la position de référence et dans lequel ledit bord de maintien de référence constitue au moins partiellement un bord fendu fixe mentionné (52),
- la section de transport de pliage (31) le long de la ligne de transport (3) et la section de transport de traitement (32) le long de la ligne de transport (3) sont rectilignes, et
- ledit dispositif de pliage (4) forme un dispositif d'enfilement destiné à accrocher la patte de volaille (9) dans la région de l'articulation du genou (93) dans la fente de maintien et de guidage (51), dans lequel les éléments de positionnement accompagnateurs (7) sont formés par des éléments de serrage entraînés et un dispositif d'entraînement et de commande (8) est installé, déplaçant chaque élément de poussée entraîné dans la direction de transport ainsi que dans une direction permettant un pliage bidimensionnel dans la direction de levage et transversalement par rapport à cette dernière, dans lequel l'élément de poussée entraîné saisi la patte de volaille (9) par le bas par l'un desdits côtés axiaux de la patte (940) afin de la lever et de la plier.

2. Un dispositif selon la revendication 1, **caractérisé en ce que** le dispositif d'entraînement et de commande (8) des éléments de positionnement accompagnateurs (7) est conçu de façon à ce que la prise de l'élément de positionnement accompagnateur (7) dans la patte de volaille (9) soit au moins réduite dans une partie de la section de transport de traitement (32) de la fente de maintien et de guidage (51).

3. Un dispositif selon la revendication 1 ou 2, **caractérisé en ce que** le dispositif d'entraînement et de commande (8) des éléments de positionnement accompagnateurs (7) produisent au moins un mouvement de pivotement et au moins un mouvement linéaire afin de déplacer chaque élément de positionnement accompagnateur (7), dans lequel les mouvements de déplacement des éléments de positionnement accompagnateurs (7) se superposent.

4. Un dispositif selon l'une des revendications 1 à 3, **caractérisé en ce qu'**au moins deux postes de traitement sont prévus sur la section de transport de traitement (32) du dispositif de maintien et de guidage (5), agencés sur la ligne de transport (3) de façon à se faire face.

5. Un dispositif selon la revendication 4, **caractérisé en ce qu'**au moins deux des postes de traitement se faisant face sont placés de façon décalée le long de la ligne de transport (3).

6. Un dispositif selon l'une des revendications 1 à 5, **caractérisé en ce que** le dispositif de positionnement (1) dispose de premiers d'appui (851, 861) dans au moins une partie de la section de transport de traitement (32) du dispositif de maintien et de guidage (5), accompagnant les supports (21) et s'appuyant contre les pattes de volailles (9) au-dessus de la fente de maintien et de guidage (51).

7. Un dispositif selon l'une des revendications 1 à 6, **caractérisé en ce que** le dispositif de positionnement (1) dispose de deuxièmes d'appui (702, 811, 841) dans au moins une partie de la section de transport de traitement (32) du dispositif de maintien et de guidage (5), accompagnant les supports (21) et s'appuyant contre les pattes de volailles (9) en dessous de la fente de maintien et de guidage (51).

8. Un dispositif selon l'une des revendications 1 à 7, **caractérisé en ce que** le dispositif de transport (2) est conçu de façon à ce que dans au moins une partie de la section de transport de traitement (32) du dispositif de maintien et de guidage (5) les supports (21) seuls forment un moyen de transport déplaçant les pattes de volailles (9) le long de la fente de maintien et de guidage (51).

9. Un dispositif de positionnement (1.2) selon l'une des revendications 1 à 8, **caractérisé en ce que**
- le dispositif de transport (2.2) de transport axial des pattes de volailles (9) est conçu et disposé de façon à ce que les supports (21) transportent les pattes de volailles (9) axialement en orientant la rotule (94) du côté axial de la patte (940) sur lequel se trouve la rotule (94) vers l'avant, notamment sur un plan axial (90) commun aux axes des os de la cuisse (921) et des os du pilon (924),
- dans chaque paire d'éléments de positionnement ledit premier élément de positionnement, conçu pour la saisie dans le jarret (95) de la patte de volaille (9), constitue l'élément de positionnement accompagnateur (7.2) de la rangée d'éléments de positionnement accompagnateurs et ledit second élément de positionnement, conçu pour assurer un appui contre la cuisse (92) sur la partie avant de la patte (941), est formé de l'élément de positionnement fixe (6.2), et
- la fente de maintien et de guidage fixe (51.2) du dispositif de maintien et guidage (5.2) est constituée d'une fente de guidage de l'os du genou dont la largeur de fente est adaptée aux élévations de l'os de l'articulation du genou (93) entraînée en orientant la rotule (94) vers l'avant de façon à ce que la patte de volaille (9) glisse à un emplacement définit des élévations de l'os de l'articulation du genou et sur ce dernier, en s'appuyant sur la fente de guidage de l'os du genou et sur ses bords fendus (52.2, 53.2) dans la direction de transport (F),
- dans lequel les éléments de positionnement (6.2, 7.2) fonctionnant en commun par paires lors du pliage et du levage pour enfiler et accrocher la patte de volaille (9) en orientant la rotule (94) vers l'avant sont installés dans la fente de guidage de l'os du genou.

10. Un dispositif selon la revendication 9, **caractérisé en ce que** l'élément de positionnement fixe (6.2) est conçu et disposé de façon à ce que l'appui de l'élément de positionnement fixe (6.2) contre la cuisse (92) de la patte de volaille (9) s'échappe au début de la fente de guidage de l'os du genou.

11. Un dispositif selon la revendication 9 ou 10, **caractérisé en ce que** l'élément de positionnement fixe (6.2) est formé d'une rampe fixe du dispositif d'enfilement avec un guidage de rampe orienté dans la direction de transport (F) et au moins partiellement vers le haut, de façon à ce que la partie de la cuisse (92) sur la partie avant de la patte (941) de la patte de volaille (9) pénètre sur la rampe en passant sur une section de guidage plus basse (621) et la quitte en passant sur une section de guidage (625) plus élevée.

12. Un dispositif selon la revendication 11, **caractérisé en ce que** le guidage de rampe est divisé dans la direction de transport en au moins deux sections de guidage (621-625) s'inclinant sous l'effet de la patte de volaille (9), dans lequel une section de guidage supérieure (625), la plus proche du dispositif de maintien et de guidage (5.2), est plate.

13. Un dispositif selon l'une des revendications 9 à 12, **caractérisé en ce que** chaque élément de positionnement accompagnateur (7.2) est constitué d'un élément coulissant de jarret s'insérant dans le jarret (95), dans lequel le dispositif d'entraînement et de commande (8.2) est conçu de façon à ce que l'élément coulissant de jarret soit poussé dans le jarret (95) de la patte de volaille (9) après l'entrée de la patte de volaille (9) dans le dispositif de positionnement (1.2) puis, en fonction du mouvement de la patte de volaille (9) causé par l'élément de positionnement fixe (6.2), poursuive la pénétration dans le jarret (95) en étant déplacé et entraîné de façon à ce que l'élément coulissant de jarret devance le support (21) sur lequel la patte de volaille (9) est suspendue, lors de la poussée et de l'augmentation du pliage de la patte de volaille (9).

14. Un dispositif selon la revendication 13, **caractérisé en ce que** le dispositif d'entraînement et de commande (8.2) est conçu de façon à ce que l'élément coulissant de jarret pénètre dans le jarret (95) depuis une position se trouvant sous le jarret (95) de la patte de volaille (9) lors de l'entrée de la patte de volaille (9) dans le dispositif de positionnement (1.2).

15. Un dispositif selon la revendication 13 ou 14, **caractérisé en ce que** le dispositif d'entraînement et de commande (8.2) est conçu de façon à ce que l'élément coulissant de jarret vienne se loger dans la zone du dispositif de maintien et de guidage (5.2) sous la fente de guidage du jarret, et y reste tellement en retrait par rapport à la direction de transport (F) que la position de pliage de la patte de volaille (9) provoquée par l'élément coulissant de jarret s'en trouve réduite ou supprimée.

16. Un dispositif selon l'une des revendications 9 à 15, **caractérisé en ce que** le dispositif de positionnement (1.2) comprend au moins un élément de positionnement de contrepression (65), s'engageant dans la partie avant de la patte (941) en collaboration avec le second élément de positionnement, soit l'élément fixe (6.2).

17. Un dispositif selon l'une des revendications 9 à 16, **caractérisé en ce que** la section de transport de traitement (32.2) du dispositif de maintien et de guidage (5.2) dispose d'une première station de découpe latérale (564) constituée d'une première paire de premiers moyens de découpe latéraux (554) placés de façon décalée le long de la ligne de transport (3.2), produisant sous la fente de maintien et de guidage (51.2) des premières découpes latérales au niveau de l'articulation du genou (93) des deux côtés latéraux de la patte (950) de volaille (9) sur une profondeur atteignant le cartilage osseux.

18. Un dispositif selon la revendication 17, **caractérisé en ce que** la section de transport de traitement (32.2) du dispositif de maintien et de guidage (5.2) dispose d'une station de séparation (569) assurant la séparation de la chair de la cuisse de l'os de la cuisse, placée en aval de la première station de découpe latérale (564), dans lequel la station de séparation (569) comprend une seconde station de découpe latérale fixe (565) avec une seconde paire de seconds moyens de découpe latéraux (555) placés de façon décalée le long de la ligne de transport (3.2) ainsi que des moyens de séparation (559) accompagnateurs se déplaçant dans la direction de transport (F) servant à séparer la chair de la cuisse de l'os de la cuisse de la patte de volaille (9), dans lequel les seconds moyens de découpe latéraux (555) produisent sous la fente de maintien et de guidage (51.2) des secondes découpes latérales des deux côtés latéraux de la patte (950) de volaille (9) sous l'articulation du genou (93) sur une profondeur atteignant le cartilage osseux et chaque moyen de séparation (559) repousse la chair de la cuisse jusqu'à l'extrémité proximale de l'os de la cuisse (921).

19. Un dispositif selon la revendication 18, **caractérisé en ce que** la station de séparation (569) est conçue de façon à ce que le moyen de séparation (559) accompagnateur constitue un moyen de support et de maintien, s'appuyant contre la cuisse (92) à proximité de l'articulation du genou (93) avant la production des secondes découpes latérales.

20. Un dispositif selon la revendication 18 ou 19, **caractérisé en ce qu'**une troisième station de découpe fixe (566) munie d'un moyen de découpe (556), assurant la séparation de la chair de la cuisse (922) de l'os de la cuisse (921) au niveau de l'extrémité proximale de ce dernier, est placée en aval de la station de séparation (569).

21. Un dispositif selon la revendication 20, **caractérisé en ce qu'**une quatrième station de découpe fixe (567) munie d'un moyen de découpe (557) est installée, afin de séparer le pilon de la patte de volaille (91) comportant de la chair de pilon de l'os de la cuisse (921) écharné en pratiquant une incision dans l'articulation du genou (93).

22. Un dispositif de positionnement (1.1) selon l'une des revendications 1 à 8, **caractérisé en ce que**
- le dispositif de transport (2.1) assurant le transport latéral des pattes de volaille (9) est conçu et disposé de façon à ce que les supports (21) transportent les pattes de volaille (9) de façon transversale, dans lequel l'un des deux côtés latéraux de la patte (950) précède l'autre,
- ledit premier élément de positionnement conçu pour la saisie dans le jarret (95) constitue l'élément de positionnement fixe (6.1) formé par un bord de positionnement,
- ledit second élément de positionnement conçu pour l'appui contre la cuisse (92) sur la partie avant de la patte (941) constitue l'élément de positionnement accompagnateur (7.1) de la rangée d'éléments de positionnement accompagnateurs fonctionnant en commun avec l'élément de positionnement fixe (6.1),
- la fente de maintien et de guidage fixe (51.1) du dispositif de maintien et guidage (5.1) est constituée d'une fente de guidage de l'os du genou dont la largeur de fente est adaptée aux élévations de l'os de l'articulation du genou (93) de la patte de volaille (9) transportée transversalement de façon à ce que la patte de volaille (9) glisse à un emplacement définit des élévations de l'os de l'articulation du genou et sur ce dernier, en s'appuyant sur la fente de guidage de l'os du genou et sur ses bords fendus (52.1, 53.1) dans la direction de transport (F),
- dans lequel les éléments de positionnement (6.1, 7.1) fonctionnant en commun par paires lors du pliage et du levage pour enfiler et accrocher la patte de volaille (9) transportée transversalement sont installés dans la fente de guidage de l'os du genou,
- dans lequel ledit bord de maintien de référence s'étendant le long de la ligne de transport (3.1) du dispositif de positionnement (1.1) est subdivisé en deux parties de bord de maintien de référence, à savoir la première partie de bord de maintien de référence faisant partie de ladite section de transport de pliage (31.1) et y constituant le bord de positionnement fixe, ainsi qu'une seconde partie de bord de maintien de référence suivant la première constituant le bord fendu (52.1) de la fente de guidage de l'os du genou du dispositif de maintien et de guidage (5.1).

23. Un dispositif selon la revendication 22, **caractérisé en ce que** le dispositif d'entraînement et de commande (8.1) de l'élément de positionnement accompagnateur (7.1) est conçu de façon à ce que l'élément de positionnement accompagnateur (7.1.) se dégage de la patte de volaille (9) dans au moins une partie de la section de transport de traitement (32.1) du dispositif de maintien et de guidage (5.1).

24. Un dispositif selon la revendication 22 ou 23, **caractérisé en ce que** le dispositif de positionnement latéral (1.1) est muni d'éléments coulissants latéraux accompagnateurs (811) se déplaçant dans la direction de transport (F), associés aux éléments de positionnement accompagnateurs (7.1) et conçus de façon à ce que la paire respective constituée de l'élément de positionnement accompagnateur (7.1) et de l'élément coulissant accompagnateur (811) constitue une patte de pression et de support accompagnatrice, dans lequel l'élément coulissant accompagnateur (811) pénètre dans le côté latéral de la patte (950) placé en amont dans la direction de transport (F) dans la zone de la cuisse de la patte de volaille (92) se trouvant dans la plaque de poussée et l'élément de positionnement accompagnateur (7.1) effectue les mouvements de levage et de pliage croissant de la patte de volaille (9) transversalement par rapport à la direction de transport (F).

25. Un dispositif selon la revendication 24 **caractérisé en ce que** le dispositif de positionnement latéral (1.1) est conçu de façon à ce que l'élément coulissant latéral accompagnateur (811) maintienne la plaque de poussée contre ledit côté latéral de la patte (950) de volaille (9) au moins le long d'un tronçon de la fente de maintien et de guidage (51.1).

26. Un dispositif selon l'une des revendications 22 à 25, **caractérisé en ce que** l'élément de positionnement accompagnateur (7.1) est conçu sous forme d'un élément ayant l'aspect d'un bras muni de deux parties de bras, à savoir d'une première partie de bras (701) s'engageant substantiellement dans la partie avant de la patte (941) sous l'effet d'un mouvement transversal par rapport à la direction de transport (F), ainsi que d'une seconde partie de bras (702) reposant substantiellement contre la cuisse (92) du côté latéral de la patte (950) se trouvant en aval de la direction de transport (F) afin de le soutenir.

27. Un dispositif selon l'une des revendications 22 à 26, **caractérisé en ce que** le dispositif de positionnement (1.1) dispose d'un guide de positionnement d'entrée fixe (61) s'étendant dans une section d'entrée de la ligne de transport (3.1), associé à l'élément de positionnement accompagnateur (7.1), contre lequel la partie avant de la patte (941) s'appuie au niveau de la cuisse (92) et guidant la patte de volaille (9) contre l'élément de positionnement fixe (6.1) de façon transversale par rapport à la direction de transport (F) avant que l'élément de positionnement accompagnateur (7.1) ne s'appuie contre la patte de volaille (9).

28. Un dispositif selon l'une des revendications 22 à 27, **caractérisé en ce que** l'élément de positionnement fixe (6.1) est conçu avec un bord dont la section transversale est taillée en biseau (60) le long d'une partie de la section de transport de pliage (31.1) du dispositif de positionnement (1.1) se trouvant du côté de l'entrée, dont la section transversale est adaptée à une gorge se trouvant entre le pilon (91) et la cuisse (92) disponible lors de l'entrée de la patte de volaille (9) dans le dispositif de positionnement (1.1).

29. Un dispositif selon l'une des revendications 22 à 28, **caractérisé en ce que** les supports (21) sont conçus sous forme de supports rotatifs, tournant respectivement selon un axe vertical jusqu'à une position dans laquelle la rotule (94) des pattes de volaille (9) est orientée vers l'avant pour assurer la poursuite du transport.

30. Un dispositif selon l'une des revendications 22 à 29, **caractérisé en ce que** la section de transport de traitement (32.1) du dispositif de maintien et de guidage (5.1) comprend une première station fixe de découpe de face avant (561) disposant d'un moyen de découpe (551) fonctionnant au-dessus de la fente de maintien et de guidage (51.1) et pratiquant une incision d'une profondeur atteignant le cartilage sur la partie avant de la patte (941) au niveau de l'articulation du genou (93).

31. Un dispositif selon la revendication 30, **caractérisé en ce que** la première station de découpe de face avant (561) est placée dans une section de transport partielle se trouvant du côté de l'entrée du dispositif de maintien et de guidage (5.1), dans lequel l'élément de positionnement accompagnateur (7.1) se trouve dans une position de pression pour plier la patte de volaille (9).

32. Un dispositif selon la revendication 30 ou 31, **caractérisé en ce que** la section de transport de traitement (32.1) du dispositif de maintien et de guidage (5.1) comprend une seconde station fixe de découpe de face avant (562) disposant d'un moyen de découpe (552) fonctionnant sous la fente de maintien et de guidage (51.1) et pratiquant une incision d'une profondeur atteignant l'os de la cuisse (921) sur la partie avant de la patte (941) juste en dessous de l'articulation du genou (93).

33. Un dispositif selon l'une des revendications 30 à 32, **caractérisé en ce que** la section de transport de traitement (32.1) du dispositif de maintien et de guidage (5.1) comprend une station fixe de découpe de face arrière (563) disposant d'un moyen de découpe (553) fonctionnant au-dessus de la fente de maintien et de guidage (51.1) et pratiquant une incision d'une profondeur atteignant l'os de l'articulation du genou sur la partie arrière de la patte (942) au niveau de l'articulation du genou (93).

34. Un dispositif selon la revendication 33, **caractérisé en ce que** la station de découpe de face arrière (563) est placée dans une section de transport se trouvant du côté de la sortie du dispositif de maintien et de guidage (5.1), dans lequel l'élément de positionnement accompagnateur (7.1) n'est pas engagé dans la patte de volaille (9) afin de supprimer la position de pliage de la patte de volaille (9).

35. Un dispositif de positionnement, **caractérisé en ce qu'**un premier dispositif de positionnement, constitué d'un dispositif de positionnement formant un dispositif de positionnement latéral (1.1) selon l'une des revendications 22 à 34 est placé le long d'une ligne de transport (30), ainsi qu'un second dispositif de positionnement se trouvant à sa suite est constitué d'un dispositif de positionnement formant un dispositif de positionnement axial (1.2) selon l'une des revendications 9 à 21, et **en ce qu'**une station de pivotement (15) est placée entre le premier dispositif de positionnement (1.1) et le second dispositif de positionnement (1.2), dans lequel la station de pivotement (15) est munie de supports rotatifs constituant les supports (21) transportant les pattes de volailles (9) le long des lignes de transport (3.1, 3.2) des deux dispositifs de positionnement (1.1, 1.2), dans lequel les supports (21) peuvent être pivotés de la position de transport latéral à la position de transport axial.

36. Un procédé de séparation de la chair de la cuisse durant le transport des pattes de volailles (9) transportées en ligne dans la direction de transport (F), dont le pilon (91) et la cuisse (92) sont articulés respectivement autour de l'articulation du genou (93) et se trouvant en position pendue par l'intermédiaire de têtes d'articulation de la cheville (911) s'insérant dans un dispositif de support, dans lequel la patte de volaille (9) est positionnée sous l'effet d'opérations de levage et de maintien de l'articulation du genou (93), des incisions sont pratiquées dans la chair de la patte de volaille sur une profondeur atteignant l'os au niveau du genou de la patte de volaille (9) et la chair de la cuisse est repoussée de l'articulation du genou (93) positionnée de façon définie jusqu'à l'articulation de la hanche (923), **caractérisé en ce que**,
- les pattes de volailles (9) sont transportées dans une direction de transport (F) rectiligne durant l'ensemble des manipulations automatiques de positionnement et de traitement, dans lequel les pattes de volailles (9) sont transportées à l'aide de supports (21) pouvant se déplacer le long d'une ligne de transport rectiligne, maintenant les pattes de volailles (9) par l'intermédiaire de leurs têtes d'articulation de la cheville (911) correspondant respectivement à un support (21) durant la totalité du transport,
- les pattes de volailles (9) disposant respectivement de lignes de transport rectilignes sont transportées dans deux sections de transport, à savoir dans une première section de transport (301) dans laquelle les pattes de volailles (9) sont transportées transversalement en orientant le côté latéral de la patte (950) vers l'avant, ainsi que, après rotation de chaque support (21) autour d'un axe vertical, dans une deuxième section de transport (303) dans laquelle les pattes de volailles (9) sont transportées axialement en orientant vers l'avant le côté axial de la patte (940) sur lequel se trouve la rotule (94), à savoir sur un plan axial (90) commun aux axes des os de la cuisse (921) et des os du pilon (924), en orientant la rotule (94) vers l'avant,
- les pattes de volailles (9) transportées transversalement sont insérées dans la première section de transport (301) dans une première fente de maintien et de guidage (51.1) fixe s'étendant de façon rectiligne dans la direction de transport (F) disposant de premiers bords fendus fixes (52.1, 53.1), dans lequel la patte de volaille (9) transportée transversalement est suspendue dans la première fente de maintien et de guidage (51.1) fixe au niveau d'un emplacement spécifique de l'élévation de l'os de l'articulation du genou et par l'intermédiaire de ce dernier, est soulevée dans une position de référence définie le long d'une première ligne de transport à fente de la première fente de maintien et de guidage (51.1) afin d'en assurer le traitement et est déplacée de façon coulissante au niveau de l'articulation du genou (93) sur les bords fendus (52.1, 53.1) dans la direction de transport (F), dans lequel la tête de l'articulation de la cheville (911) est maintenue librement dans le support (21) la maintenant pour soulever la patte de volaille (9),
- une incision de côté avant de la patte d'une profondeur atteignant le cartilage est pratiquée sur la partie avant de la patte (941) au niveau de l'articulation du genou (93) et une incision de partie arrière de la patte (942) d'une profondeur atteignant l'os de l'articulation du genou est pratiquée sur l'arrière de la patte (942) au niveau de l'articulation du genou (93), sur la première ligne de transport à fente de la première fente de maintien et de guidage (51.1),
- les pattes de volailles (9) transportées axialement sont insérées dans la seconde section de transport (303) dans une seconde fente de maintien et de guidage (51.2) fixe s'étendant de façon rectiligne dans la direction de transport (F) disposant de seconds bords fendus fixes (52.2, 53.2), dans lequel la patte de volaille (9) transportée axialement est suspendue dans la seconde fente de maintien et de guidage (51.2) fixe au niveau d'un emplacement spécifique de l'élévation de l'os de l'articulation du genou et par l'intermédiaire de ce dernier, est soulevée dans une position de référence définie le long d'une seconde ligne de transport à fente de la seconde fente de maintien et de guidage (51.2) afin d'en assurer le traitement et est déplacée de façon coulissante au niveau de l'articulation du genou (93) sur les bords fendus (52.2, 53.2) dans la direction de transport (F), dans lequel la tête de l'articulation de la cheville (911) est maintenue librement dans le support (21) la maintenant pour soulever la patte de volaille (9), et
- une paire de premières incisions latérales d'une profondeur atteignant le cartilage osseux est pratiquée sur les côtés latéraux de la patte (950) de volaille (9) au niveau de l'articulation du genou (93) puis une paire de secondes incisions d'une profondeur atteignant l'os de la cuisse (921) est pratiquée sur les côtés latéraux de la patte (950) de volaille (9) sous l'articulation du genou (93) sur la seconde ligne de transport à fente de la seconde fente de maintien et de guidage (51.2), et la chair de la cuisse (922) est repoussée sur l'articulation de la hanche (923) à l'extrémité proximale de l'os de la cuisse (921).

37. Un procédé selon la revendication 36, **caractérisé en ce qu'**au moins l'une desdites paires est pratiquée de façon décalée face à la ligne de transport à fente et le long de cette dernière sur les secondes incisions latérales de ligne de transport à fente correspondant à la seconde fente de maintien et de guidage (51.2).

38. Un procédé selon la revendication 36 ou 37, **caractérisé en ce que** les secondes incisions latérales sont pratiquées sous l'articulation du genou (93) jusqu'à la zone se trouvant sur la partie avant de la patte (941) sur la seconde ligne de transport à fente.

39. Un procédé selon la revendication 36 ou 37, **caractérisé en ce qu'**une seconde incision de face avant d'une profondeur atteignant l'os de la cuisse est pratiquée juste sous l'articulation du genou (93) sur la première ligne de transport à fente, dans lequel les secondes incisions latérales pratiquées sur la seconde ligne de transport à fente se trouvent à la même hauteur de la patte de volaille (9) que la seconde incision de face avant réalisée sur la première ligne de transport à fente.

40. Un procédé selon l'une des revendications 36 à 39, **caractérisé en ce que** la chair de la cuisse repoussée sur l'articulation de la hanche (923) est séparée au niveau de la seconde section de transport (303).

41. Un procédé selon l'une des revendications 36 à 40, **caractérisé en ce que** la patte de volaille (9) est tranchée à l'extrémité de la seconde section de transport (303), afin de séparer le pilon (91) de la cuisse (92) écharnée.

42. Un procédé selon l'une des revendications 36 à 41, **caractérisé en ce que** chaque patte de volaille (9) transportée axialement dans la seconde section de transport (303) est pliée et levée dans la direction de transport (F) le long d'une seconde section de transport de pliage (31.2) se trouvant en amont de la seconde fente de maintien et de guidage (51.2) fixe afin de suspendre la patte de volaille (9) dans la seconde fente de maintien et de guidage (51.2) fixe, dans lequel les positions de pliage sont déterminées par un angle de pliage (931) correspondant à l'angle du jarret entre la cuisse et le pilon, s'amenuisant durant le levage.

43. Un procédé selon la revendication 42, dans lequel il est fait usage d'un dispositif de positionnement (1.2) selon les revendications 9 à 21 pour exécuter le procédé dans la seconde section de transport (303) pour réaliser le transport, le positionnement et le traitement ainsi préparé.

44. Un procédé selon l'une des revendications 36 à 43, **caractérisé en ce que** chaque patte de volaille (9) transportée transversalement dans la première section de transport (301) est pliée et levée transversalement à la direction de transport (F) le long d'une première section de transport de pliage (31.1) se trouvant en amont de la première fente de maintien et de guidage (51.1) fixe afin d'être suspendue dans la première fente de maintien et de guidage (51.1) fixe, dans lequel les positions de pliage sont déterminées par un angle de pliage (931) correspondant à un angle de jarret entre la cuisse (92) et le pilon (91), s'amenuisant durant le levage.

45. Un procédé selon la revendication 44, dans lequel il est fait usage d'un dispositif de positionnement (1.1) selon les revendications 22 à 34 pour exécuter le procédé dans la première section de transport (301) pour réaliser le transport, le positionnement et le traitement ainsi préparé.

46. Un procédé selon l'une des revendications 36 à 45, **caractérisé en ce qu'**un traitement est réalisé sur la patte de volaille (9) suspendue dans la fente de maintien et de guidage (51.1, 51.2) correspondante et n'ayant pour l'essentiel pas été pliée, en au moins une section d'une dite fente de maintien et de guidage (51.1, 51.2).
